# DEMANDE DE BREVET EUROPEEN

(11) **EP 1 936 788 A1**
(43) Date de publication de la demande: **25.06.2008**
(21) Numéro de dépôt: 06077221.7
(22) Date de dépôt: 18.12.2006
(51) Int. Cl.: H02K 53/00

(54) **Moteur à aimants permanents**

(71) Demandeur: Strzyzewski, Patrick, 62630 Etaples sur Mer (FR)
(72) Inventeur: Strzyzewski, Patrick, 62630 Etaples sur Mer (FR)

(57) **Abrégé**

Procédé de moteur temporel à variation de vitesse dont la particularité principal est portée sur le dispositif dynamique au niveau des pistons (rep 1 et 3 fig A n°1 à 4) qui entraine le villebrequin en sortie moteur, transformant les mouvements transversaux en rotatifs. Plusieurs aimants sont disposés de part et d'autre de la chemise, de la culasse et des pistons, dont les aimants à flux magnétiques propulseurs opposés (rep 4,7,10 et 8 fig A n°1 à 4) agissent sur leurs vis à vis aimants (rep 101,12,6 et 9 fig A n°1 à 4) de manière à rendre fonctionnel et dynamique le système suivant les positions des aimants par rapport aux phases de travail du moteur, aux fins de générer les forces résultantes et composantes des flux magnétiques propulseurs opposés suivant les pôles des aimants qui se repoussent entre eux.

## Description

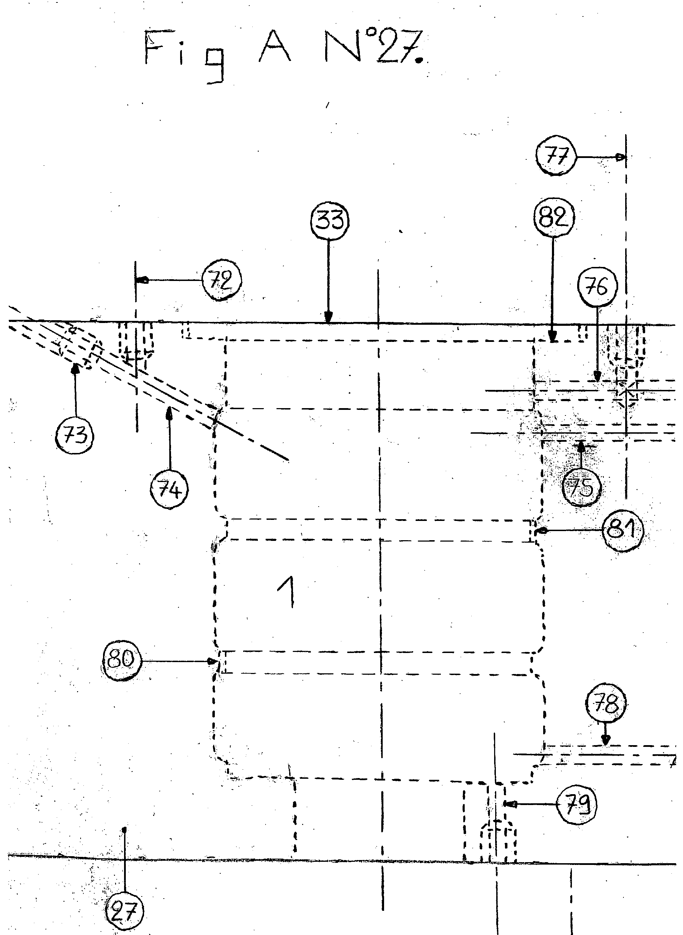

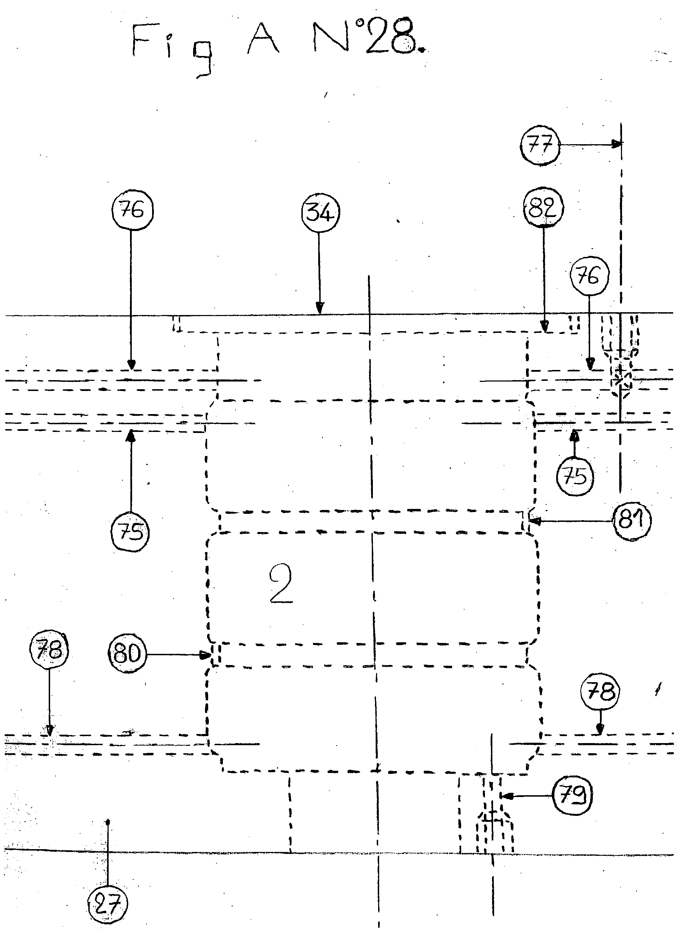

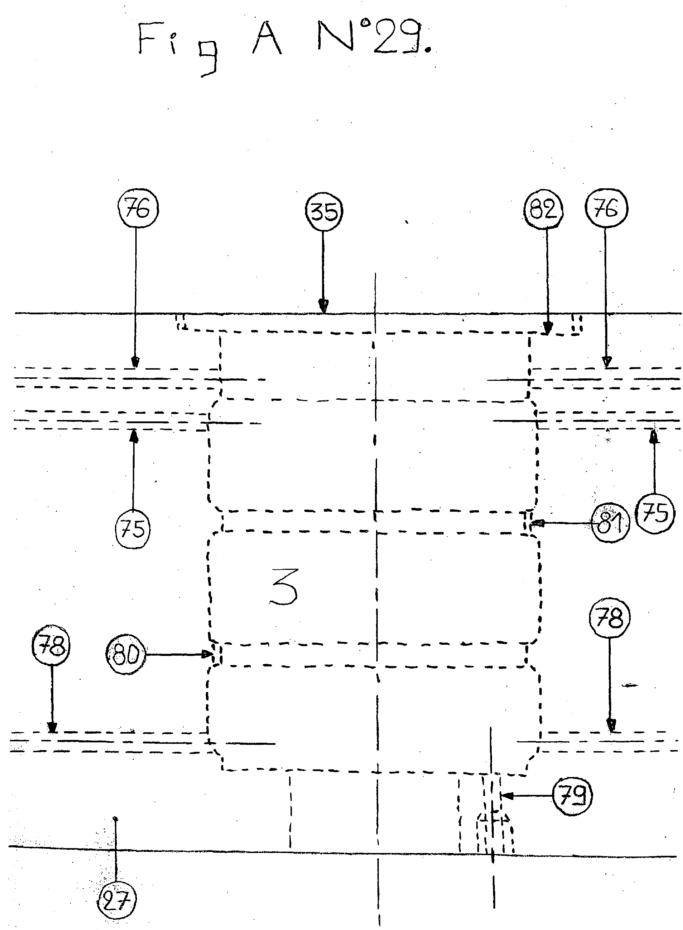

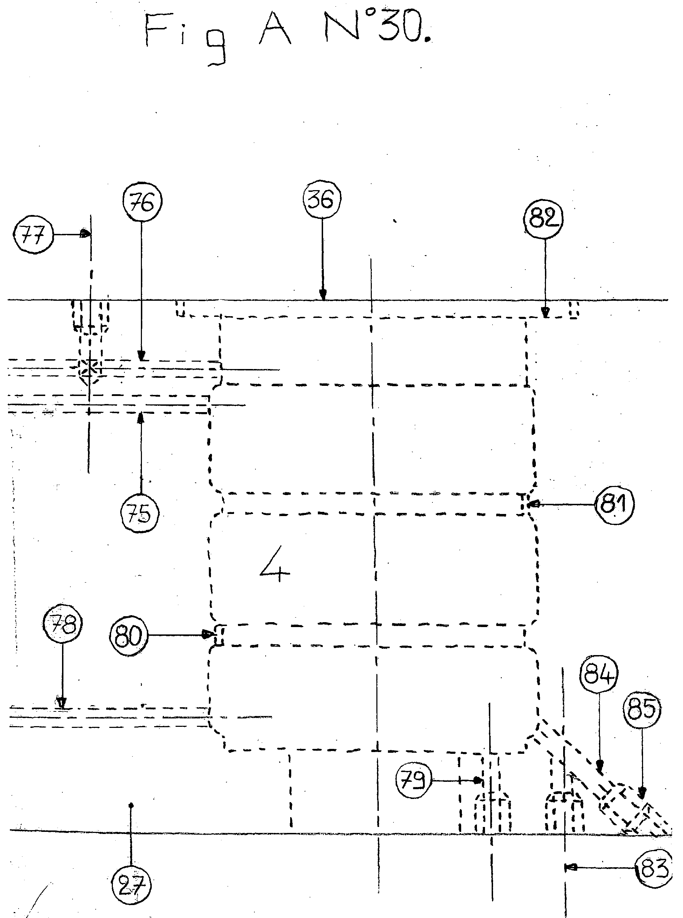

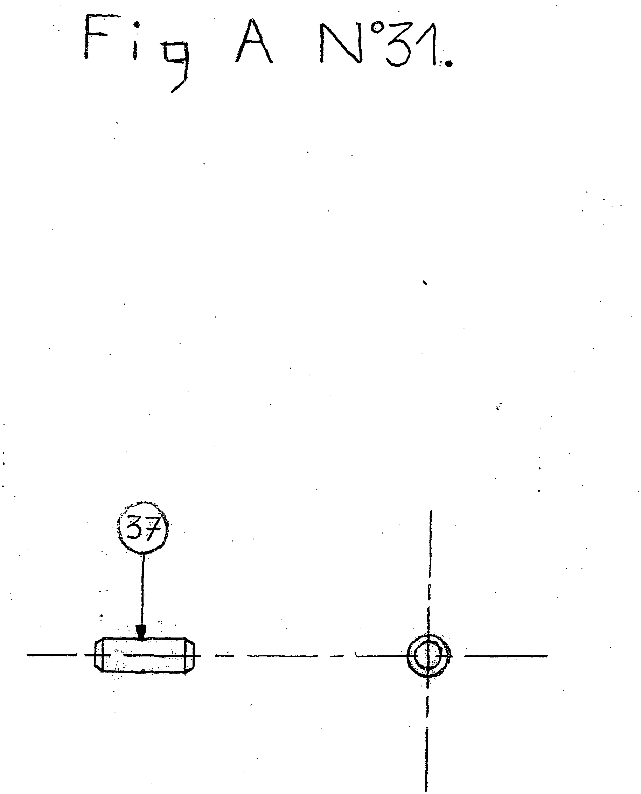

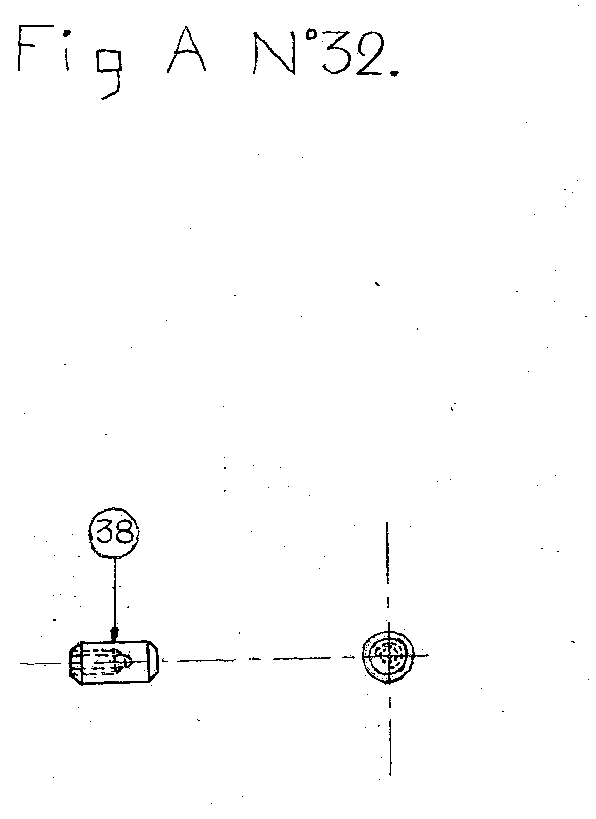

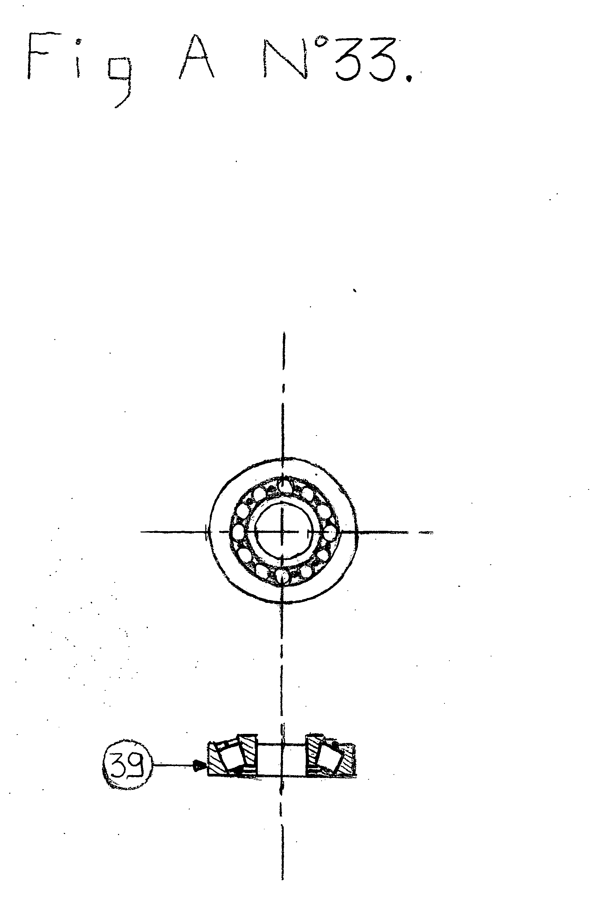

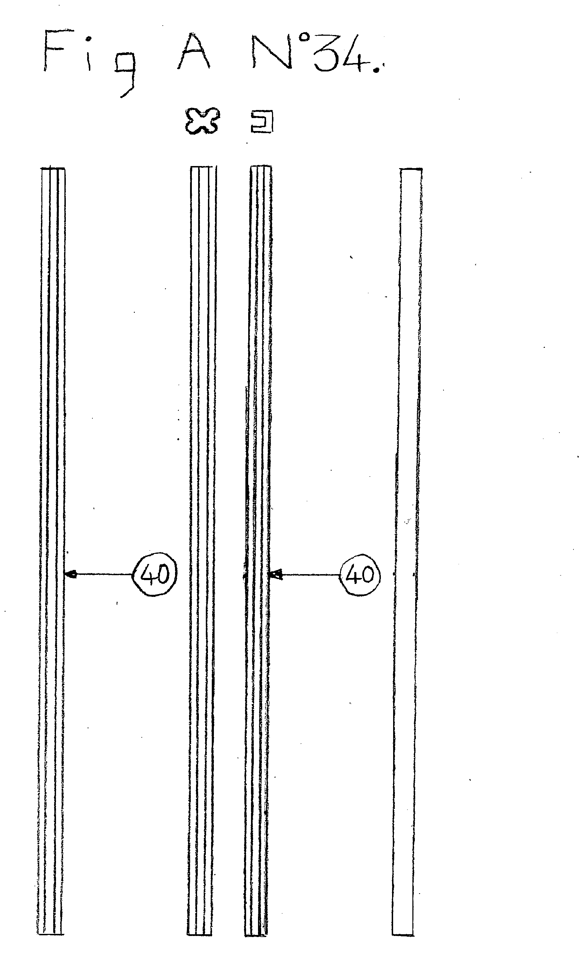

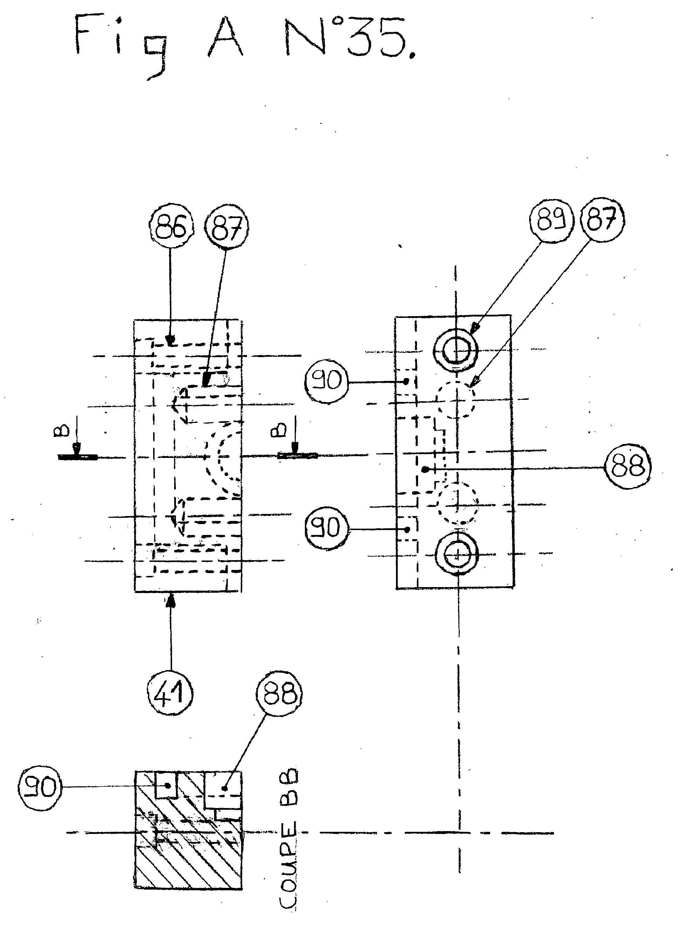

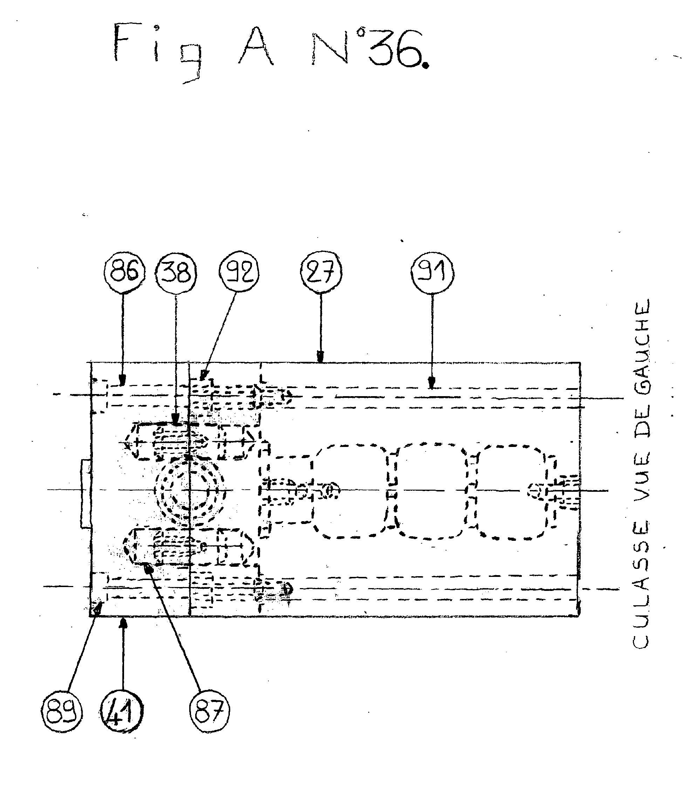

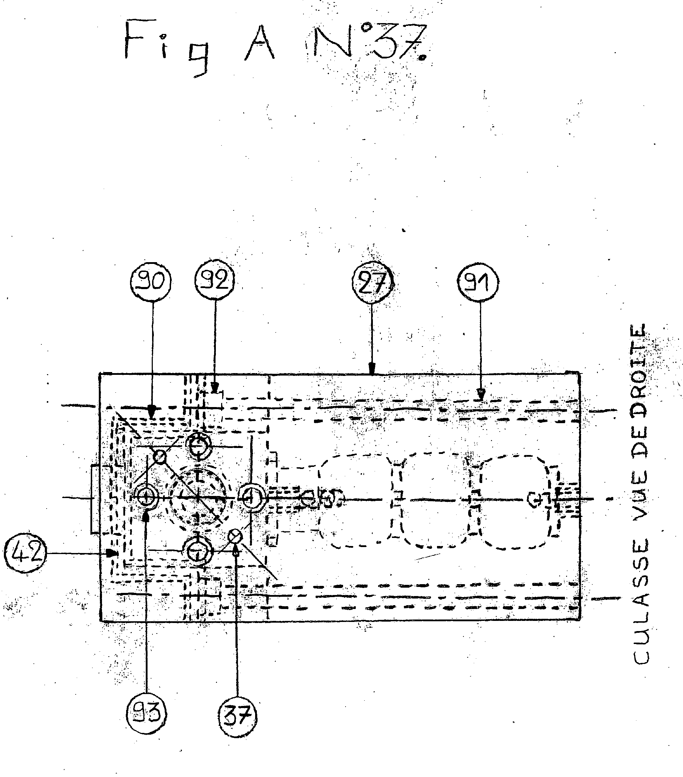

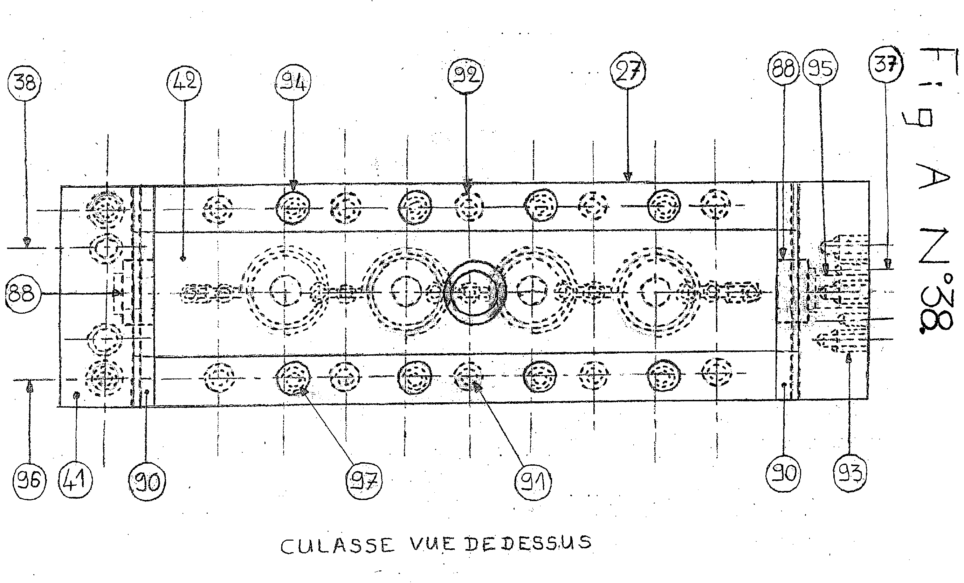

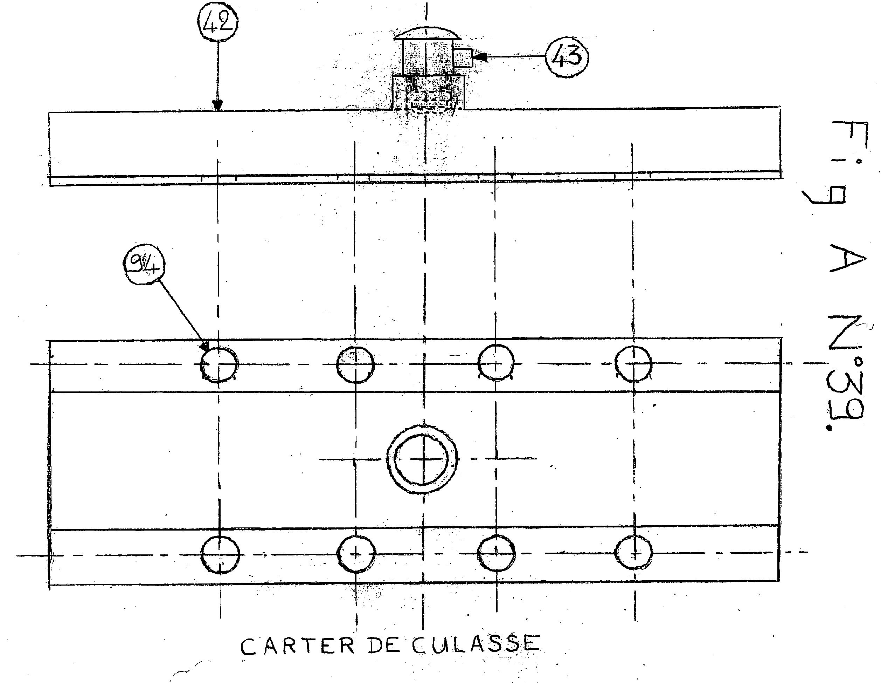

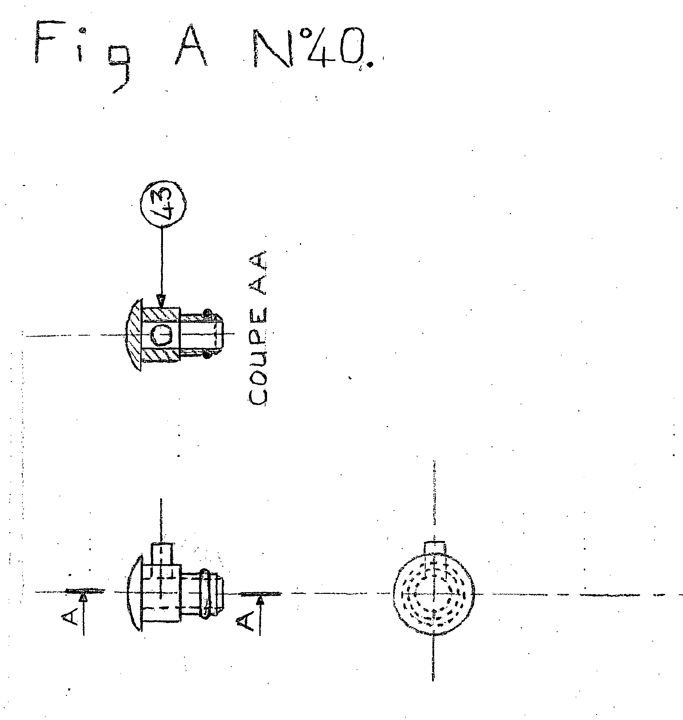

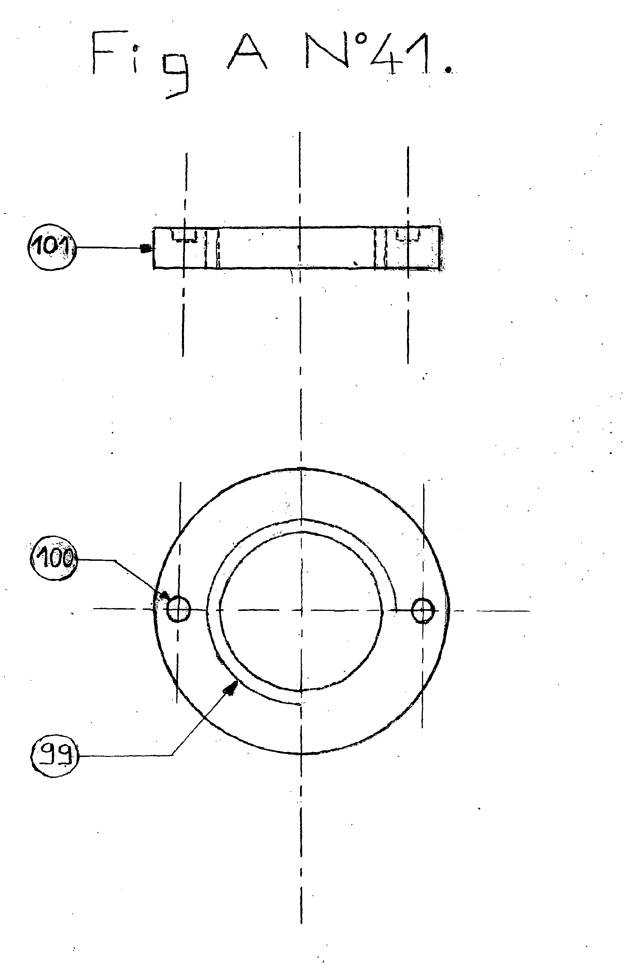

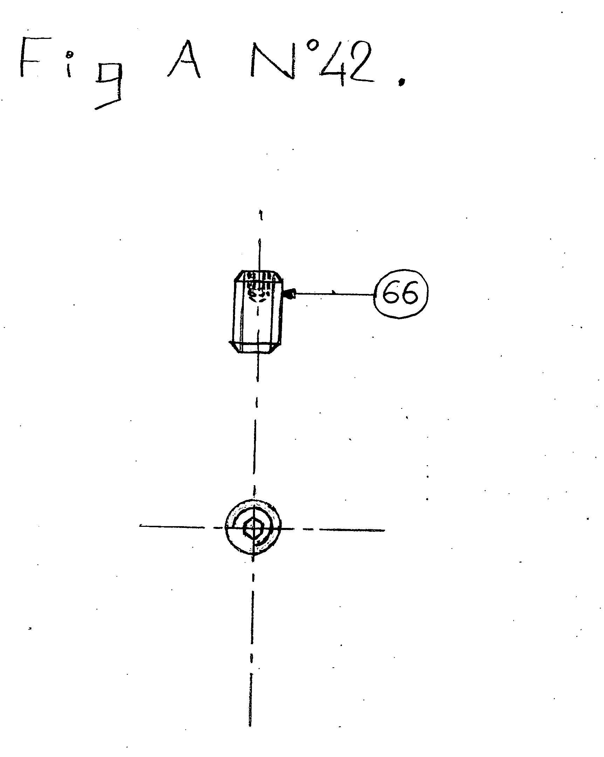

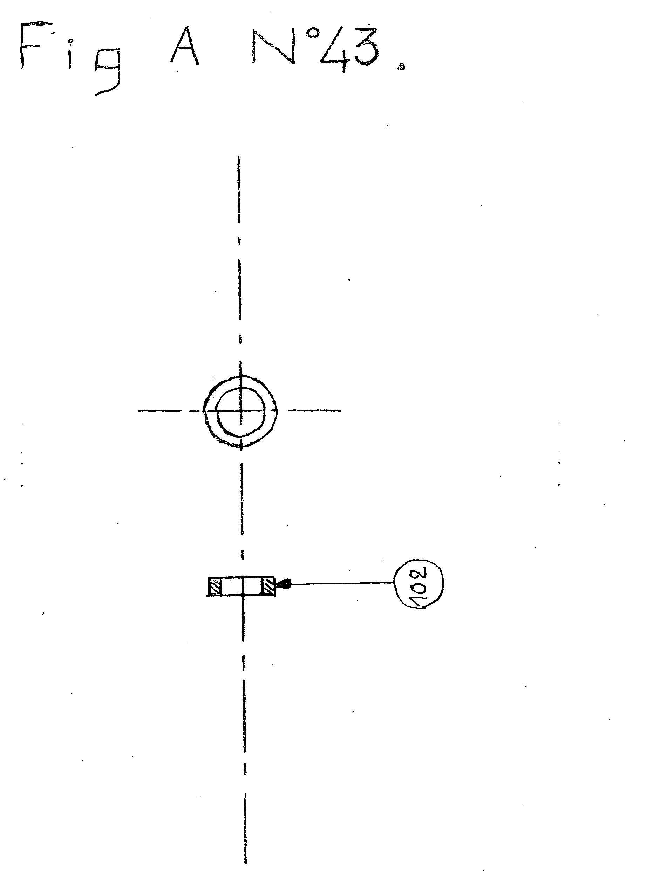

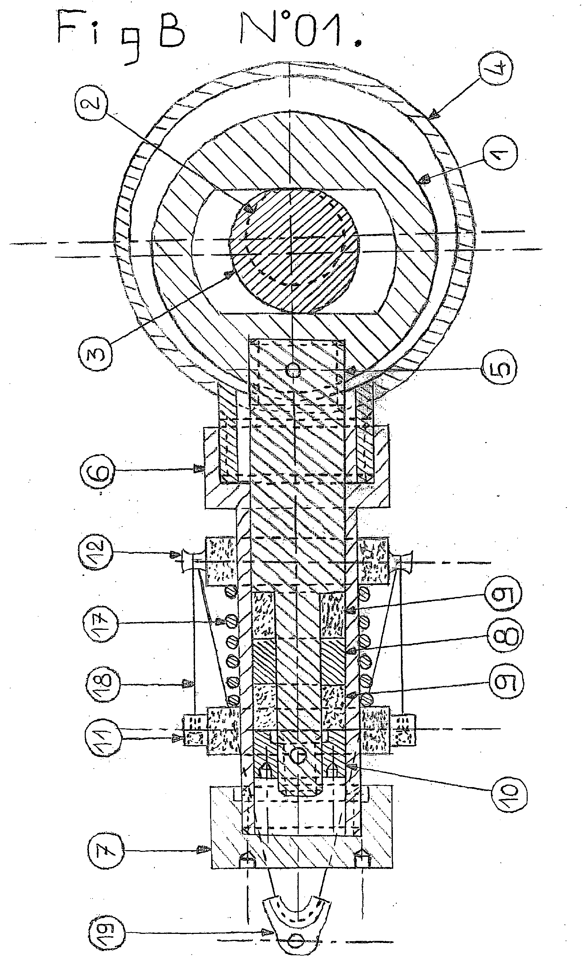

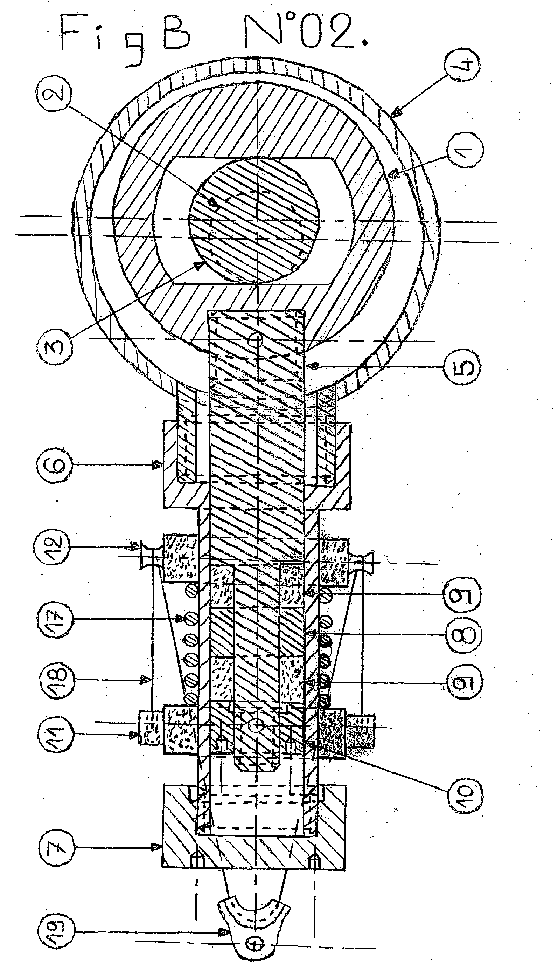

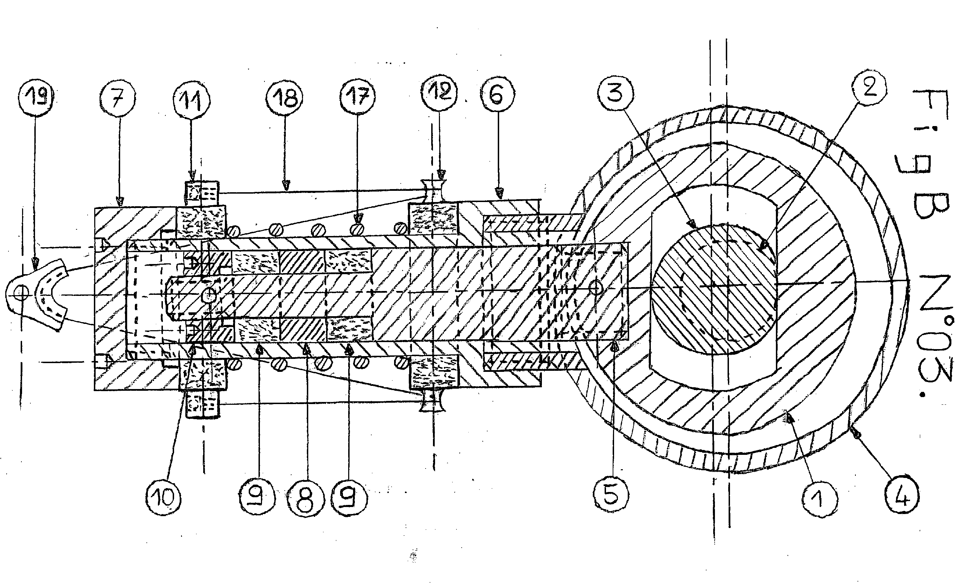

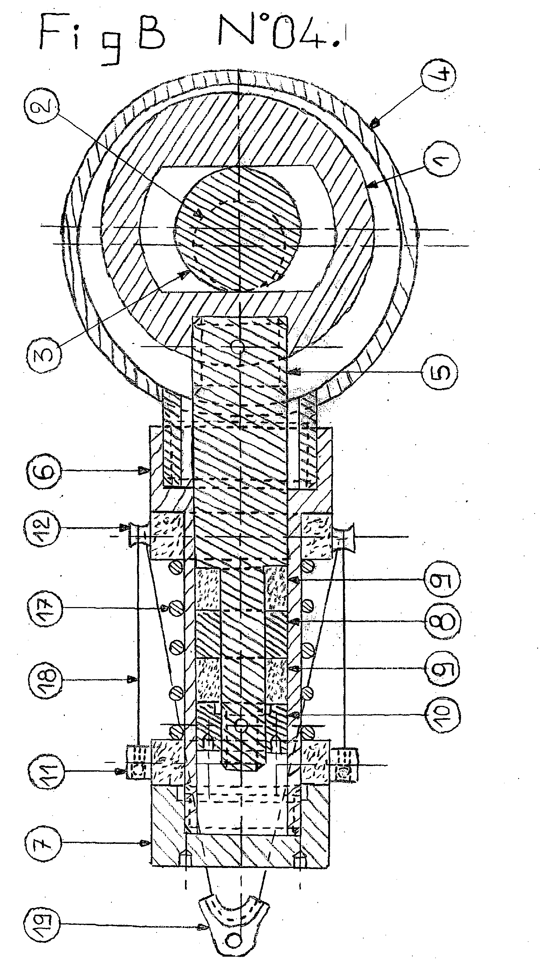

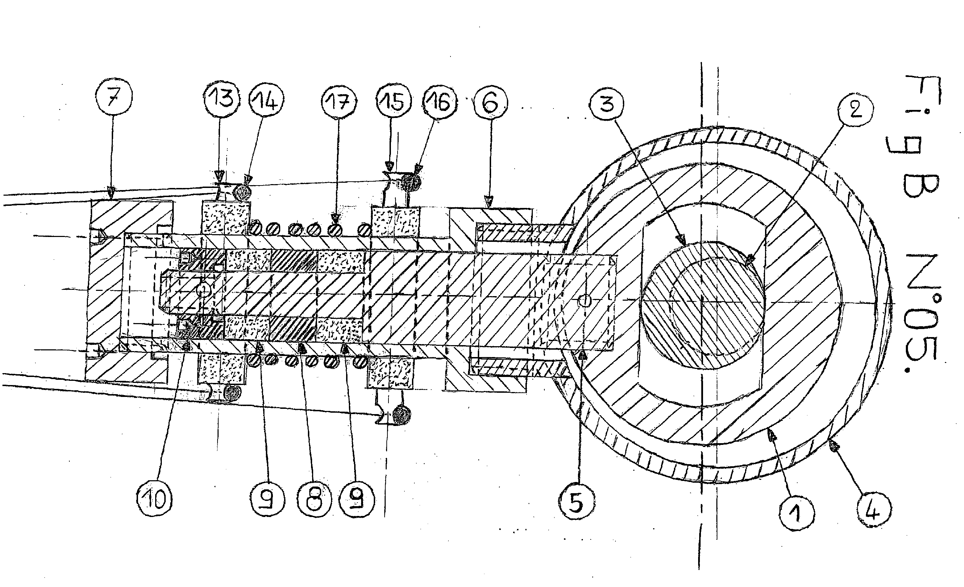

L'invention porte fig A sur un moteur à variation de vitesse, doté d'un villebrequin, de bielles, de pistons, d'une culasse, d'un arbres à cames, d'un moteur hydraulique ou électrique rotatif pas à pas qui transformeront les mouvements rotatifs en mouvements transversaux pour donner en sortie de villebrequin un mouvement rotatif ralenti, accéléré ou décéléré suivant les positions données dans l'espace temps aux points mort haut et bas (PMH et PMB) des pistons qui peuvent travailler en ligne, en vé ou même en étoile pour permettre un équilibrage du moteur sur les positions des pistons et des bielles au tour des paliers du villebrequin en position mort haut et bas (PMH et PMB) pendant le fonctionnement et dans un espace temps donné. Une pompe à vide pouvant tourner indépendament ou être entrainée par le moteur permettra de charger des accus de vide qui sont positionnés dans l'habitacle du véhicule de maniére à ne pas encombrer et manger des espaces. Ce système et procédé remplacera le turbo compresseur et permettra d'apporter au moteur à un temps et une position donnés en point mort haut ou bas accéléré(PMHA ou PMBA) une energie et propulsion supplémentaire au mouvement rotatif du moteur, donc une puissance plus importante. L'énergie est le principe de base de moteur et il sera fourni aussi par des flux magnétiques propulseurs appelés aimants, répartis et synchronisés de maniére à donner un mouvement alternatif ralenti , accéléré ou décéléré de chaque piston à un espace temps donné. La régulation automatique des distances entre les flux magnétiques propulseurs est étudiée et définie par le principe de fonctionnement qui est conçu ici par deux pistons plongeurs coulissant l'un dans l'autre en mouvements alternatifs transversaux opposés, mouvement donné pour l'un par l'arbre à cames et la position de ces cames , définie par les moteurs hydraulique ou électrique rotatif pas à pas et du conducteur du véhicule et de l'autre piston dont le mouvement est donné par la résultante et les composantes des forces des flux magnétiques propulseurs qui en découlent et permettent la rotation du villebrequin, dont les aimants à flux magnétiques propulseurs opposés ( rep4,7,8 et 10 de la fig A n°1,2,3 et 4) agissent sur leurs vis à vis aimants ( rep101,6,9 et 12 de la fig A n°1,2,3 et 4) de maniére à rendre fonctionnel et dynamique le systéme, en respectant judicieusement toutes les positions des aimants par rapport aux phases de travail du moteur, aux fins de générer les forces résultantes et composantes des flux magnétiques propulseurs opposés suivant les pôles des aimants qui se repoussent entre eux. Il est bien entendu que les réglages seront réalisés de maniére que les aimants se chevauchent seulement sur les ¾ de leurs vis à vis aimant à pôles opposés, de maniére à provoquer la propulsion dans le sens ou le mouvement est attendu pour assurer le mouvement en translation qui va se transformer en rotatif. Ce chevauchement varie continuellement passant d'un état minimun à maximun, ce qui fait varier les forces engendrées par les aimants sur la vitesse du moteur. Ce procédé de deux pistons plongeurs coulissant l'un dans l'autre, dans une chemise, donne la possibilité et l'avantage d'utiliser une course plus importante des pistons, répercutée sur les bielles et le villebrequin, qui bénéficient de deux types de propulsion en point mort haut et bas (PMH et PMB), ce qui permet par cette longue cource et ces propulsions, que dans un tour de villebrequin, la propulsion en point mort bas (PMB) agit sur les bielles quand celles ci ont dépassé ce point mort bas (PMB) après la moitié d'un tour de villebrequin donc quand les bielles et les pistons remontent, donc phase de travail point mort bas (PMB) et il en est de même quand les bielles arrivent en point mort haut (PMH) la propulsion agit quand les bielles ont dépassé la moitié d'un tour de villebrequin au moment ou les bielles et les pistons commencent à descendre, donc phase de travail point mort haut (PMH), cela fait l'objet de calculs et d'études judicieux en fonction de la cylindré, de la puissance et de la conception de chaque moteur. La conception technique de la fig n°27 dans la conception de la culasse décrit dans cette application sera utile et reprise dans le concept technique du moteur en vé ou en étoile, ou la conception de cette culasse sera reconduite à l'identique et jumelée en vé avec deux culasses identiques et de même type, moulées brutes de fonderie ensemble, seul le nombre de pistons varira suivant la conception du villebrequin, en conjuguant en alternance les mouvements des pistons en point mort haut ou bas (PMH ou PMB), cela dit, que l'on n'aura l'ensemble des pistons d'une culasse qui seront en point mort haut (PMH) quand les pistons de l'autre culasse seront en point mort bas (PMB) de manière à obtenir un équilibre du moteur. Par la même on obtient et réalise un montage de moteur dit en étoile de type en x, cela dit pour obtenir deux montages de deux culasses en vé , montées en opposition, soit quatre culasses reconduites à l'identique aussi bien techniquement que dans la conception, donc avec quatre culasses identiques moulées brutes de fonderie ensemble d'un seul bloc , seul le nombre de pistons varira suivant la conception du villebrequin central, en conjuguant les mouvements des pistons en point mort haut ou bas (PMH ouPMB) travaillant en alternance l'un par rapport à l'autre, cela dit que l'on aura un ensemble de pistons qui seront au point mort haut (PMH) sur la premiére culasse quand son vis à vis opposé qui est la culasse n°3 aura l'ensemble de ces pistons en point mort bas (PMB), ensuite quand l'ensemble des pistons seront au point mort haut (PMH) sur la deuxiéme culasse n°2 son vis à vis opposé qui est la culasse n°3 aura l'ensemble de ces pistons en point mort bas (PMB), ensuite quand l'ensemble des pistons de la culasse n°3 seront au point mort haut (PMH), son vis à vis opposé qui est la culasse n°1 aura l'ensemble de ces pistons en point mort bas (PMB), pour conclure un tour de villebrequin l'ensemble des pistons de la culasse n°4 seront au point mort haut (PMH), quand son vis à vis opposé qui est la culasse n°2 aura l'ensemble de ces pistons en point mort bas (PMB). Ce cycle se répétera suivant chaque tour de villebrequin de la même maniére et en continu ou seul la vitesse de rotation variera suivant le ralenti, l'accéléré et le super accéléré ou aussi en associant l'accéléré et le super accéléré, c'est à dire l'énergie qui est le vide et les flux magnétiques propulseurs opposés fonctionnant ensemble et en continu suivant le principe du ralenti, de l'accéléré et du décéléré. L'énergie thermique que produisent tous les éléments mécanique du moteur par frottement et rotation sont récupérés par un circuit de refroidissement, pour alimenter une unité de chauffage centrale et une production d'eau chaude sanitaire dans tous les domaines.On se rend compte du potentiel énorme du vide dans le fonctionnement d'un moteur sans combustible, en association avec l'énergie des flux magnétiques propulseurs qui peuvent se cumuler avec d'autres énergies comme l'air avec le compresseur et l'eau, l'huile avec les pompes.Ce procédé par la résultante et les composantes des forces des flux magnétiques propulseurs est utilisé dans le domaine des cycles à deux roues ou l'on transforme de la même maniére un mouvement transversal en mouvement rotatif par rapport à un axe de pédalier et son excentrique qui transforme ce mouvement par l'intermédiaire d'un appareil mécanique à flux magnétiques propulseurs définis dans les fig B de 1 à 24 identique à l'application du moteur temporel à variation de vitesse.

L'on connait déjà différents types de moteur, les agencements du type cité qui découlent par exemple, des documents fig A n° 1 à 4 ou encore des fig B n° 1 à 8 représentant les fonctionnements d'ensemble des systèmes d'application décrits, ils permettent de transformer et transmettre un mouvement transversal à des pistons pour obtenir en sortie un mouvement rotatif d'un villebrequin, souhaitable dans de nombreuses applications pour permettre d'entrainer en rotation, n'importe quel appareil ou machine qui demande à tourner pour fournir un travail, mais qui ne peut pas le faire seul. Ce procédé de moteur fonctionne sans combustible, il fourni sa propre énergie complémentaire par une pompe à vide , la capacité et la puissance de cette énergie stockée par cette pompe est utilisé comme un turbo compresseur pour obtenir une puissance complémentaire à un temps donné du fonctionnement et de la position du piston en point mort haut et bas (PMH et PMB). L'énergie de base permettant de faire tourner la machine est donné par la résultante et les composantes des forces des flux magnétiques propulseurs? utilisés et placés judicieusements et avec précision pour obtenir une rotation équilibré du moteur, une rotation au ralenti, en accéléré ou en décélération.

L'inconvénient mais aussi l'avantage de ces flux magnétiques propulseurs , c'est que l'interchangeabilité de ces éléments pourra se faire sans probléme au moment voulu soit sur le moteur même du véhicule ou réaliser un échange standard, l'avantage de ce procédé et type de moteur, est de tourner sans combustible, ne pas être polluant, écologique, silencieux et de conjuguer puissance et autonomie. L'avantage n'on négligeable aussi de ce type de moteur est de pouvoir récupérer l'énergie thermique que tous les éléments mécaniques produisent par frottement et rotation, l'élaboration du circuit de refroidissement tel que réalisé dans le système par la circulation d'une huile glycolé avec un % d'eau ou une huile très fluide récupérera les calories thermiques que l'on utilisera pour alimenter et chauffer une unité de chauffage central et une production d'eau chaude sanitaire. L'unique inconvénient mais relative, c'est que toute cette technique demande l'élaboration d'un moteur avec des structures d'études et des investissements importants ou en place comme les réseaux actuels de l'automobile, mais pas impossible, tout à un coût, mais la conception , la technique, les besoins et les résultats attendus et restitués de ce principe d'énergie dans la situation et le contexte actuel de la planéte terre vaut la peine d'être exploité et commercialisé dans tous ces domaines.

Les fig B n°1 à 8 permettent de définir un type d'utilisation de ce procédé dans le domaine des cycles à deux roues ou l'on transforme aussi un mouvement transversal en rotatif par rapport à l'axe de pédalier et de son excentrique qui transforme ce mouvement. La résultante et les composantes des forces des flux magnétiques propulseurs sont placés et utilisés de la même maniére, judicieusements et et avec précisions pour permettre au cyclotouriste de faire varier sa vitesse en modifiant et en faisant varier la position des flux magnétiques propulseurs par l'intermédiaire d'un levier de vitesse et d'un cable acier. L'avantage de son utilité et de permettre à certaine personne ayant des difficultés physiques de pouvoir tirer profit de ce sport touristique en contact avec la nature. L'inconvénient majeur est d'être un peu plus encombrant dans la conception du cycle à deux roues, mais aussi d'augmenter son coût, mais le potentiel d'utilisation de ces différentes applications, peut être adopté aussi au cycle à moteur, pour lutter contre la pollution,le bruit et économiser le pétrole.

Le probléme que la présente invention se propose de résoudre, réside dans la conception d'un moteur fonctionnant sans combustible avec une énergie propre, une autonomie et une puissance qui peut rivaliser avec le moteur thermique essence, diesel ou gaz, mais dans d'autres domaines comme les éoliennes pour fournir de l'électricité, le chauffage pour les habitations et l'industrie des trains, des autocars et des tramways de la nouvelle génération, cela réside dans l'amélioration des énergies renouvelables et écologiques de manière à contribuer à la protection de la terre en installant de manière simple et sur un espace réduit avec des investissements bien fondés et peu couteux, le dispositif de moteur temporel à variation de vitesse associé aux machines qu'il entrainera pour fournir de l'énergie sous différentes formes pour éviter les inconvénients évoqués des agencements connus du moteur thermique conventionnel sur la pollution et le réchauffement climatique. Il résoud et améliore aussi les conditions de déplacement en cycle à deux roues des personnes ayant un handicap physique ou du à une maladie. Il permet donc d'économiser les matiéres premiéres, comme le pétrole, le gaz et de diminuer à long terme l'utilisation du nucléaire et de rendre autonome chaque habitation dans ces besoins d'électricité, de chauffage et de production d'eau chaude sanitaire. Il se propose donc de résoudre de nombreux problèmes dans différents secteurs d'activité.

Dans l'invention, la solution de ce probléme consiste, pour un moteur temporel à variation de vitesse, conjuguant puissance et autonomie, pour un moteur de type cité, à prévoir deux pistons disposés en opposés pour transformer un mouvement rotatif en sortie de villebrequin sensiblement égal sans trop de pertes de rendement. On peut équiper ce moteur d'un nombre d'ensemble de pistons indéterminé en ligne, en vé ou en étoile suivant les encombrements et les espaces déterminés par le type de moteur. Cela consiste aussi à prévoir un circuit de refroidissement pouvant être utilisé en chauffage et en production d'eau chaude externe ou en circuit de lubrification interne du moteur. Ainsi que deux énergies, propres au fonctionnement du moteur, voir un circuit utilisant le vide stocké par une pompe à vide dans des accus et la résultante et les composantes des forces des flux magnétiques propulseurs fournies par des aimants, qui sont utilisés pour permettre son fonctionnement. D'ou un arbre à cames avec des cames excentrées en lignes qui agissent sur un piston par l'intermédiaire d'un moteur hydraulique ou électrique rotatif pas à pas, commandé et programmé par l'utilisateur. Ce même piston est doté d'un aimant à flux magnétiques propulseurs opposés ayant une action axiale et d'un ensemble d'aimants à flux magnétiques propulseurs opposés ayant une action radiale, bien définie dans un espace temps donné, il est doté de deux segments extérieurs et d'un segment intérieur pour assurer l'étanchéité et le guidage entre les différents éléments du concept mécanique. Un perçage sur ce même piston assurera la liaison avec le circuit de vide qu'assure la pompe à vide, deux aimants l'un positionné sur la chemise et l'autre sur ce piston permettront de repousser continuellement ce piston en contact avec la came excentrique de l'arbre à cames. Un perçage dans la chemise de la cavité supérieure de la culasse et de la chemise qui assure le refroidissement, permettra d'assurer la lubrification des segments qui ne peuvent pas l'être. Le piston en liaison avec la bielle du villebrequin sera doté d'un ensemble d'éléments permettant de monter des ensembles d'aimants, l'un à flux magnétiques propulseurs opposés ayant une action axiale sur l'autre piston, il sera calibré par un perçage en son centre pour permettre le phénoméne de sussion sous l'effet du vide à une position et un temps donné en point mort haut et d'un ensemble d'aimants à flux magnétiques opposés propulseurs ayant une action radiale bien définie dans un espace temps donné par rapport à l'aimant radial de l'autre piston. On retrouve un autre ensemble d'aimants à flux magnétiques propulseurs opposés sur le piston de bielle en son milieu ayant une action radiale bien définie dans un espace temps donné du point mort bas par rapport à un autre ensemble d'aimants à flux magnétiques propulseurs opposés à action radiale placés dans le corps intérieur de la chemise en position basse dans des alvéoles obtenues lors de l'usinage et du montage. Un perçage dans le piston en position basse communicant avec la chambre de sussion du vide communique avec un autre perçage réalisé dans la chemise en position basse pour permetre la mise à l'air de cette chambre ou l'utilisation du circuit du vide en position point mort bas.

Bien que l'on puisse aussi tirer profit du circuit de refroidissement sur ce type de moteur, paraît quand même être un sérieux avantage pour une production d'eau chaude sanitaire et un chauffage central, car la conception du circuit de refroidissement dans toute la culasse et les chemises permet de récupérer l'énergie thermique que tous les éléments mécaniques produisent par frottements et rotations, par son élaboration du circuit tel que réalisé dans le systéme en faisant circuler une huile glycolé avec un % d'eau ou une huile très fluide qui récupérera les calories thermiques au passage, fourni par le moteur jouant le rôle d'échangeur thermique pour les restituer et utiliser sous différentes formes et besoins.

Bien que l'on puisse évidement changer au besoin tous les aimants aprés un certain temps d'utilisation, il est certain que cela ne pose pas de problème, car on procédera à un échange standard du moteur et de tous ses aimants étant démontables , ainsi que tous ses organes d'usures, on récupérera seulement les organes vitaux qui ne subissent pas de détérioration et d'usure. Mais il est certain que les organes mécaniques tel que roulements, joints d'étanchéité, segments d'étanchéité ect, seront usés et considérés comme n'étant plus fonctionnels avant même la fin de vie des aimants. Ce procédé de moteur garde donc son avantage fonctionnel et innovant, dont le rendement et tout à fait reconnu et assuré dans le temps sur sa rentabilité.

Dans un autre mode de réalisation de l'invention un moteur thermique ne peut pas se suffire à lui même pour fonctionner, il utilise à ce jour de l'énergie tel que le pétrole, le gazole ou le gaz, ce qui s'avére coûteux et polluant, sans compter que les ressources naturelles diminuent et on ne peut pas envisager l'utilisation du nucléaire. Mais dorénavant la résultante et les composantes des forces des flux magnétiques propulseurs opposés dépassent le rendement attendu pour résoudre ces problèmes et permettent le fonctionnement d'un moteur sans combustible conjuguant puissance et autonomie, avec des avantages ne pas être polluant,silencieux et écologique.

Dans un mode de réalisation de l'invention particuliérement préféré, on associera une énergie complémentaire obtenue par une pompe à vide qui stocke cette énergie dans des accus pour la restituer au fonctionnement du moteur, ce systéme et procédé remplacera le turbo compresseur et permettra d'apporter au moteur à un temps et une position donné en point mort haut ou bas accéléré (PMHA ou PMBA) une énergie et propulsion supplémentaire, donc une puissance plus importante au moteur ce qui s'avère avantageux, étant donné que la pompe à vide peut tourner indépendament ou être entrainée par le moteur. On peut donc en période de nuit ou de jour charger les accus de vide pour garantir une autonomie en continue.

Dans ce mode de réalisation de l'invention telle que décrite et particulièrement préféré au moteur thermique plus bruyant. Il en résulte une construction très simple, dont le fonctionnement est fiable, mais il a surtout l'avantage d'être silencieux de par sa conception.

Dans un autre mode de réalisation telle que décrite dans les fig B, le principe de fonctionnement reste identique et applicable à sa base dans le domaine des cycles à deux roues, pas trop encombrant, peu coûteux, d'une conception simple et fiable, permettant de porter soulagement et plaisir à des personnes en difficultés physique ou de santé et qui ne pouvaient plus profiter des promenades dans la nature en cycle à deux roues.

L'invention est décrite plus en détail ci après à l'appui de l'exemple de réalisation exposé par extraits et en partie de manière schématique dans les différents dessins des figures A n° 1/43 à 4/43 représentant une coupe transversale d'un seul piston de la culasse dans différentes positions n°1 point mort haut ralenti (PMHR), n°2 point mort bas ralenti (PMBR), n°3 point mort haut accéléré (PMHA) et n°4 point mort bas accéléré (PMBA) selon l'invention qui permet d'observer le dispositif de moteur temporel à variation de vitesse faisant apparaître les différentes phases du mouvement transversal des pistons fig A n°5 rep1 et fig A n°7 rep3 à l'intérieur d'une chambre fig A n°6 rep2, elle même montée dans la culasse fig A n°25 rep27 qui représente une coupe transversale de l'ensemble de la culasse, dotée de quatre pistons en ligne, tandis que la fig A n°38 montre une vue de dessus partielle de l'agencement suivant la fig A n°25 rep27 ainsi que les fig A n°36 et n°37 représentant la vue partielle de gauche et de droite de la culasse. Un arbre à cames fig A n°25 rep28 doté de quatre cames excentriques alignées rep30 (A,B,C,D) commandé en rotation par un moteur hydraulique ou électrique rotatif pas à pas monté sur l'axe cannelé fig A n°26 rep32 et fixé sur la culasse par les éléments de fixations et de centrages fig A n°25 rep32 et 93 qui permettront de transmettre et donner une position transversale bien déterminée au piston fig A n°7 rep3 suivant la demande de l'utilisateur en point mort haut ralenti, accéléré ou décéléré L'ensemble de ces combinaisons de mouvements transversaux permettront de les transformer en sortie de villebrequin en un mouvement rotatif. L'invention décrite plus en détail en reprenant chaque éléments mécanique exposé par les dessins, permettra de cerner et de rendre plus compréhensible le fonctionnement de l'ensemble de l'invention fondée sur les fig A n°1 à n°4 et fig A n°25 du moteur temporel à variation de vitesse.

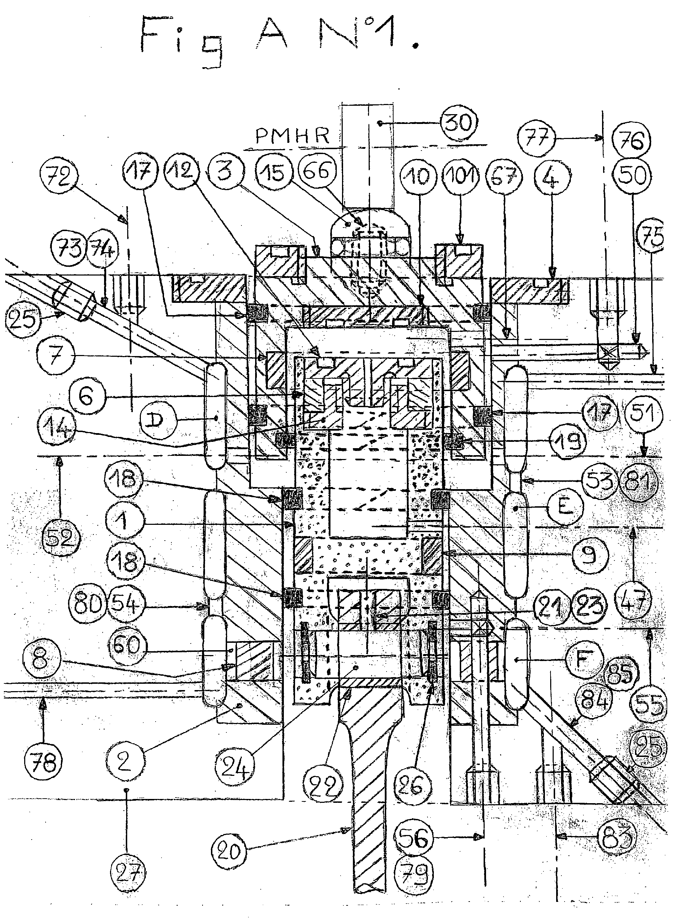

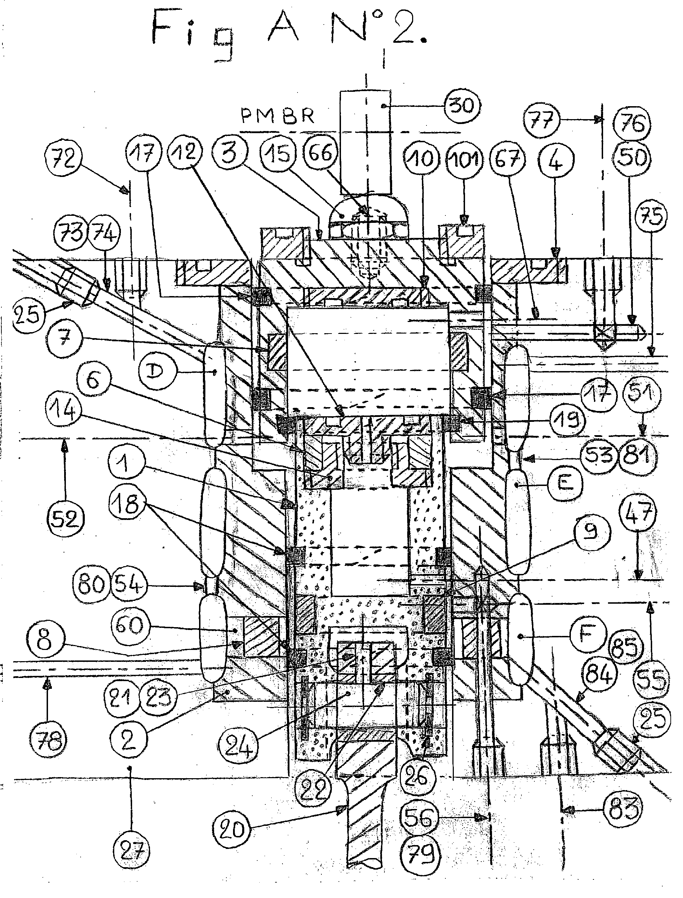

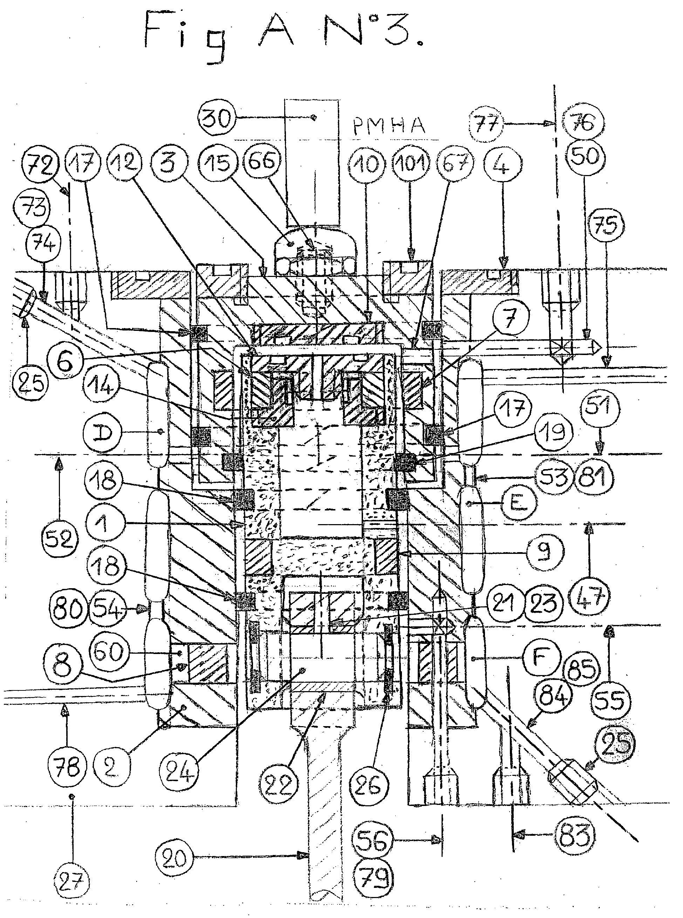

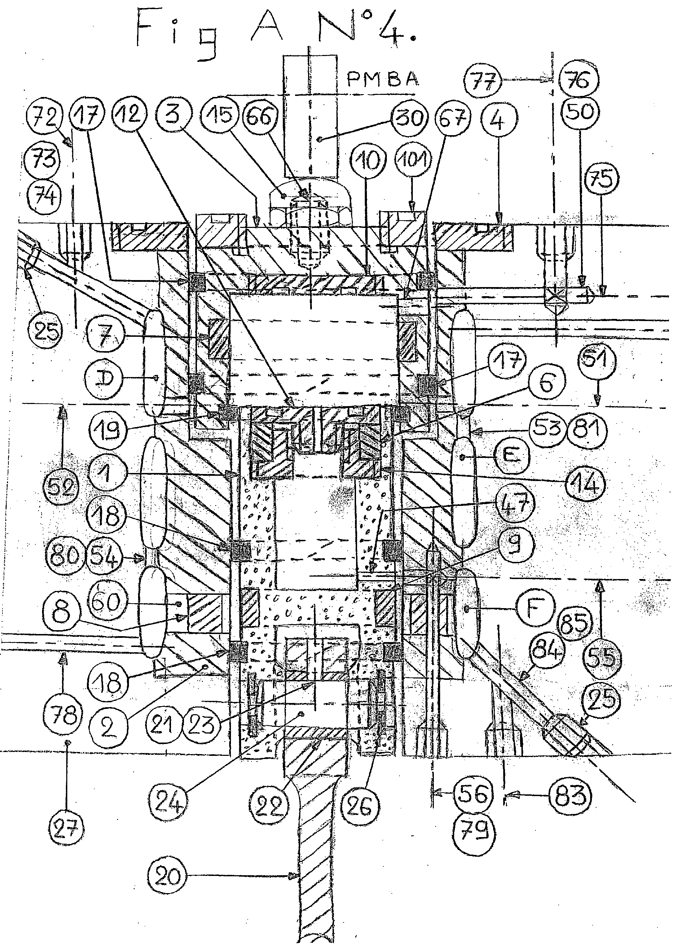

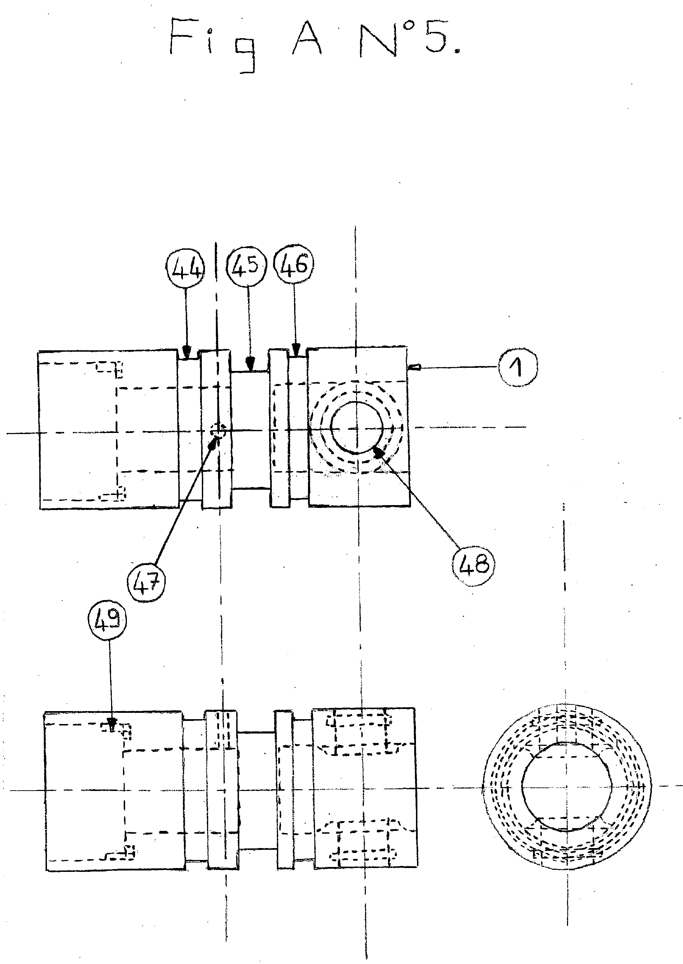

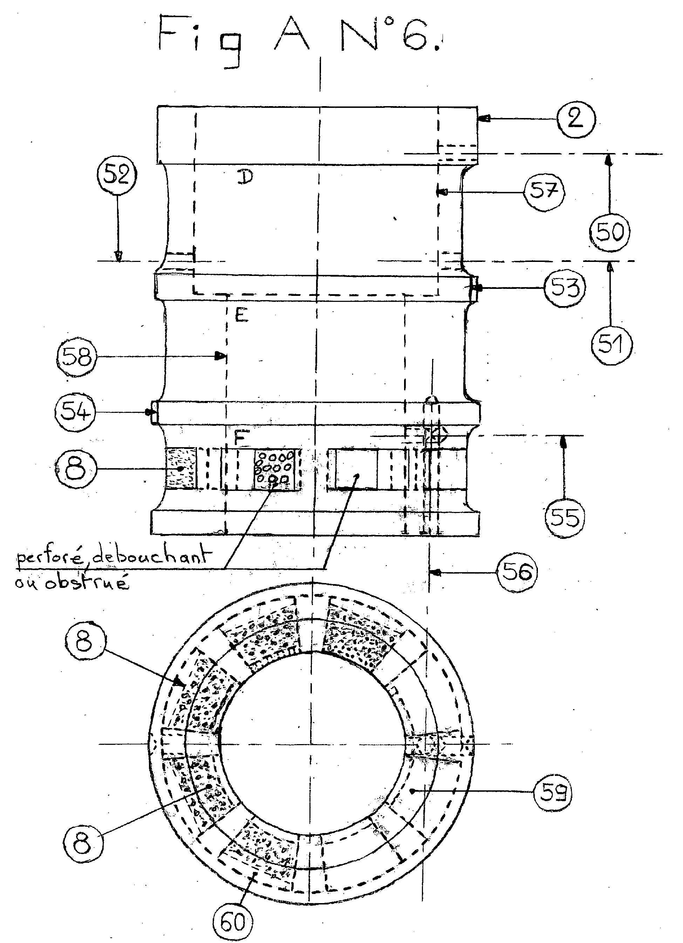

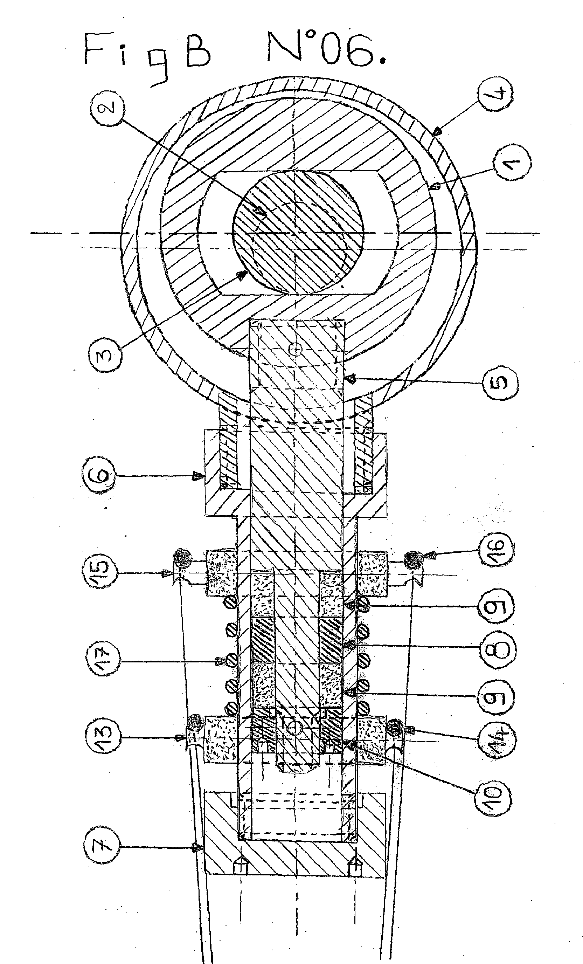

Descriptif du piston fig A n°5 rep 1 pour définir ces phases de travail et ces opérations d'usinage.Tout d'abord ce piston est doté d'une chambre avec un filetage rep 9 qui recevra la pièce rep14 fig A n° 15, elle même recevra l'aimant rep12 fig A n° 14 par vissage et qui aura un perçage calibré très petit communiquant avec cette chambre. Ce perçage calibré très petit permettra d'exercer une sussion du piston par le vide dans la phase finale de point mort haut accéléré pour apporter tel qu'un turbo compresseur une puissance complémentaire non négligeable, par l'intermédiaire du circuit percé rep67 fig A n°7 et rep76 fig A n°27,28,29 et 30 qui correspond au circuit de stockage du vide dans des accus par la pompe à vide qui peut tourner indépendement ou être en charge continue jour et nuit. L'assemblage de ces deux pièces rep14 fig A n°15 et rep12 fig A n°14 permettront de loger entre elle des aimants individuels ou un aimant en couronne monté de manière que les champs magnétiques se repoussent avec l'aimant ou les aimants rep7 fig A n°10, il est bien entendu que tous les aimants seront soudés et assemblés sur les pièces respectives avec de l'étain et auront de ce fait des petites incurvitées percées ou usinées de forme concave intérieur sur leurs champs. Cette chambre aura un perçage calibré rep47 qui communiquera avec le curcuit à l'air libre ou de vide suivant les phases des rep56 fig A n°6 et rep79 fig A n°27,28,29 et 30 lorsque le piston plongera en point mort bas. Le rainurage cylindrique rep45 recevra des aimants individuels ou deux aimants en demi lune rep9 fig A n° 12 montés de maniére que les champs magnétiques se repoussent avec les aimants rep8 fig A n°11 placés dans la chemise rep2 fig n°6, il est bien entendu que tous les aimants seront soudés et asemblés sur les piéces respectives avec de l'étain et auront de ce fait des petites incurvitées percées de trous ou usinée de forme concave intérieure sur leurs champs pour permettre leurs blocages entre eux aprés soudage, mais leurs assemblages ou soudages pourront aussi se réaliser avec des résines telle que l'araldite ou autre. Deux segments fonte acier rep44 et 46 fig A n°18 assureront l'étanchéité entre les différentes opérations, phases et chambres, ainsi que le guidage du piston dans la chemise rep2 fig A n°6. Un alésage rep48 recevra l'axe rep24 fig A n°22 de la bielle respective rep20 fig A n°20 du villebrequin, deux rainures logeront les joncs d'arrets rep26 fig A n°24 de l'axe de bielle en translation. Le piston sera obtenu par moulage, certaines opérations resteront brutes de fonderie, d'autres seront usinées et il sera en alliage d'alluminium.

Descriptif de la chemise rep2 fig A n°6 pour définir ces phases de travail et ces opérations d'usinage, tout d'abord cette chemise sera en fonte à graphite lamellaire brute de fonderie, des alvéoles qui seront soient perforées, débouchantes ou obstruées rep59 recevront en leurs logements au nombre de huit des aimants individuels rep8 fig A n°11 montés de maniére que les champs magnétiques se repoussent avec les aimants rep9 fig A n°12, ces aimants seront soudés et assemblés dans chaque alvéoles rep59 avec de l'étain ou des résines telle que l'araldite ou autre rep60. Deux alésages rep57 et rep58 logeront et assureront le guidage des pistons rep1 fig A n°5 et rep3 fig A n°7. Trois cavités creusées circulairement au tour du diamétre extérieur de la chemise seront obtenus brute de fonderie et permettront d'assurer le refroidissement par circulation d'une huile glycolé ave un % d'eau ou d'une huile très fluide entre la culasse et la chemise de maniére à refroidir le moteur, mais aussi de récupérer son énergie thermique pour produire une production d'eau chaude sanitaire ou alimenter un chauffage central. Deux perçages dans la cavité 1 rep52 et 51 permettront le passage de l'huile très fluide ou glycolé avec un % d'eau du circuit de refroidissement vers le rep75 fig A n° (27,28,29 et 30) pour assurer la lubrification des segments rep63 et 64 fig A n°7 et rep44 fig A n°5. Le perçage rep50 permet d'assurer la liaison avec les perçages rep76 et 77 fig A n°(27,28,29 et 30) de la culasse rep27 fig A n°(27,28,29 et 30) et la chambre de sussion du piston rep1 fig A n°5 qui correspond au circuit du vide qui se mettra en action à un moment bien déterminé du point mort haut accéléré (PMHA) pour apporter une puissance complémentaire jouant le rôle de turbo compresseur dans un espace temps donné très court. Les entailles en vé rep53 entre la cavité 1 et 2 et celle rep54 entre la cavité 2 et 3 permettront la circulation du fluide du circuit de refroidissement de maniére homogène sur toute la surface de la chemise. Les perçages rep55 obtenu brut de fonderie et rep56 obtenu par perçage en communication avec le perçage rep79 fig A n°(27,28,29 et 30) permettront la mise à l'air libre ou la liaison avec le circuit du vide, en position point mort bas de la chambre de sussion du piston rep 1 fig A n°5.

Descriptif du piston rep3 fig A n°7 pour définir ces phases de travail et ces opérations d'usinage, tout d'abord ce piston sera en alliage d'alluminium brut de fonderie. Le logement rep62 recevra deux aimants en forme de demi lune rep7 fig A n°10 montés et réalisés pour que les champs magnétiques se repoussent avec les aimants rep6 fig A n°9 qui seront sollicités en point mort haut ralenti et accéléré pour agir en poussée sur le piston rep1 fig A n°5 et transmettre sa force pour permettre la rotation du villebrequin. Le segment rep64 assurera le guidage et l'étanchéité avec le piston rep 1 fig A n°5 et sa chambre de sussion du vide. Les segments rep63 et 61 assureront le guidage et l'étanchéité du piston rep3 fig A n°7 avec la chemise rep2 fig A n°6. Le logement fileté rep65 recevra un aimant rep10 fig A n°13 monté et réalisé pour que les champs magnétiques se repoussent avec l'aimant rep12 fig A n°14 qui seront sollicités en point mort haut accéléré pour agir en poussée sur le piston rep1 fig A n°5 et transmettre aussi sa force pour permettre la rotation du villebrequin. Un embout fileté rep66 sera vissé et monté au scelle roulement dans le piston rep3 fig A n°7 doté d'un taraudage et recevra la pièce rep15 fig A n°16, elle aussi montée au scelle roulement. Pour ce qui est du filetage rep98, il recevra l'aimant rep101 fig A n°41 monté et réalisé pour que les champs magnétiques se repoussent avec l'aimant rep4 fig A n°8 pour maintenir le piston rep3 fig A n°7 par l'intermédiaire de la pièce rep15 fig A n°16 en contact ponctuel et permanent avec les cames A,B,C et D rep30 fig A n°26.

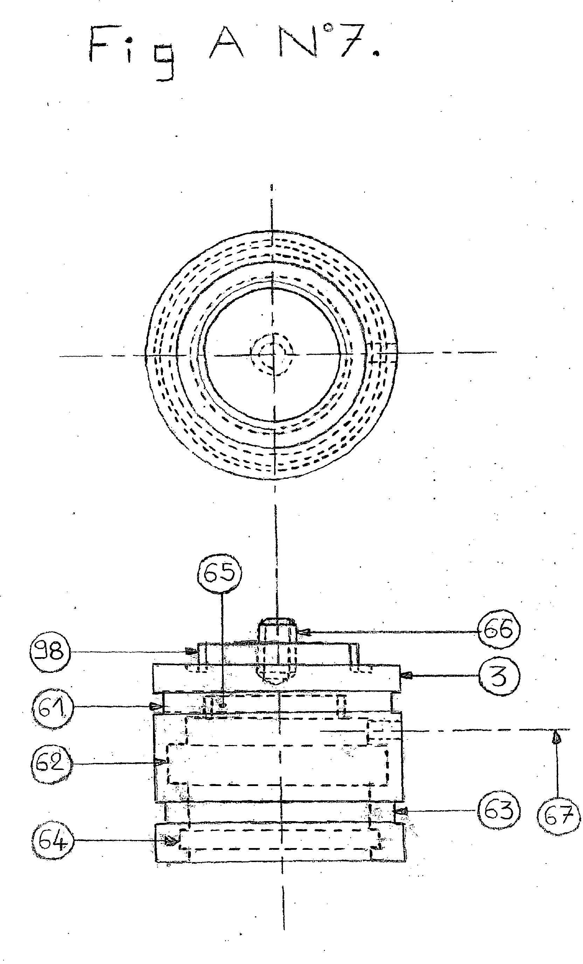

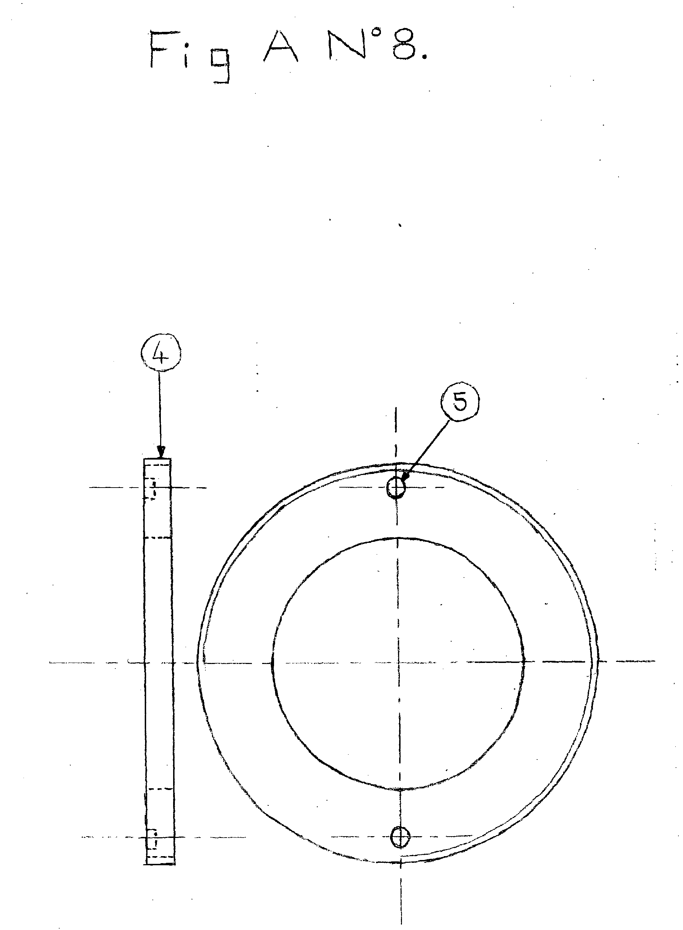

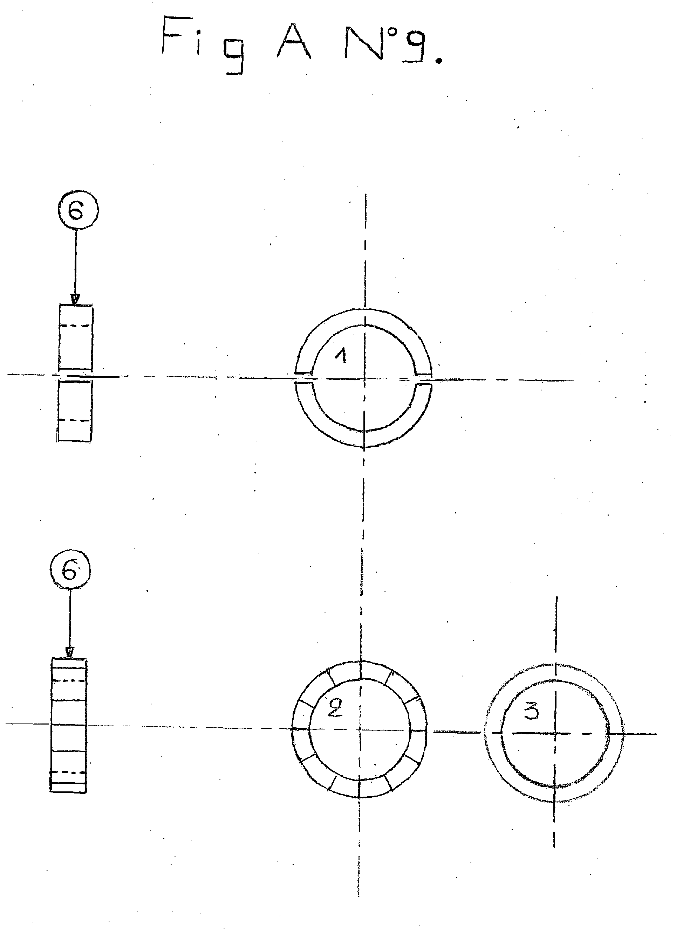

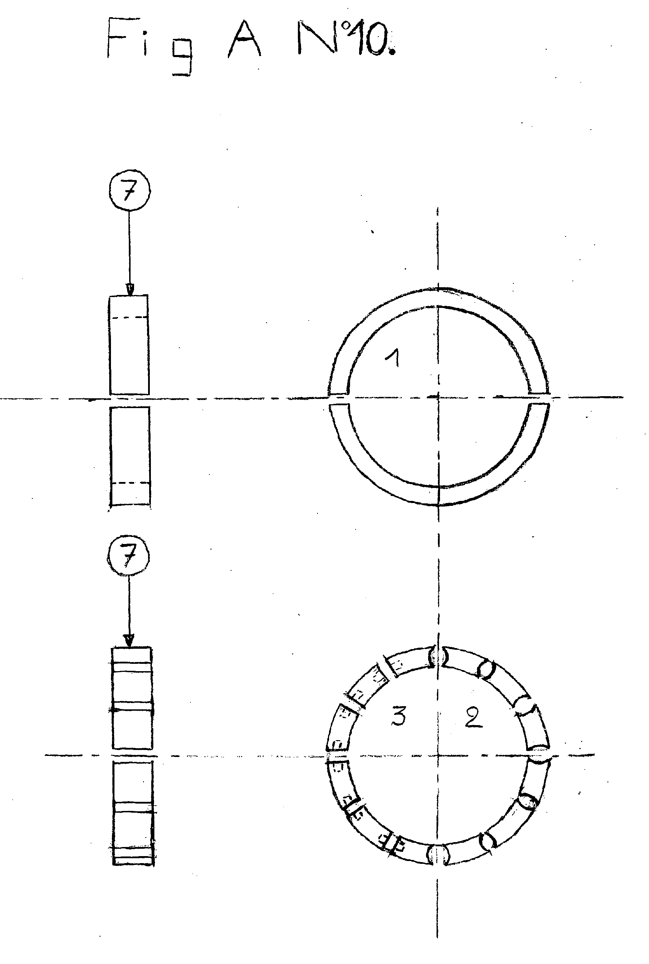

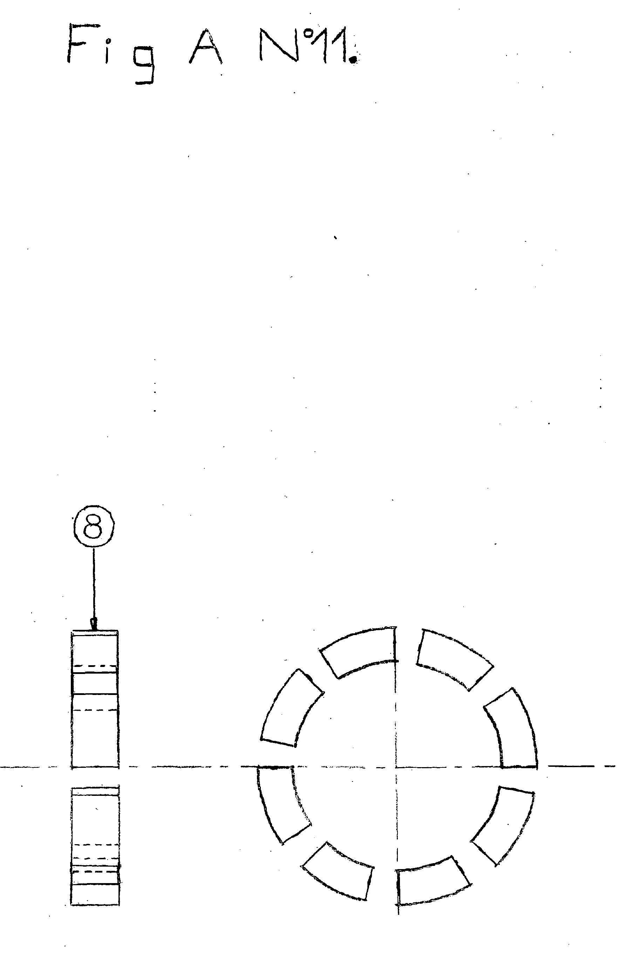

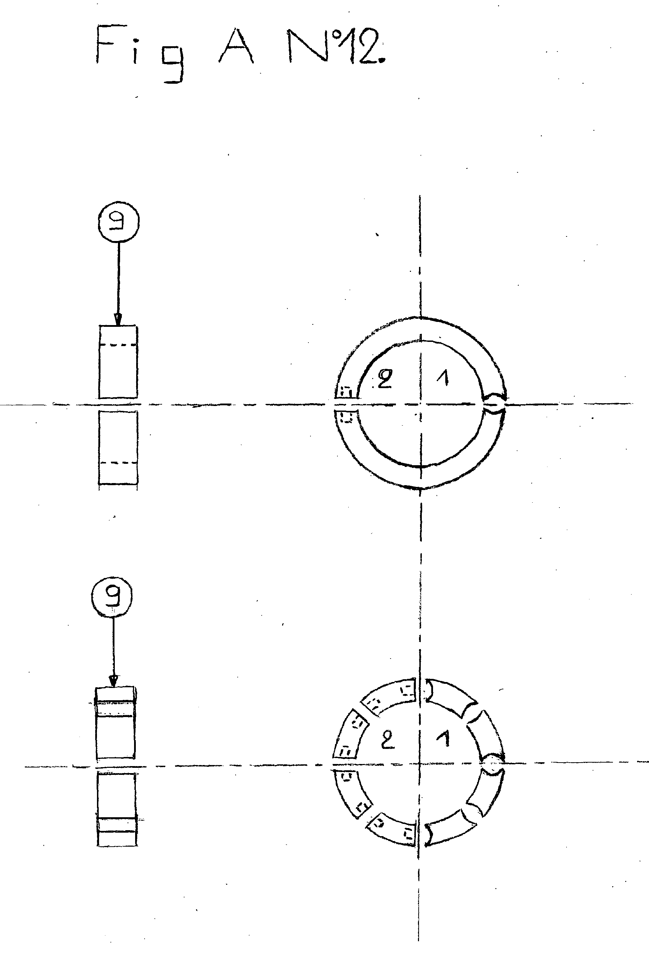

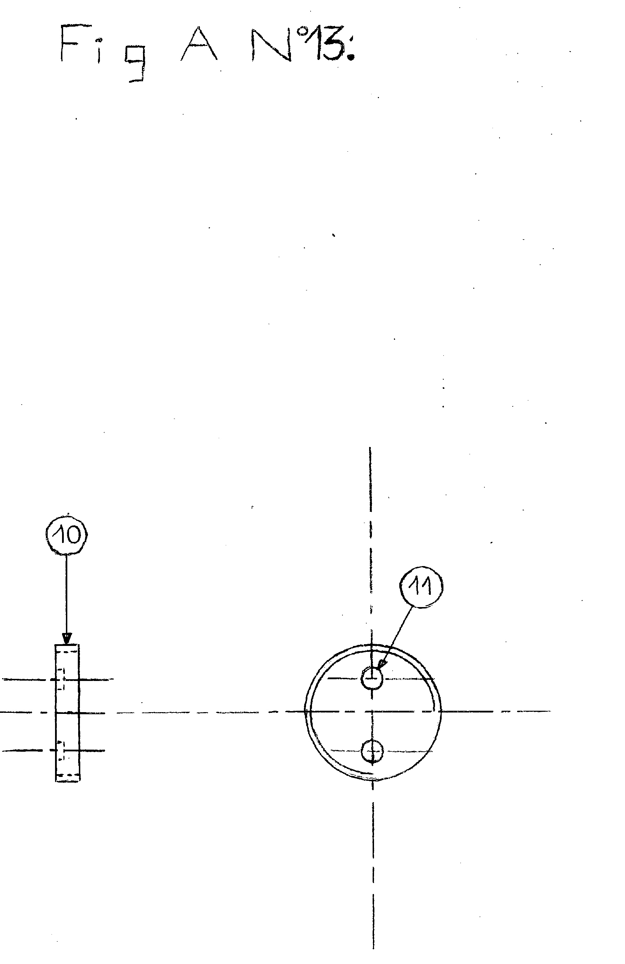

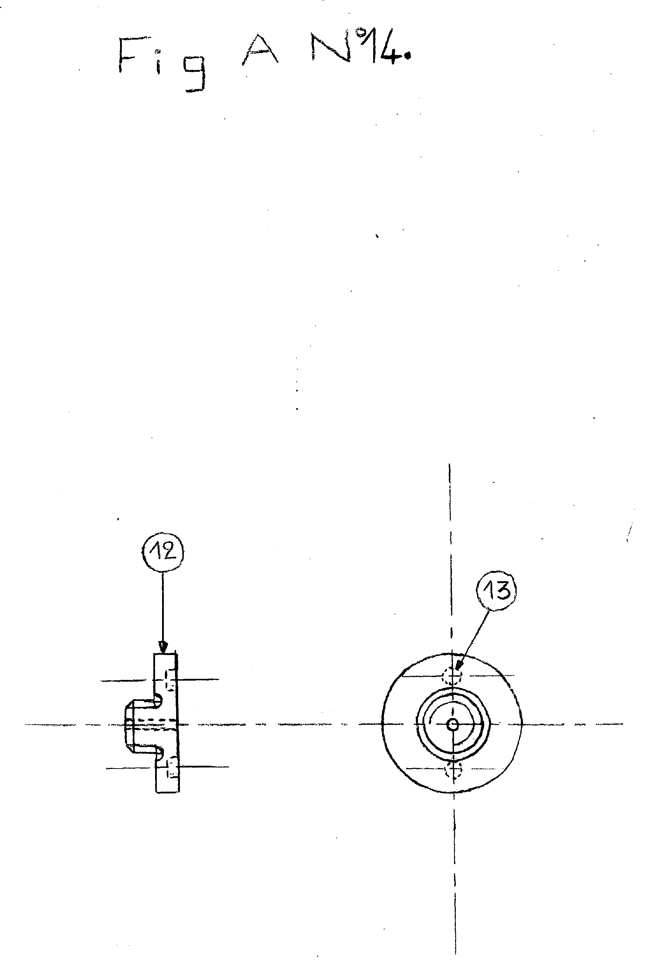

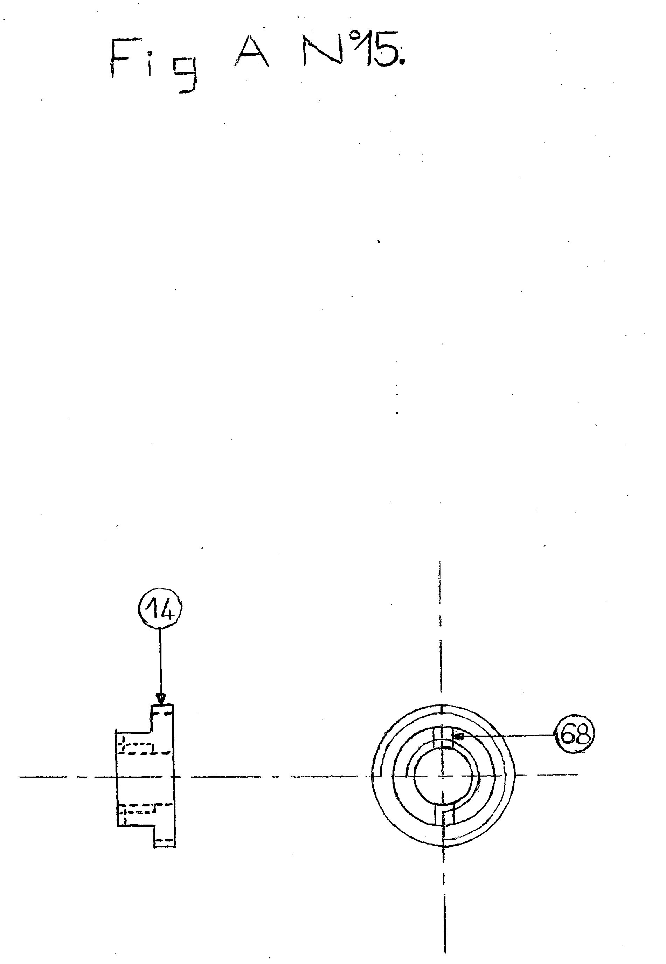

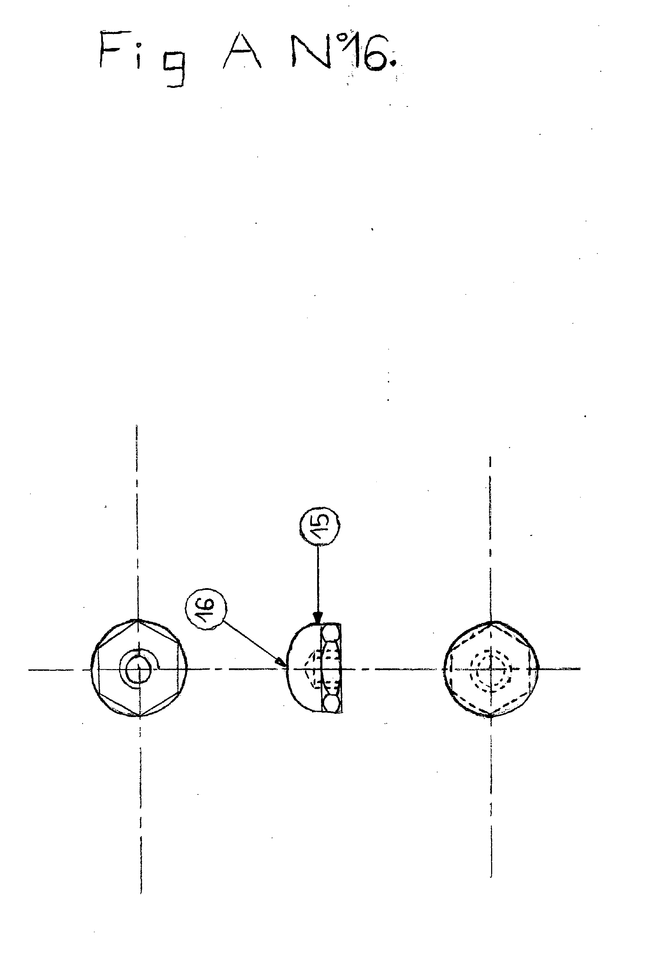

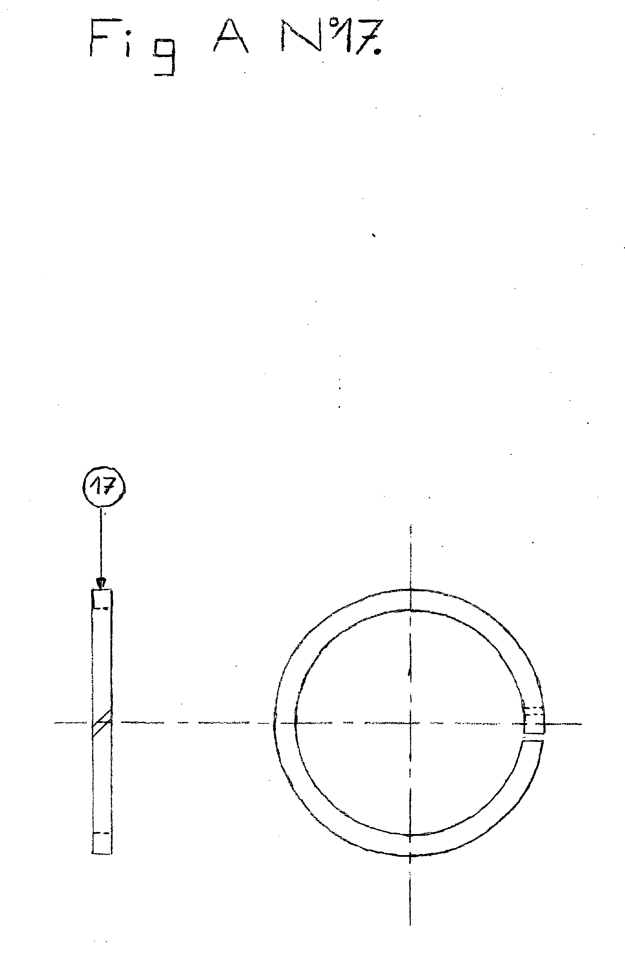

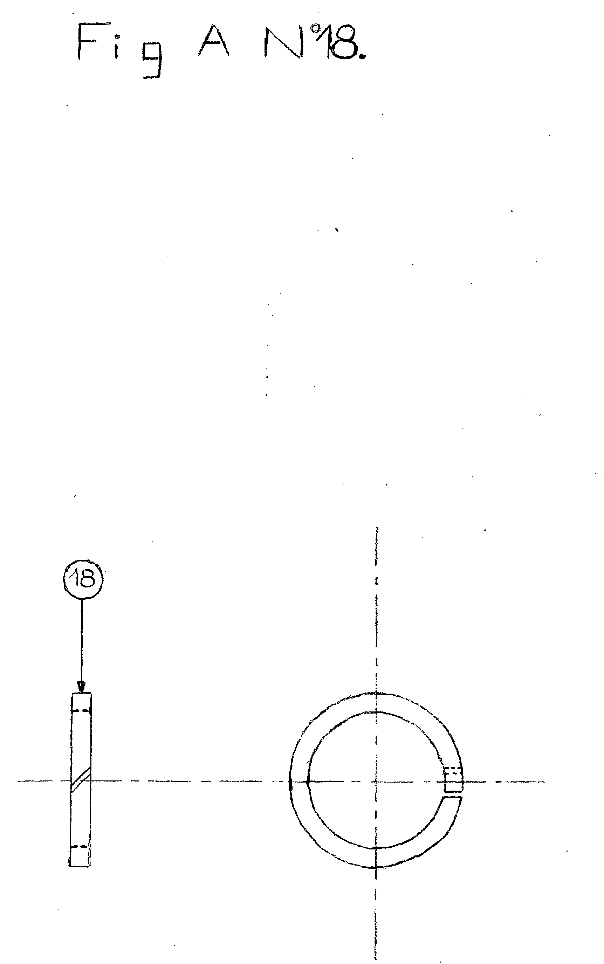

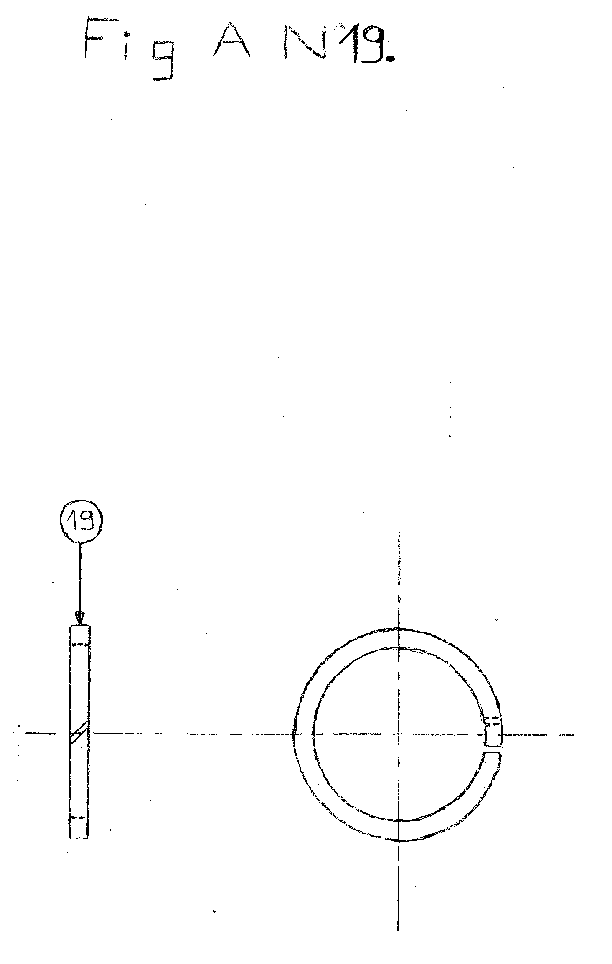

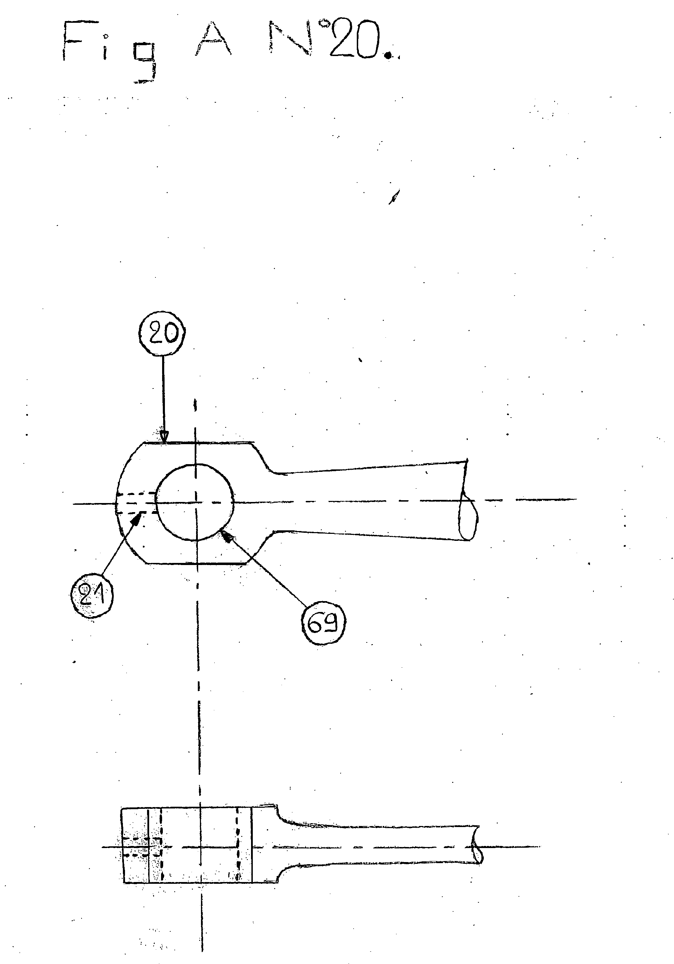

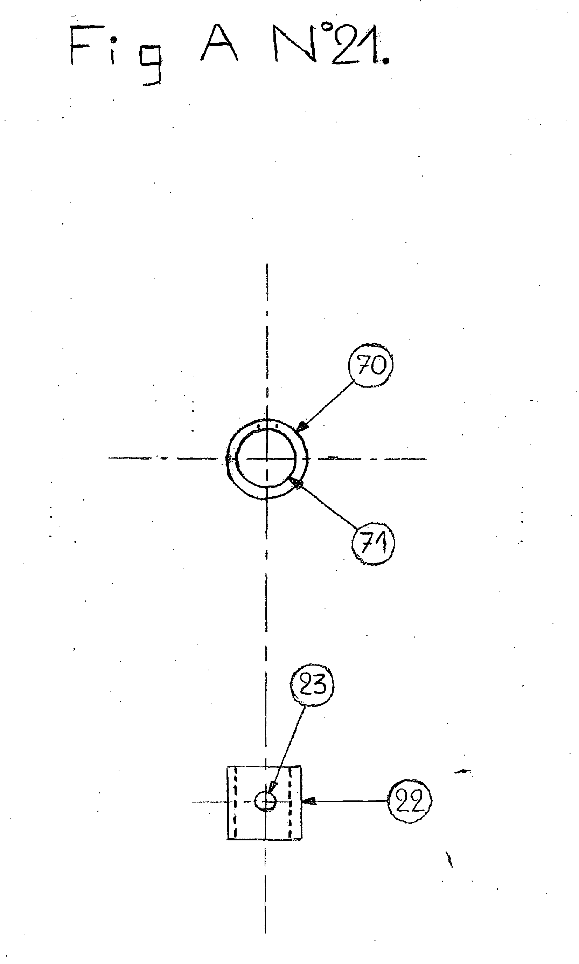

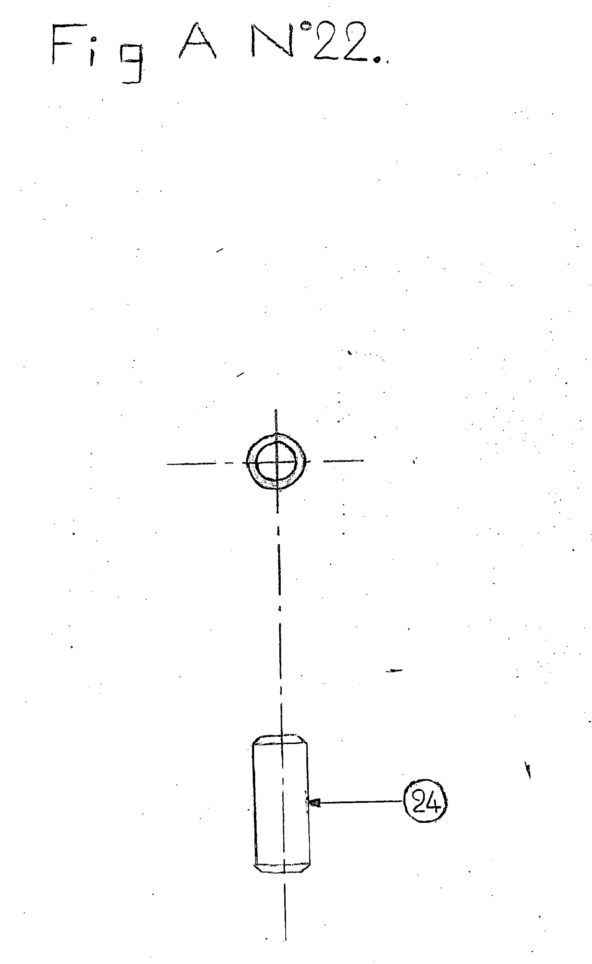

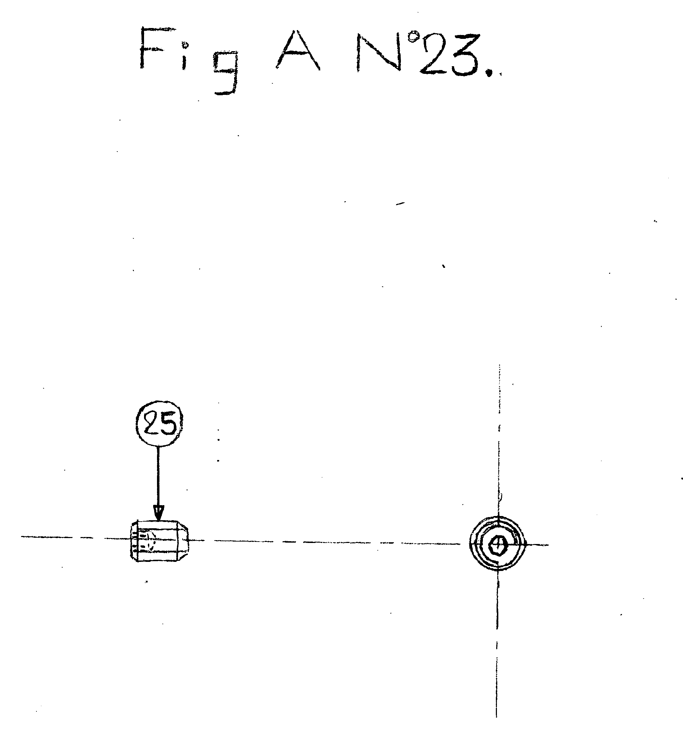

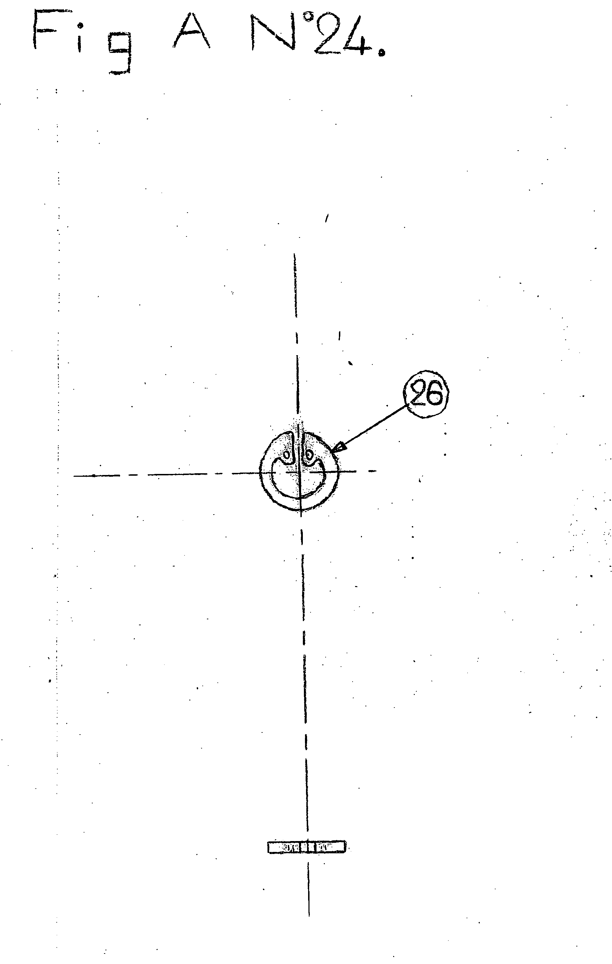

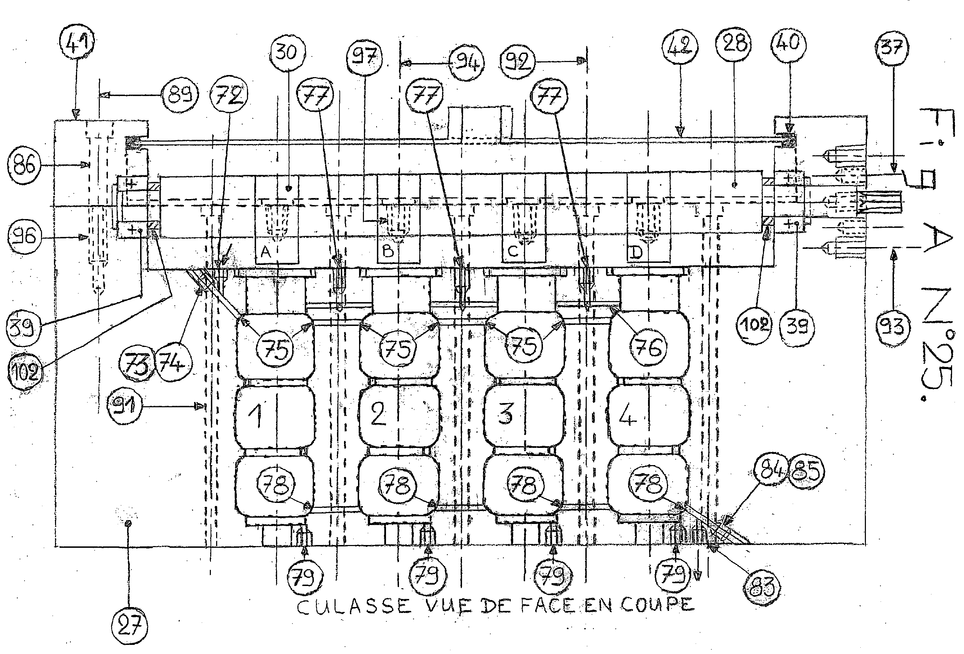

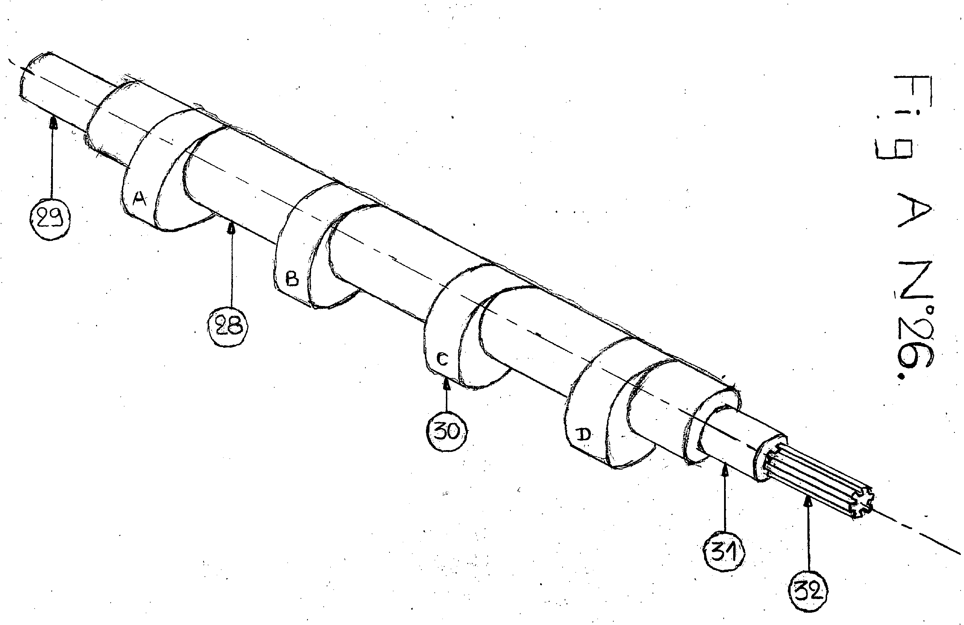

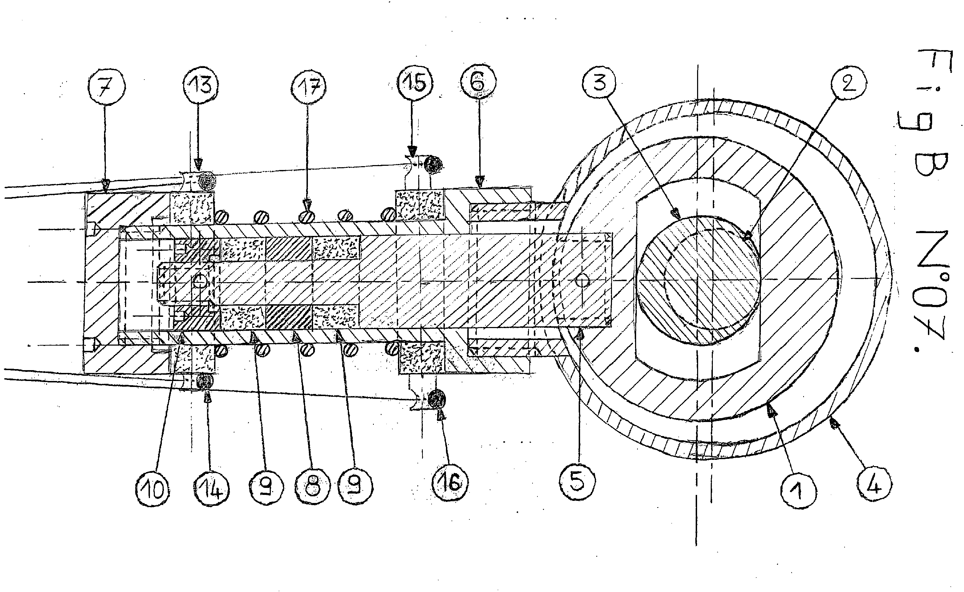

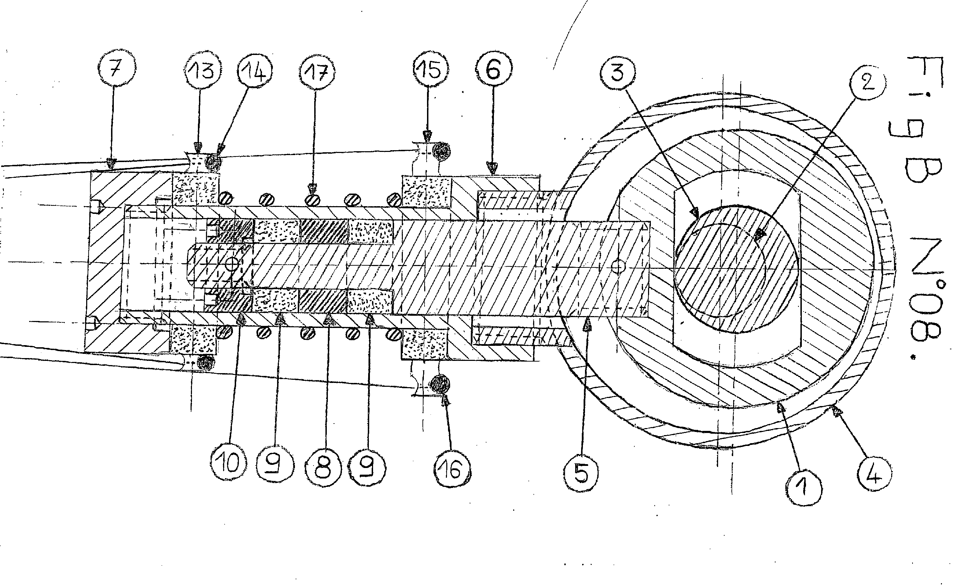

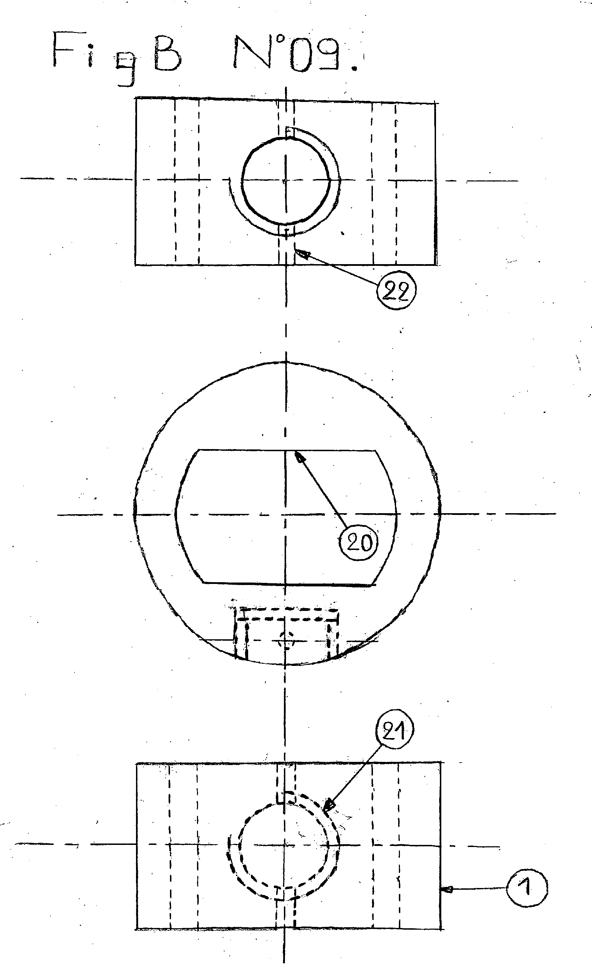

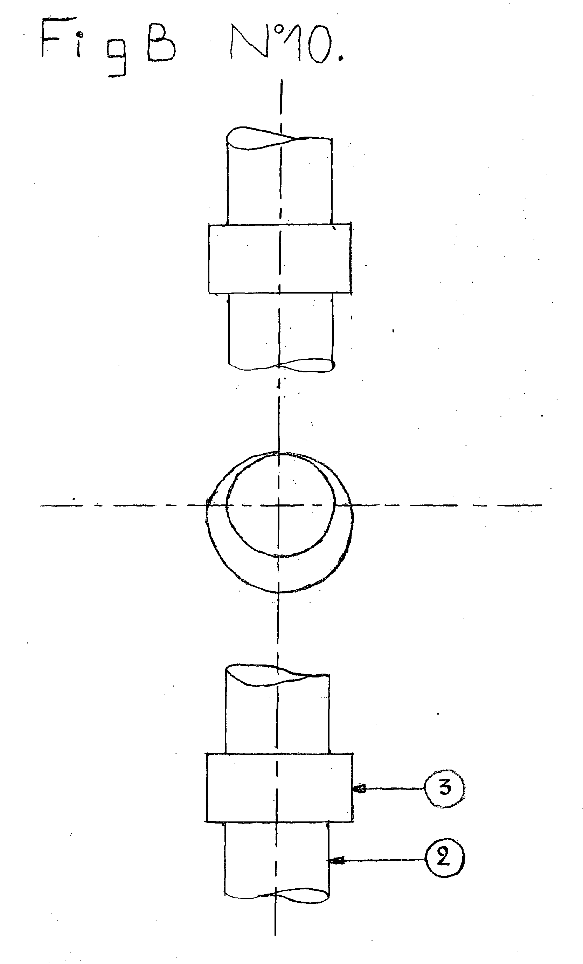

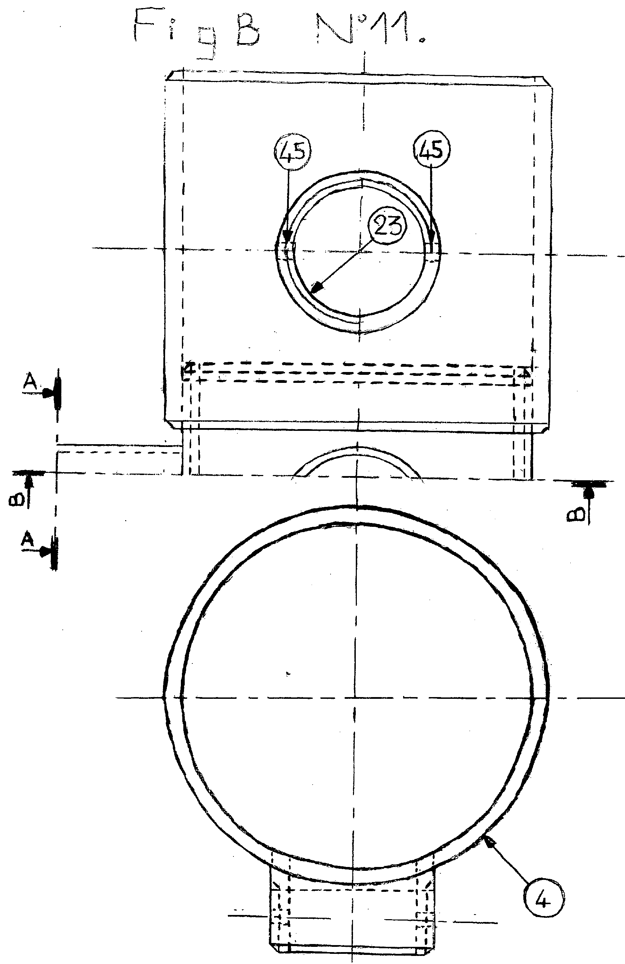

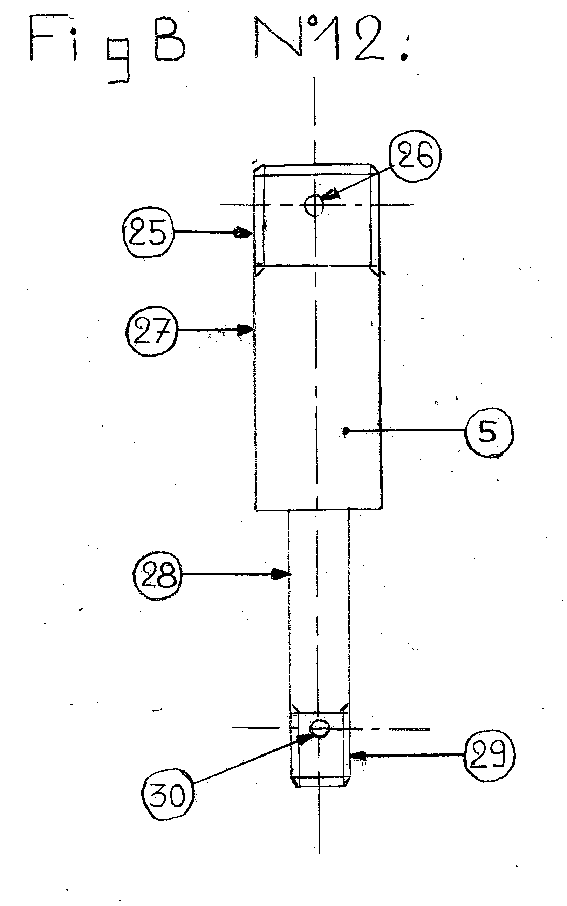

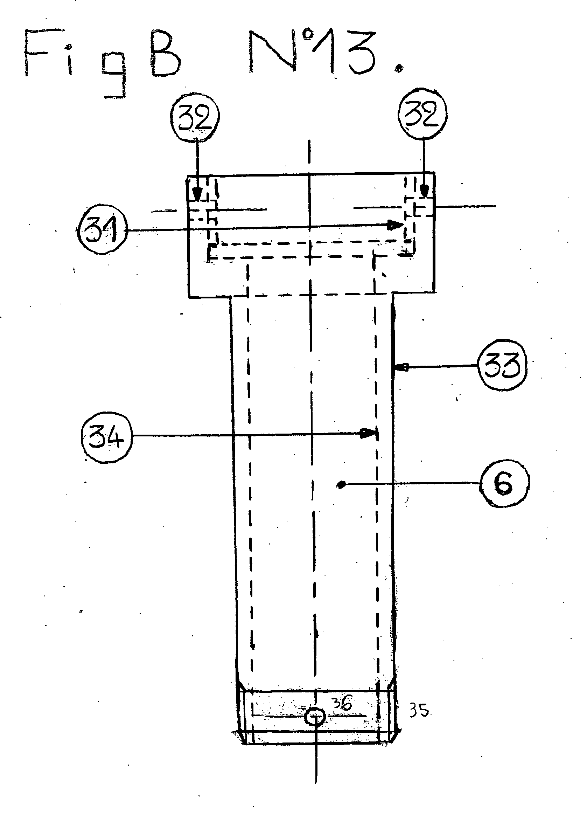

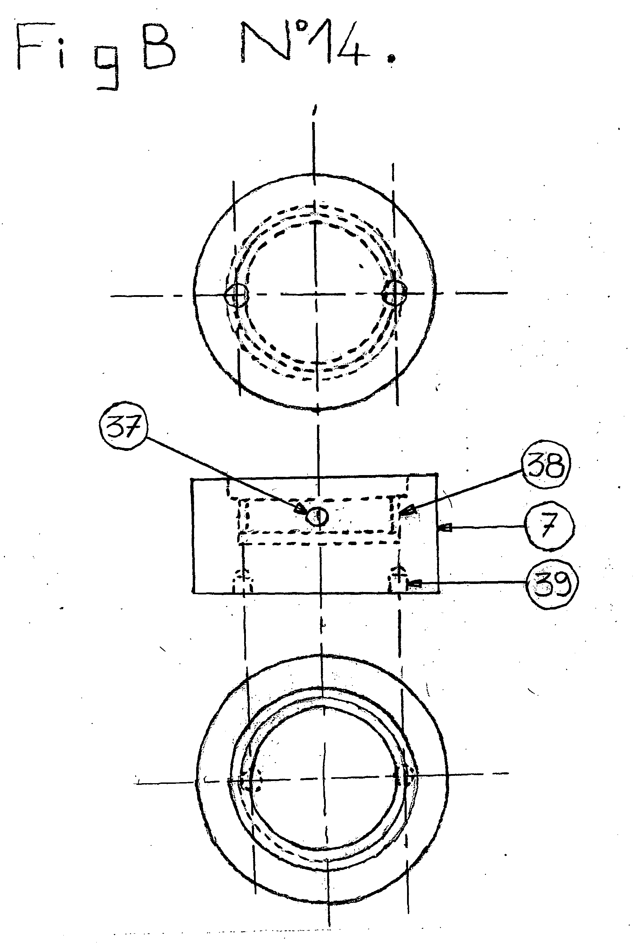

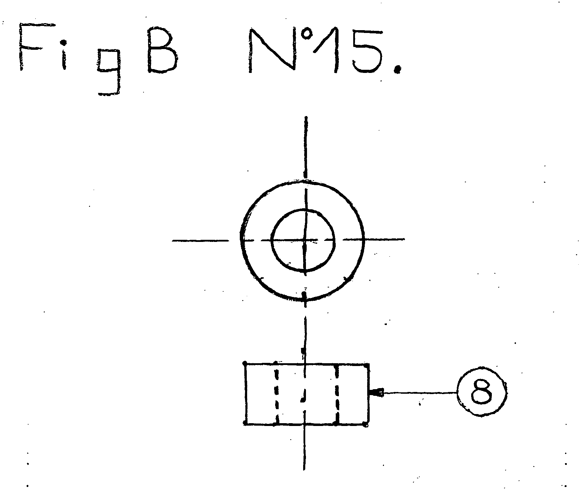

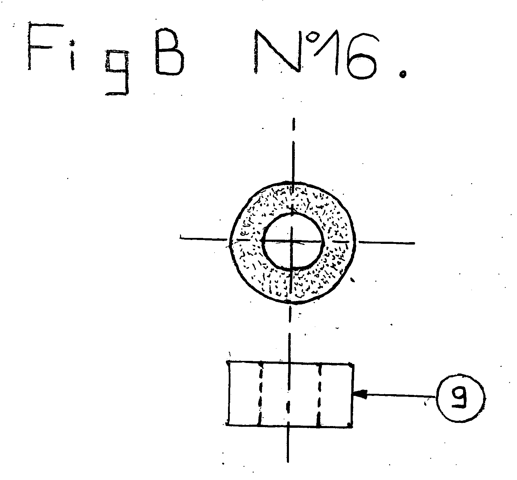

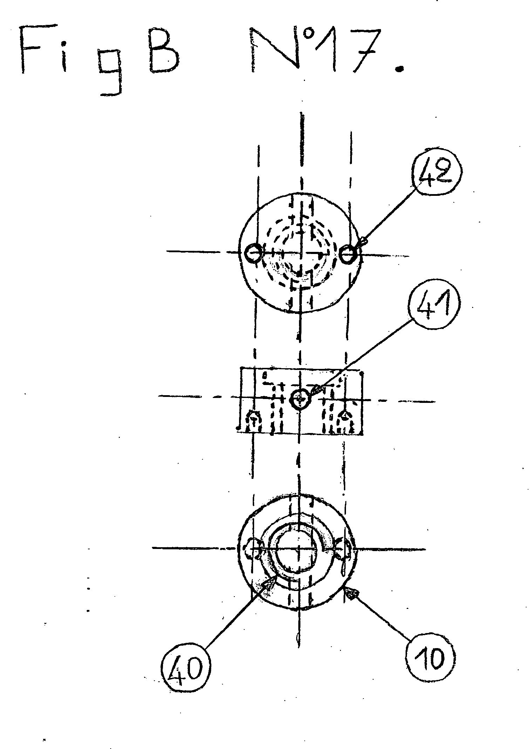

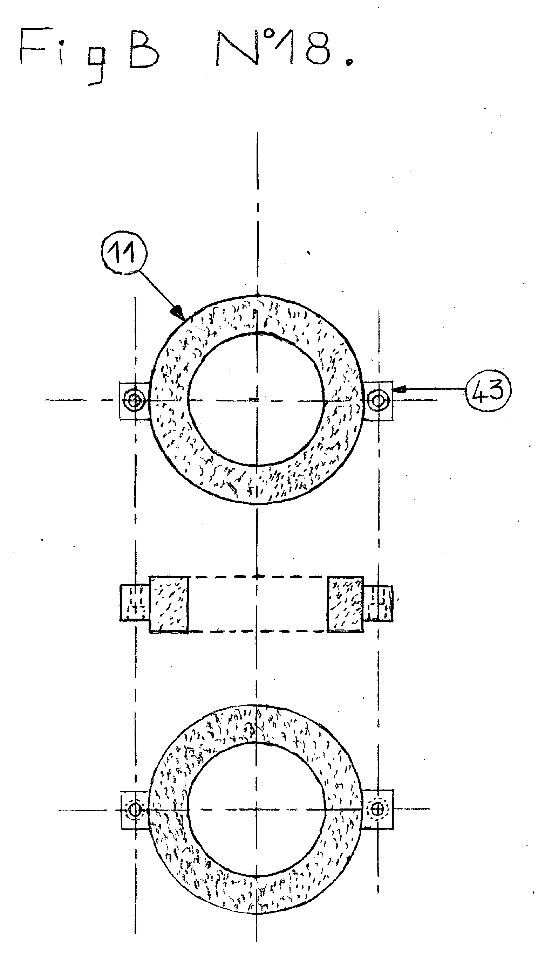

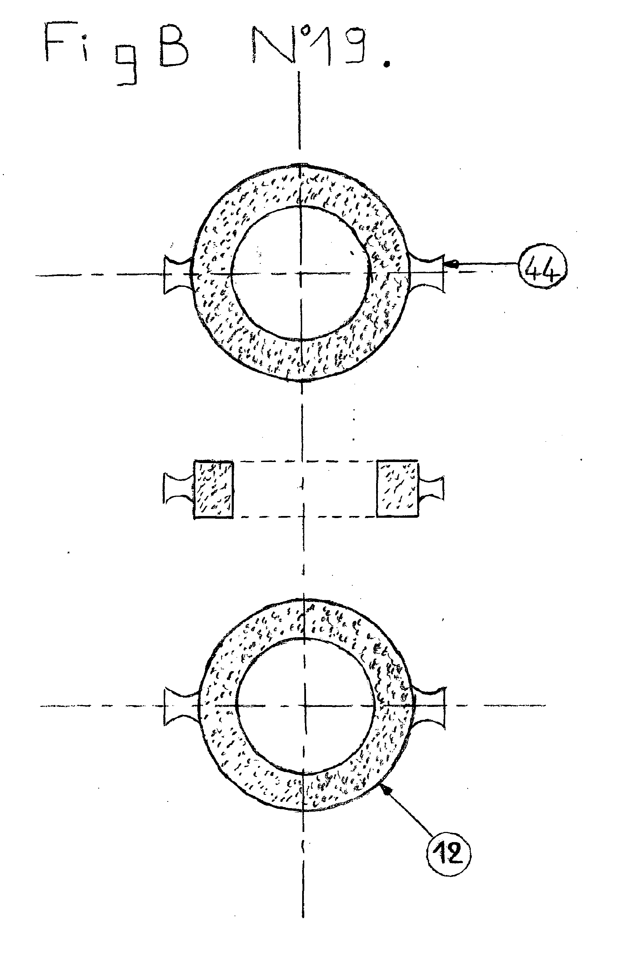

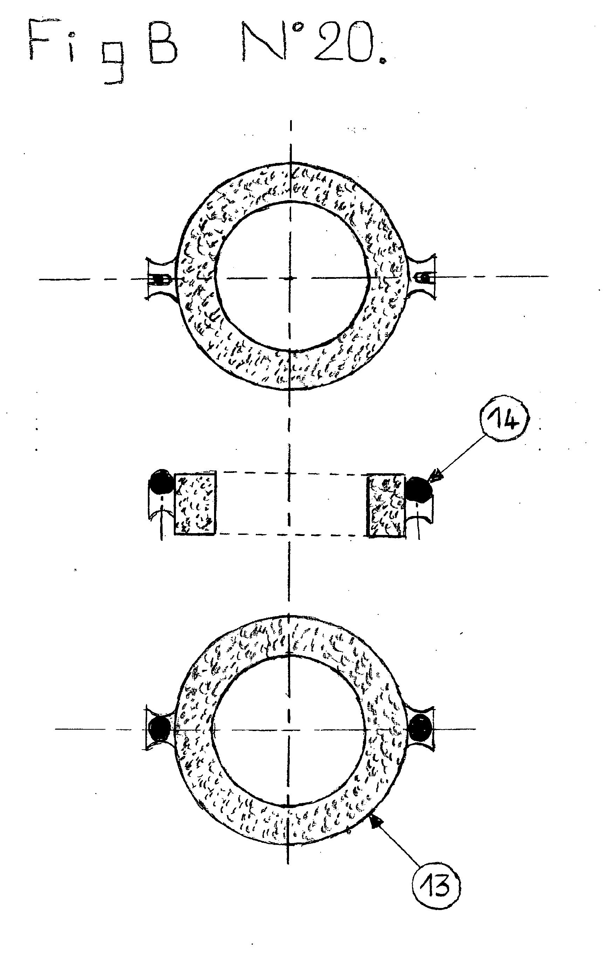

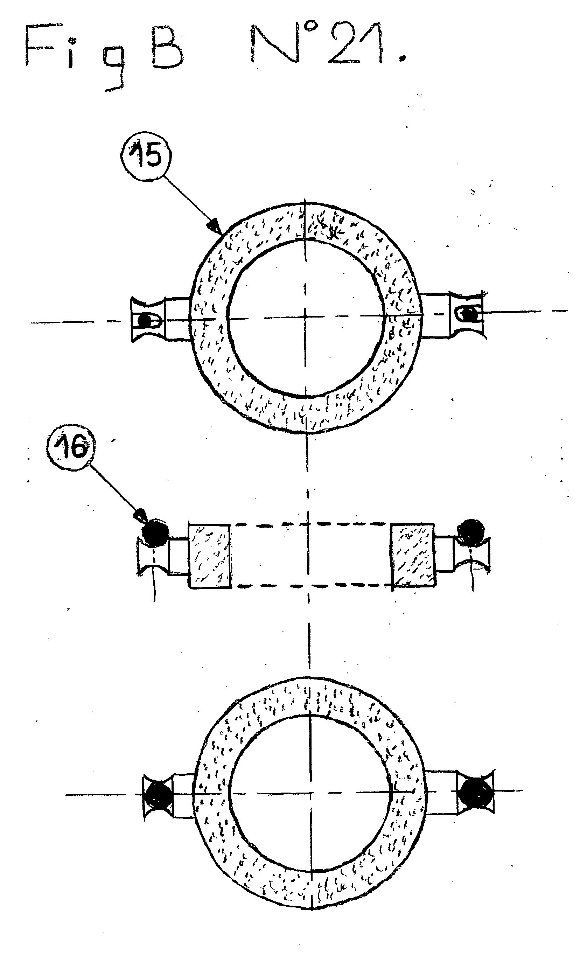

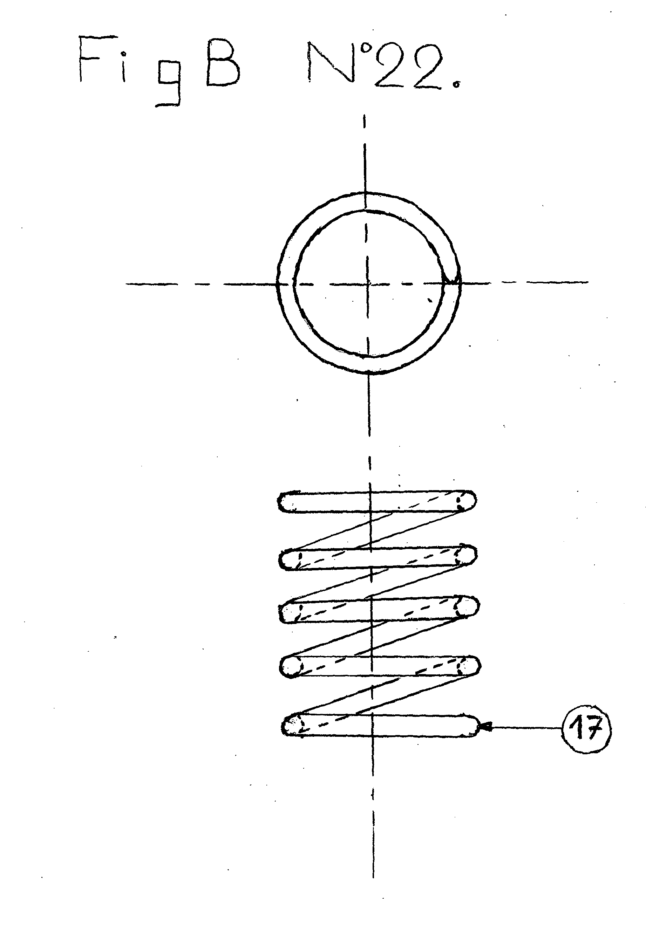

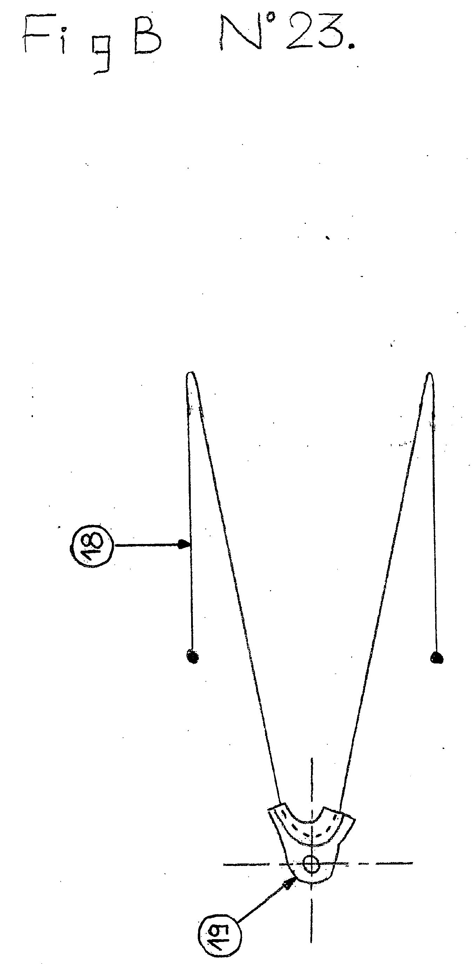

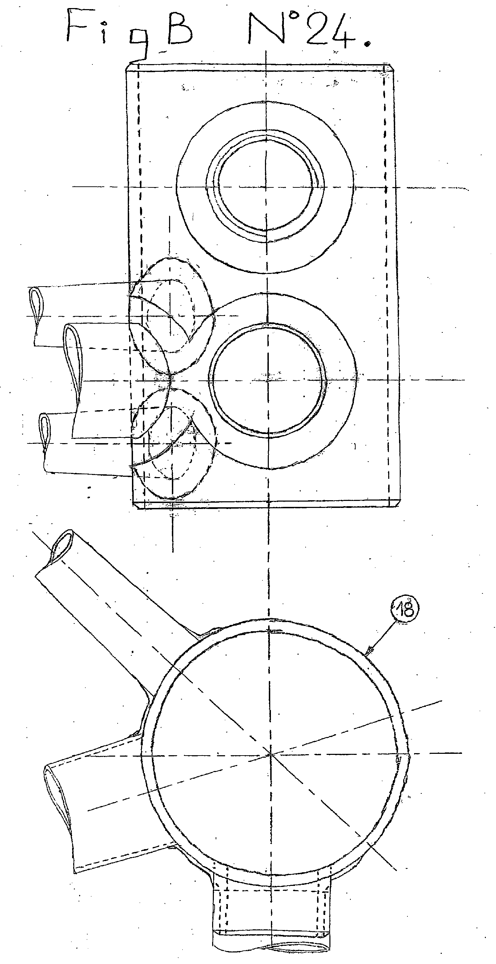

Descriptif de l'aimant rep4 fig A n°8 pour définir ces phases de travail et ces opérations d'usinage, il sera vissé sur la culasse rep27 fig A n°(27,28,29 et 30) suivant le logement rep34 et 82 fig A n°(27,28,29 et 30) pour assurer une sécurité d'arret de la chemise rep2 fig A n°6, bien que celle ci soit montée en serrage presse sur la culasse rep27 fig A n°(27,28,29 et 30), mais son rôle principal étant de repousser l'aimant rep101 fig A n°41 pour maintenir le piston rep3 fig n°7 par l'intermédiaire de la pièce rep15 fig A n°16 en contact ponctuel et permanent avec les cames A, B, C et D rep30 fig A n°26. Des perçages rep5 permettront avec une clé à ergots d'assurer son serrage sur la culasse et sera monté au scelle roulement.

Le descriptif de l'aimant rep6 fig A n°9 a défini son rôle sur le piston rep1 fig A n°5 par rapport à l'aimant rep7 fig A n°10 dans d'autres descriptifs ci dessus qui ont permis de définir leurs rôles respectifs l'un par rapport à l'autre. il est bien entendu que tous les aimants seront soudés et assemblés sur les pièces respectives avec de l'étain et auront de ce fait des petites incurvitées percées de plusieurs ou un trous ou usinée de forme concave intérieure sur leurs champs pour permettre leurs blocages entre eux après soudage, suivant fig A n°10 types 2 ou 3, ils seront suivant les cas et les possibilités de montage de forme en demi lune, en plusieurs aimants individuel ou en anneau suivant les types représentés 1, 2 et 3.

Le descriptif de l'aimant rep8 fig A n°11 a défini son rôle sur le piston rep1 fig A n°5 par rapport à l'aimant rep9 fig A n°12 dans d'autres descriptifs ci dessus qui ont permis de définir leurs rôles respectifs l'un par rapport à l'autre. il est bien entendu que tous les aimants seront soudés et assemblés sur les piéces respectives avec de l'étain ou résines et auront de ce fait des petites incurvitées percées de plusieurs ou un trous ou usinée de forme concave intérieure sur leurs champs pour permettre leurs blocages entre eux aprés soudage, suivant fig A n°12 rep9 types 1 ou 2, ils seront suivant les cas et les possibilités de montage de forme en demi lune ou en plusieurs aimants individuels suivant les types représentés rep8 fig A n°11 ou rep9 fig A n°12.

Le descriptif de l'aimant rep10 fig A n°13 a défini son rôle sur le piston rep 1 fig A n°5 par rapport à l'aimant rep12 fig A n°14 dans d'autres descriptifs ci dessus qui ont permis de définir leurs rôles respectifs l'un par rapport à l'autre. il est bien entendu que tous les aimants seront soudés et assemblés sur les piéces respectives avec de l'étain ou résines et auront de ce fait des petites incurvitées percées de plusieurs ou un trous ou usinée de forme concave intérieure sur leurs champs pour permettre leurs blocages entre eux aprés soudage, suivant fig A n°10 types 2 ou 3, ils seront suivant les cas et les possibilités de montage de forme en demi lune ou en plusieurs aimants individuel suivant suivant les types représentés 1 et (2 ou 3).

Le descriptif de l'aimant rep12 fig A n°14 a défini son rôle sur le piston rep1 fig A n°5 par rapport à l'aimant rep10 fig A n° 13 dans d'autres desciptifs ci dessus qui ont permis de définir leurs rôles respectifs l'un par rapport à l'autre.

Le descriptif de la pièce rep 14 fig A n° 15 à défini son rôle sur le piston rep1 fig A n°5 par rapport à l'aimant rep12 fig A n° 14 dans d'autres descriptifs ci dessus qui ont permis de définir leurs rôles respectifs l'un par rapport à l'autre.

Le descriptif de la pièce rep15 fig A n°16 à son importance capital, tout d'abord c'est une pièce en acier C 40 trempé, ayant un contact ponctuel rep16 avec les cames A,B,C et D rep30 fig A n°26 qui permet la liaison des commandes et mouvements entre l'arbre à cames rep28 fig A n°26 et le piston rep3 fig A n°7 définis dans d'autres descriptifs ci dessus qui ont permis de définir leurs rôles respectifs l'un par rapport à l'autre.

Le descriptif des segments fonte acier rep 17 fig A n°17, rep18 fig A n°18 et rep19 fig A n°19 assurent l'étanchéité et le guidage des différentes piéces et éléments qui sont en mouvement entre la chemise rep2 fig A n°1 à 4 et les pistons coulissant entre eux rep 3 et 1 fig A n°1 à 4.

Le descriptif de la bielle rep20 fig A n°20 n'a qu'une importance mécanique courante seul le respect de la lubrification par l'intermédiaire du rep21 de cette organe et de son axe rep24 fig A n°22 par rapport à une bague auto lubrifiante rep22 fig A n°21 qui doit être respecté, à partir du moment ou la bielle à fait l'objet d'une étude spécifique en fonction des efforts à fournir suivant chaque type de moteur, à titre indicatif le jonc extérieur rep21 fig A n°24 permettra l'arrêt en translation de l'axe rep24 fig A n°22.

Le descriptif de la piéce rep25 fig A n°23 vissé respectivement dans les taraudages rep73 fig A n°27 et rep 85 fig A n°30 permettent simplement de boucher ces orifices suite à un perçage rep84 et 74 au niveau de la culasse rep27 pour garantir et assurer le circuit de refroidissement.

Le descriptif de la fig A n°25 rep27 montre la coupe transversale de la culasse vue de face en coupe parcielle, ainsi que l'arbre à cames rep28 et le carter de culasse rep42 avec un joint rep40 fig A n°34 qui assurera l'étanchéité entre la culasse et le carter, l'arbre à cames rep28 supporte principalement un effort radial suivant les cames excentriques A,B,C et D rep30 avec un mouvement rotatif. Il sera supporté radialement par deux roulements à rouleaux coniques monté en opposition rep39 suivant les paliers rep29 et 31 fig A n°26 de l'arbre à cames et les bagues rep102 en acier C30 permettront le réglage du jeu de fonctionnement par usinage ou à l'aide de cales de réglage en clinquant en agissant sur leurs bagues coulissantes. L'arbre cannelé rep32 fig A n°26 recevra le moteur hydraulique ou électrique rotatif pas à pas qui sera lui même fixé et centré sur la culasse rep27 par les vis rep93 et les pieds de centrage rep37. La bride ammovible de culasse rep41 qui sera fixé et centré sur la culasse rep27 par l'intermédiaire des rep86,87,89 et 96 ( vis, perçage-lamages et pieds de centrage ). Cette bride assurera le démontage et le remontage de l'arbre à cames et du carter de culasse, ainsi que le positionnement et calage des roulements rep39. Les perçages rep91 et les lamages rep92 au nombre de dix permettront de fixer la culasse sur le bloc moteur par de long goujons filetés et écrous freins (serrage à la clé dynamométrique). Les vis rep97 sur la culasse et les écrous rep94 sur le carter rep42 permettront le serrage de ce dernier sur la culasse. Un bouchon rep43 fig A n°39 permettra de mettre à l'air libre la chambre du carter de culasse par l'intermédiaire d'un filtre. Un joint d'étanchéité plat positionné entre la partie plate du carter et de la culasse assurera l'étanchéité de ces deux éléments au serrage. Les chambres 1,2,3 et 4 de la culasse recevront tous les éléments mécaniques du moteur, et on voit apparaître les circuits de refroidissements rep 72,73,74,75, 78, 84 , 85 et 83 que l'on peut retrouver dans les fig A n°27,28,29 et 30. Il en est de même des rep 81 et 80, qui permet la liaison des circuits de refroidissements entre les cavités de chaque chambre. Il est défini aussi un circuit de vide par les rep 76 et 77 permettant la liaison et la communication de ce circuit entre les différentes chambres 1,2, 3 et 4, tous ces circuits seront reliés à une électro vanne trois voies, elle même en liaison avec les accus de stockage que la pompe à vide aura chargé et dont l'ouverture et fermeture de l'électro vanne trois voies sera données dans un espace temps bien précis du point mort haut accéléré (PMHA), mettant à l'air libre ce circuit en dehors de l'alimentation du circuit de vide quand l'électro vanne trois voies n'est pas actionnée. Pour ce qui est du rep79 fig A n°27,28,29 et 30, il correspond à une mise à l'air libre ou de vide de chaque chambre vers la chambre de sussion du piston rep1 fig A n°5 par l'intermédiaire des rep fig A n°5 perçage calibré très petit et rep 55,56 fig A n°6 de la chemise. Les orifices rep79 fig A n°27,28,29 et 30 sont reliés par l'intermédiaire de raccords en laitons et tuyaux cuivre vers l'électro vanne trois voies du circuit de vide actionnée à un moment bien précis du point mort bas accéléré (PMBA) pour amener une puissance complémentaire tel qu'un turbo compresseur, dés que cet espace temps est terminé, l'électro vanne trois voies n'est plus actionnée et elle met automatiquement ce circuit à l'air libre, il est bien entendu que les électro vannes trois voies des circuits de vide des points mort haut et bas accéléré sont indépendantes l'une de l'autre ne travaillant pas dans le même espace temps. La culasse sera en alliages d'alluminium moulés ENAB-43000(AISi10Mg) qui se moule, s'usine et se soude bien, convient en air salin, mais on peut choisir un autre type d'alluminium.

Le descriptif de l'arbre à came rep28 fig A n°26 montre sa simplicité de réalisation, il sera en acier GC40 moulé qui convient au traitement thermique avec trempe choix alternatif lorsqu'une haute résistance à l'usure est un critère déterminant, ce qui est le cas pour les cames excentriques rep30(A,B,C et D) qui seront en contact permanent et ponctuel avec la piéce rep16 fig A n°16 suivant un effort radial. Les rep29 et 31 sont les paliers qui recevront les roulements à rouleaux conique rep39 et seront réalisés par usinage, le rep32 représente l'embout cannelé qui recevra le moteur rotatif pour son entrainement, ce seront des cannelures à flancs paralléle de série forte véritable clavettes taillées dans l'arbre.

Le descriptif des fig A n°27,28,29 et 30 a été largement repris et a servi de soutien dans la réalisation, la conception et les explications techniques de la fig A n°25 rep27, dans la conception de la culasse et sera utile dans la reprise technique du moteur en vé ou en étoile, ou la conception de cette culasse rep27 fig A n°25 sera reconduit à l'identique et jumelée en vé avec deux culasses identiques moulées brutes de fonderie ensemble, seul le nombre de pistons varira suivant la conception du villebrequin, en conjuguant en alternance les mouvements des pistons en point mort haut ou bas, cela dit que l'on aura l'ensemble des pistons en point mort haut quand les pistons de l'autre culasse seront en point mort bas de manière à obtenir un équilibrage du moteur. Par la même on pourra obtenir et réaliser un montage de moteur dit en étoile de type en x, cela dit pour obtenir deux montages de deux culasses en vé montées en opposition soit quatre culasses reconduites à l'identique aussi bien techniquement que dans la conception, donc avec quatre culasses identiques moulées brutes de fonderie ensemble seul le nombre de pistons varira suivant la conception du villebrequin central en conjuguant en alternance les mouvements des pistons en point mort haut ou bas travaillant en alternance, cela dit que l'on aura un ensemble de pistons qui seront au point mort haut sur la première culasse quand son vis à vis opposé qui est la culasse numéro trois aura l'ensemble de ses pistons en point mort bas , ensuite quand l'ensemble des pistons seront au point mort haut sur la deuxiéme culasse numéro deux, son vis à vis opposé qui est la culasse numéro trois aura l'ensemble de ses pistons en point mort bas, ensuite quand l'ensemble des pistons de la culasse numéro trois seront au point mort haut son vis à vis opposé qui est la culasse numéro une aura l'ensemble de ses pistons en point mort bas, pour conclure un tour de villebrequin l'ensemble des pistons de la culasse numéro quatre seront au point mort haut, son vis à vis opposé qui est la culasse numéro deux aura l'ensemble de ses pistons en point mort bas. Ce cycle se répétera suivant chaque tour de villebrequin de la même maniére et en continue ou seul la vitesse de rotation variera suivant le ralenti, l'accéléré ou le super accéléré ou aussi en associant l'accéléré et le super accéléré c'est à dire l'énergie qui est le vide et les flux magnétiques propulseurs opposés fonctionant ensemble et en continue, suivant le principe du ralenti, de l'accéléré et du décéléré.

Le descriptif de la fig A n°31 rep37 montre les pieds de centrage qui permettront de positionner et centrer le moteur hydraulique ou électrique rotatif pas à pas par l'intermédiaire des taraudages rep93 dans la culasse rep27 servant à fixer ces moteurs, ils seront en acier calibré de cémentation traité HRC de type A goupilles cylindriques ISA8734.

Le descriptif de la fig A n°31 rep38 montrent les pieds de centrage qui permettront de positionner et centrer la bride rep41 fig A n°35 fixée sur la culasse rep27 fig A n°25, ils seront en acier calibré de cémentation traité HRC de type goupilles cylindriques à trou taraudé ISO8735.
Le descriptif de la fig A n°33 rep39 montre les deux roulements qui permettront le montage de l'arbre à cames rep28 sur la culasse rep27. Ces deux roulements seront montés sur les paliers rep29 et 31 de l'arbre à cames et supporteront principalement des efforts radiaux. Ce sera un montage en x de roulements à contacts oblique de type roulement à rouleaux coniques, le montage nécessite un réglage du jeu de fonctionnement, il doit être effectué en agissant sur les bagues coulissantes.Ils supportent des charges radiales et axiales relativements importantes pour des mécanismes précis fortement sollicités comme ici l'arbre à cames.

Le descriptif de la fig A n°34 rep40 montre le type de joint d'étanchéité monté lors de l'assemblage du carter fig A n°39 sur la culasse rep27. Ce joint sera un élastomére fluoré FKM de forme en u ou quadrilobe et il sera logé dans la rainure usinée rep90 sur la bride fig A n°35 rep90 et sur la culasse fig A n°25.

Le descriptif fig A n°35 rep41 correspond à la bride de culasse, elle sera usinée de manière à pouvoir la positionner, la centrer et la fixer par l'intermédiaire des rep 86, 87, 89( perçages, pieds de centrage, lamages) et les rep96 sur la culasse rep27 fig A n°25( taraudages pour vis de fixation ). Une fois la bride serrée sur la culasse on pourra réaliser seulement les alésages rep88 correspondant aux portées de roulements rep39 sur la bride et la culasse, ainsi que les rainurages rep90 sur la bride et la culasse qui recevront le joint d'étanchéité rep40 fig A n°34. Le montage des roulements nécessite un réglage du jeu de fonctionnement en agissant sur les bagues coulissantes des roulements par l'intermédiaire d'une cale acier usinée et définie suivant ce jeu de fonctionnement au montage de l'arbre à cames rep28 et qui sera placée en fond du logement et de l'alésage rep88. Cette bride rep41 sera dans la même matière que la culasse précisée dans le descriptif de la culasse fig A n°25 rep27.

Le descriptif des fig A n°36, 37 et 38 représente des vues de gauche, de droite et de dessus correspondant à la fig A n°25 de la culasse rep27, ces vues sont partielles et permettent de complémenter la compréhension de la fig A n°25 rep27 et des usinages qui recevront les pièces fonctionnelles de l'ensemble mécanique.

Le descriptif de la fig A n°39 rep 42 représente la conception et la vue du carter de culasse qui viendra se repporter sur la culasse rep27 fig A n°25 au dessus de l'arbre à cames. Le serrage sur la culasse sera assuré par huit vis suivant les perçages rep94 et les taraudages de la culasse rep97 fig A n°38. Un joint d'étanchéité plat de forme bien spécifique suivant le carter culasse rep42 sera en fibre de cellulose imprégnées et plastifiées à la gélatine ayant une bonne tenue aux huiles. Le carter sera aussi emboité sur la portée de joint rep90 sur la culasse rep27 et son joint rep40 fig A n°25 et 34 pour assurer l'étanchéité de l'huile interne vers l'extérieur.Une rampe de lubrification par arrosage amenée par un petit tuyau cuivre venant du circuit de la pompe à huile du moteur assurera respectivement la lubrification des cames A, B, C et D rep30 de l'arbre à cames rep27 fig A n°26 et des paliers rep29 et 31 qui recevront les roulements rep39 fig A n°25. Le carter recevra en sa position centrale sur un logement percé un bouchon rep43 fig A n°40 avec une mise à l'air libre qui sera doté d'un petit filtre à air. Le carter rep42 sera en alliage de zinc moulé de fonderie sous pression et de type Zamak 3.

Le descriptif de la fig A n°40 correspond à un bouchon plastique ( polymére+adjuvants+additifs, obtenu par moulage souspression ). Le bouchon mettra à l'air libre la chambre du carter de l'arbre à cames par l'intermédiaire d'un petit filtre à air et ce bouchon fera office de remplissage d'huile lors de la vidange ou de complément éventuel entre deux vidanges.

Le descriptif de la fig A n°41 montre un aimant à flux magnétiques propulseurs rep101, opposé à l'aimant rep4 fig A n°8. Il sera doté d'un filetage débouchant rep99 et sera vissé avec une clé à ergots suivant les deux trous percés rep 100 sur le filetage rep98 du piston rep3 fig A n°7. Les aimants rep101 et rep4 se repoussent mutuellement pour maintenir plaqué le piston rep3 fig A n°7 en contact ponctuel rep16 de la piéce rep15 fig A n°16 sur les cames A, B, C et D rep 30 de l'arbre à cames rep30 fig A n°26 en permanence suivant un effort suffisant par rapport au poids d'ensemble du piston rep3 fig A n°7 équipé de tous ces éléments mécaniques et des efforts.

Le descriptif de la fig A n°42 représente suivant le rep66 un bouchon qui viendra obstruer les perçages et taraudages rep73 et 74 fig A n°27 et les rep84 et 85 fig A n°27 et les rep84 et 85 fig A n°30 qui assureront le passage du liquide de refroidissement par les rep72 et 83 vers les cavités 1,2, 3 entre les chambres de la culasse et des chemises.

Le descriptif de la fig A n°43 représente suivant le rep102 les bagues de culasse et de serrage des bagues intérieures des roulements à rouleaux coniques rep39, elles seront en acier GC40.

Le descriptif suivant l'invention représenté dans les dessins d'ensemble fig B n°1 à fig B n°8 fait apparaître une autre application suivant un appareil monté sur un cycle à deux roues ou autre de ce type et utilisant aussi le procédé du moteur temporel à variation de vitesse, mais d'une conception plus simple, elle est appliquée pour permettre la motricité d'un cycle à deux roues ou d'autres types. Cette application est adaptée sur le corps du pédalier est transforme sa force et son mouvement transversal en un mouvement rotatif par l'intermédiaire d'une came excentrique sur l'axe du pédalier. Cette force est commandée par l'utilisateur par l'intermédiaire d'un levier de vitesse agissant sur un cable pour faire varier la vitesse du moteur qui viendra se conjuguer à l'effort de l'utilisateur sur le pédalier pour rendre la motricité du cycle à deux roues et plus l'utilisateur fait augmenter la vitesse en agissant sur le levier de vitesse plus les efforts qu'il fournit sur le pédalier diminuent, mais il peut à tout instant renverser le systéme et diminuer sa vitesse voir l'annuler en agissant de maniére inverse sur le levier de vitesse. Cette application est basée sur le même principe technique que le procédé évoqué dans le mode d'application des forces fig A n° 1 à fig A n°43. On se propose donc de faire un descriptif des différents éléments techniques et mécaniques du mode d'application présenté dans les fig B n°1 à fig B n°24 pour expliquer ce mode d'appareil.

Le descriptif de la fig B n°09 rep1 montre une pièce en acier GC40 trempé, appelée came, qui aura pour rôle de transmettre le couple et les forces que l'axe fig B n°12 rep5 lui transmet en translation et qu'elle va transformer en forces rotatives en agissant sur la came excentrique rep3 de l'axe de pédalier fig B n°10 rep2 par l'intermédiaire du logement en forme de lumiére rep20 fig B n°9. L'axe de transmission rep5 fig B n°12 est vissé dans le taraudage rep21 de la came rep 1 et il est sécurisé en arret translation par une goupille, enfoncée dans le perçage rep22.

Le desdriptif de la fig B n°10 représente la partie la plus importante à créer sur l'axe du pédalier qui est la came excentrique rep3, cette came permettra d'emmagaziner et de recevoir l'énergie des forces transmises et transformées par l'axe fig B n°12 rep5 et la came fig B n°9 rep1, la came rep3 sera en acier GC40 trempé.

Le descriptif de la fig B n° 11 rep4 montre une vue partielle en coupe du corps recevant l'axe de pédalier rep2 fig B n°10 et la came rep1 fig B n°9. Elle sera vissée et montée au scelle roulement sur le cadre du vélo et préallablement arrêté en translation par des goupilles. Elle pourra aussi faire l'objet de la création d'un nouveau cadre de vélo ayant ce corps rep4 incorporé au cadre à l'emplacement du pédalier et donc moulé à l'ensemble. Ce corps rep4 sera dans la même matière que le cadre lui même, donc l'embout fileté rep23 sera soit soudé brasé ou serti à chaud sur le corps rep4. Le filetage de l'embout rep23 recevra le corps de guidage rep6 fig B n°13 de l'axe de transmission rep5 fig B n°12.

Le descriptif fig B n°12 rep5 représente l'axe de transmission mouvement axial qui va jouer un rôle principal dans le système. Cet axe sera en matière thermoplastique de type polytétrafluoréthyléne de symbole FTFE, en téflon ou dérivé de ce type. Il sera vissé suivant le filetage à l'intérieur du taraudage rep21 de la came rep1 fig B n°9, le perçage rep26 recevra une goupille d'arret pour sécuriser en plus l'arret de l'axe rep5 sur la came rep1, elle sera enfoncée de même par le perçage rep22 de cette même came. La portée cylindrique rep27 coulissera et sera guidée par le corps de guidage rep6 fig B n°13, la portée cylindrique rep28 aura une position bien définie et calculée de sa longueur, elle recevra quatre piéces mécaniques rep8, 9, et 10 qui seront assemblées et serrées ensemble sur la portée rep28 par l'intermédiaire de la bague de serrage rep10 fig B n°17 dotée d'un perçage rep41, qui recevra suivant le perçage rep30 de l'axe une goupille d'arret pour sécuriser en plus l'arret et le blocage de l'assemblage sur la portée rep28 de l'axe rep5, l'assemblage sur la portée rep28 sera consus de deux aimants rep9 à flux magnétiques propulseurs, opposés aux flux magnétiques propulseurs des aimants rep 11 fig B n°18 et rep12 fig B n°19 qui seront mobiles en translation, les aimants rep9 seront fixes sur l'axe rep5, qui lui sera mobile en translation avec plus ou moins de réactivité et de puissance suivant la variation de la distance de l'écart entre les aimants rep11 et rep12 provoquée par la manipulation de l'utilisateur du vélo sur le levier de vitesse qui provoque une action par l'intermédiaire du cable acier rep18 et de la pièce d'attelage rep19 vouée à faire éloigner ou rapprocher les aimants rep11 et 12 entre eux qui entraine par la même une augmentation ou une diminution de la poussée de propulsion et opposée sur les aimants rep9 qui provoque par la même réaction un déplacement transversal de l'axe rep5 tendant à diminuer ou augmenter, voir de s'annuler suivant le réglage et la demande de l'utilisateur, l'axe rep5 aura donc des mouvements d'aller et retour plus ou moins rapide qui agiront sur la came excentrée rep3 fig B n°10 de l'axe de pédalier rep2 qui permet de transformer un mouvement transversal en rotatif. Une bague entretoise intercalaire rep8 fig B n° 15 positionnée sur la portée rep28 de l'axe rep5 entre les deux aimants rep9 pour les maintenir dans une position et à un écart voulu et bien défini par rapport aux aimants rep11 et 12.

Le descriptif de la fig B n°13 rep6 représentant le corps de guidage de l'axe de transmission qui a aussi un rôle prédominant dans le mécanisme. Ce corps de guidage sera en matière polytétrafluoréthyléne FTFE, en téflon ou dérivé de ce type, il sera vissé suivant le filetage rep31 sur l'embout taraudé rep23 fig B n°11, deux goupilles d'arret de type mécanindus enfoncées suivant les perçages rep32 du corps de guidage rep6 et les perçages rep45 du corps de pédalier et de came rep4 fig B n° 11 permettront un blocage et une sécurité d'arret supplémentaire. L'alésage intérieur rep34 permettra le guidage en translation de l'assemblage mécanique de l'axe rep5 fig B n°12. L'alésage extérieur rep33 assurera le montage mécanique des piéces rep12 fig B n°19, rep17 fig B n°22, rep11 fig B n°18 et rep7 fig B n°14, le filetage rep35 permettra de visser suivant le filetage rep38 la bague de serrage rep7 fig B n°14 dotée d'un perçage rep37, cette bague servira aussi de protection et d'étanchéité du mécanisme de l'axe de transmission rep5 fig B n°12 dans le perçage du corps de guidage rep36 et dans le perçage rep37 de la bague rep7 fig B n°14 ou sera enfoncé une goupille d'arret de type mécanindus. Cette bague de serrage rep7 fig B n°14 permettra et servira de butée et de positionnnement bien définis des aimants à flux magnétiques propulseurs rep11 fig B n°18 et rep12 fig B n°19 sous l'impulsion du ressort de compression rep17 fig B n°22 qui aura tendance à les pousser en butée sur l'épaulement du corps de guidage rep6 et sur la portée de la bague de serrage rep7 fig B n°14. Le câble acier rep18 et l'étrier rep19 fig B n°23 sous l'effet de l'utilisateur par manipulation sur le levier de vitesse aura pour rôle de rapprocher ou d'éloigner, l'un par rapport à l'autre les aimants rep 11 fig B n°18 et rep12 fig B n°19 suivant le guidage transversal sur l'alésage extérieur rep33 fig B n°13. Ces deux aimants suivant la position donné sur l'alésage extérieur rep33 auront pour effet de faire varier la vitesse sous l'effet des flux magnétiques propulseurs exercés sur les aimants rep9 fig B n° 16 ayant une position fixe et bien définie sur l'axe rep5 fig B n° 12 au niveau de la portée cylindrée rep38. L'effet propulseur des aimants s'exercera plus ou moins fort et avec puissance suivant la position de chevauchement transversal de ces aimants l'un par rapport à l'autre et de son vis à vis, plus ils se chevaucheront plus l'effet de poussée sera grand, mais il faut toujours un chevauchement légérement négatif dirigé de l'aimant voulu pour transmettre le mouvement demandé de translation à la piéce voulu en action par rapport aux aimants opposés et fixes, ici sur l'axe rep5 fig B n°12, il est important que le chevauchement entre les aimants opposés en vis à vis ne dépasse pas les ¾ de leurs surfaces mécaniques utilisées pour la poussée.

Le descriptif de la fig B n°14 représente la bague de serrage rep7, sur l'embout de l'axe rep6 fig B n°13, elle sera vissée par l'intermédiaire du filetage rep38 sur l'embout fileté rep35 du corps de guidage rep6 fig B n°13, les perçages rep37 permettront d'enfoncer une goupille d'arret mécanindus pour sécuriser l'arret. Cette bague aura un rôle déterminant dans la protection et l'étanchéité contre les impurtés extérieures et servira de butée et de positionnement bien définis des aimants rep11 fig B n° 18 et rep 12 fig B n° 19 pour le bon fonctionnement du systéme mécanique et technique joué par cette bague qui est défini très précisément dans le descriptif fig B n°13 rep6. Cette bague sera réalisée dans la même matiére que le corps de guidage en polytétrafluoréthyléne de symbole FTFE, en téflon ou tout dérivé de même nature, le principal est de garder une compatibilité mécanique entre les différentes pièces et matières respectives ainsi qu'une légéreté de par ce mode d'application.

Le descriptif de la fig B n°15 représente l'entretoise intercalaire rep8 positionnée entre les deux aimants rep9, l'ensemble étant monté sur l'axe rep5 fig B n°12, elle permet de définir le positionnement de ces deux aimants avec précision par rapport à leur vis à vis rep11 fig B n°18 et rep12 fig B n°19 pour ne pas nuire au bon fonctionnement du systéme. Cette entretoise sera dans la même matiére que l'axe rep5 fig B n°12 soit du polytétrafluoréthyléne FTFE, en téflon ou tout autre dérivé de même type.

Le descriptif de la fig B n°16 représente les deux aimants rep9 montés de part et d'autre de l'entretoise intercalaire rep8 fig B n°15, l'ensemble de ces piéces étant montées sur l'axe rep5 fig B n°12. Ces deux aimants auront un effet de flux magnétiques propulseurs, opposés aux deux aimants rep11 fig B n°18 et rep12 fig B n°19 de manière que leurs forces agissent l'un par rapport à l'autre pour transformer un mouvement transversal en rotatif, suivant leurs positions données par l'utilisateur pour diminuer ou accélérer sa vitesse.

Le descriptif de la fig B n°17 fait apparaître la bague de serrage rep10 permettant d'assurer l'assemblage des éléments mécaniques de l'axe rep5 fig B n°12. Le filetage rep40 permettra de visser la bague rep10 sur l'axe rep5 fig B n°12 par l'intermédiairede son filetage rep29 afin de permettre le serrage de l'ensemble des piéces rep9 fig B n°16 et rep8 fig B n°15, deux perçages rep41 permettront d'enfoncer une goupille d'arret mécanindus pour éviter que la bague rep10 se déserre, deux trous percés rep42 permettront d'assurer le serrage de la bague rep 10 avec une clé à ergots. Cette bague sera dans la même matière en polytétrafluoréthyléne FTFE, en téflon ou un autre dérivé de ce type.

Le descriptif de la fig B n° 18 représente l'aimant rep 11 positionné au repos sous l'action du ressort de compression rep17 contre la bague rep7 fig B n°14, l'aimant exercera une propulsion par son flux magnétique opposé, sur son vis à vis l'aimant mobile rep11 sous l'action du cable acier rep18 et l'étrier rep19 fig B n°23 manoeuvrés par l'utilisateur sous l'effet d'un levier de vitesse, dont les réglages seront réalisés pour que l'aimant rep11 chevauche seulement les ¾ de son vis à vis rep9 de maniére à provoquer la propulsion dans le sens ou le mouvement est attendu pour assurer le mouvement en translation qui va se transformer en rotatif Deux plots acier seront vissés sur l'aimant rep11, ils seront percés et lamés et une fente sera réalisé sur le plot dans le sens de la longueur du perçage lamage, de maniére à recevoir et laisser passer le cable acier rep18 par la fente pour se loger dans le lamage qui aura été réalisé, sous l'effet d'une traction du cable acier on obtient le déplacement de l'aimant rep11.

Le descriptif de la fig B n°19 représente l'aimant rep12 positionné au repos sous l'action du ressort de compression rep17 contre l'épaulement du corps de guidage rep6 fig B n°13, l'aimant exercera une propulsion par son flux magnétique opposé, sur son vis à vis l'aimant rep9 fig B n° 16, son fonctionnement technique et mécanique est le même que celui décrit lors du descriptif de la fig B n°18 rep11 à l'exception des deux plots acier rep44 qui seront vissés sur l'aimant rep12, ils auront la forme d'un diabolo pour loger, maintenir et guider le cable acier rep 18 fig B n°23 qui sera actionné par la traction de l'étrier rep19 fig B n°23 manoeuvré par l'utilisateur sous l'effet d'un levier de vitesse que l'on peut trouver sur tous les vélos. L'action du cable acier rep 18 fig B n°23 à pour effet, tel que monté et attelé sur les deux aimants rep 11 fig B n°18 et rep12 fig Bn°19 de les rapprocher uniformément et en même temps l'un de l'autre sous l'effet du ressort de compression rep17 fig B n°22. L'action du cable acier sur ces deux aimants permet donc de faire varier la vitesse, par déplacement des aimants, en faisant varier le chevauchement transversal avec ces aimants vis à vis rep9 fig B n°16 qui provoquera une plus ou moins grande propulsion du mouvement suivant l'importance de ce chevauchement sans jamais dépasser les ¾ du recouvrement. Les plots rep44 seront en acier GC40 trempé de maniére qu'ils ne s'usent pas trop vite sous l'effet du frottement du cable.

Le descriptif de la figB n°22 montre un ressort de compression rep 17 il sera monté comme deja décrit antérieurement entre les deux aimants rep11 fig B n°18 et rep12 fig B n°19 sur le corps de guidage rep6 fig B n°13, il aura pour effet d'agir sur les deux aimants de maniére à exercer une pression suffisante pour les plaquer à l'état repos contre la portée de la bague rep7 fig B n°14 et contre l'épaulement du corps de guidage rep6 fig B n°13, dés que l'action du cable acier s'annulera ou passera d'un état à l'autre progressivement, c'est à dire d'une vitesse maximun à minimun ou inversement. Ce ressort sera en acier dur tréfilé dit corde à piano.

Le descriptif des fig B n°20 rep14 et fig B n°21 rep15 correspondent à l'état d'application technique, décrites dans les figures d'ensemble fig B n°1 à 4, la seule différence technique, c'est que le déplacement des aimants rep14 et 15 s'exercera par l'action et la commande de deux cables acier indépendant. On ne reprendra pas le descriptif de cette application.

## Revendications

1. Procédé de moteur temporel à variation de vitesse, doté de tous les éléments fonctionnels pour permettre son fonctionnement, mais dont la particularité principal est portée sur le dispositif dynamique au niveau des pistons qui permet l'entrainement du villebrequin, transformant un mouvement transversal en rotatif sans l'utilisation d'un combustible. On a donc un procédé de deux pistons plongeurs (rep1 et 3 fig A n°1 à 4) coulissant l'un dans l'autre, dans une chemise (rep2 fig A n°1 à 4), montée dans une culasse (rep27 fig A n°27), dotés de segments (rep17, 19 et 18 fig A n°1 à 4) qui assurent le guidage et l'étanchéité des pistons entre eux, l'arbre à cames (rep28 fig A n°26) est doté de cames excentriques en ligne (A, B, C et D rep30) pour lequel correspond un nombre de pistons en ligne identiques, il est commandé par un moteur rotatif pas à pas qui transmet et défini les positions bien étudiées du piston (rep3 fig A n°7) avec qui il est en contact permanent par la pièce (rep15 fig A n° 16) suivant les points mort haut et bas (PMH et PMB) dont dépendra la position du deuxième piston (rep1 fig A n°5) durant le fonctionnement et les différentes phases de travail pour transmettre son énergie et permettre la rotation du villebrequin par l'intermédiaire d'un embiellage, **caractérisé en ce qu'**il est prévu plusieurs aimants disposés de part et d'autre de la chemise, de la culasse et des pistons, dont les aimants à flux magnétiques propulseurs opposés (rep4, 7,10 et 8 fig A n°1 à 4) agissent sur leurs vis à vis aimants (rep101, 12, 6 et 9 fig A n°1 à 4) de manière à rendre fonctionnel et dynamique le système, en respectant judicieusement toutes les positions des aimants par rapport aux phases de travail du moteur, aux fins de générer les forces résultantes et composantes des flux magnétiques propulseurs opposés suivant les pôles des aimants qui se repoussent entre eux. Il est bien entendu que les réglages seront réalisés de manière que les aimants se chevauchent seulement sur les ¾ de leurs vis à vis aimant à pôles opposés, de maniére à provoquer la propulsion dans le sens ou le mouvement est attendu pour assurer le mouvement en translation qui va se transformer en mouvement rotatif. Ce chevauchement varie continuellement passant d'un état minimun à maximun, ce qui fait varier les forces engendrées par les aimants sur la vitesse du moteur. Des aimants agiront suivant des flux magnétiques propulseurs opposés dans l'axe des pistons (rep10 et 12 fig A n°1 à 4) qui engendront des forces axiales directes, d'autres aimants (rep101, 4, 7, 6, 8 et 9 fig A n°1 à 4) agiront radialements suivant des flux magnétiques propulseurs opposés qui engendront suivant leurs principes de montages et de fonctionnement des forces radiales qui se transformeront en forces axiales de propulsion.

2. Moteur temporel à variation de vitesse selon la revendication 1 **caractérisé en ce que** le procédé présenté dans les fig A n°1 à 4 et fig A n°25 dont la conception et les explications techniques de la fig A n°25 rep27 de la culasse seront aussi utiles dans la reprise technique du moteur en vé ou en étoile, ou la conception de cette culasse (rep27 fig A n°25) sera reconduit à l'identique et jumelée en vé avec deux culasses identiques moulées brutes de fonderie ensemble, seul le nombre de pistons varira suivant la conception du villebrequin, en conjuguant en alternance les mouvements des pistons en point mort haut ou bas (PMH ou PMB), cela dit que l'on aura l'ensemble des pistons en point mort haut (PMH) quand les pistons de l'autre culasse seront en point mort bas (PMB) de manière à obtenir un équilibrage du moteur. Ce procédé de deux pistons plongeurs (rep1 et 3 fig A n°1 à 4) donne la possibilité et l'avantage d'utiliser une course plus importante des pistons, répercutée sur les bielles et le villebrequin, qui bénéficient de deux types de propulsion en point mort haut et bas (PMH et PMB), ce qui permet par cette longue course et ces propulsions, que dans un tour de villebrequin, la propulsion en point mort bas (PMB) agit sur les bielles quand celles ci ont dépassé ce point mort bas (PMB) aprés la moitié d'un tour de villebrequin donc quand les bielles et les pistons remontent, donc phase de travail vers point mort haut (PMH) et il en est de même quand les bielles arrivent en point mort haut (PMH) la propulsion agit quand les bielles ont dépassé la moitié d'un tour de villebrequin au moment ou les bielles et les pistons commencent à descendre, donc phase de travail vers point mort bas (PMB), cela fait l'objet de calculs et d'études judicieux en fonction de la cylindré, de la puissance et de la conception de chaque moteur. Par la même on pourra obtenir et réaliser un montage de moteur dit en étoile de type en x, cela dit pour obtenir deux montages de deux culasses en vé montées en opposition soit quatre culasses reconduites à l'identique aussi bien techniquement que dans la conception, donc avec quatre culasses identiques moulées brutes de fonderie ensemble, seul le nombre de pistons varira suivant la conception du villebrequin central en conjuguant en alternance les mouvements des pistons en point mort haut ou bas (PMH ou PMB) travaillant en alternance, cela dit que l'on aura un ensemble de pistons qui seront au point mort haut (PMH) sur la premiére culasse quand son vis à vis opposé qui est la culasse numéro trois aura l'ensemble de ses pistons en point mort bas (PMB) et ainsi de suite jusqu'à obtenir un tour de villebrequin.

3. Moteur temporel à variation de vitesse selon la revendication 1 ou 2 , **caractérisé en ce que** l'aimant qui engendre des forces axiales directes sur le piston (rep12 fig A n°14 et fig A n°1 à 4) est perçé en son milieu par un trou calibré déterminé suivant la cylindré et la puissance du moteur, il est en liaison avec la chambre de sussion du piston et un autre trou calibré en position basse de ce piston (rep47 fig A n°5 et fig A n°1 à 4), ils assureront en association avec l'énergie générée par les aimants (rep101, 4, 10, 12, 6, 7, 8 et 9 fig A n°1 à 4) une autre énergie par le passage de ces trous calibrés suivant le principe du vide, qu'une pompe à vide charge dans des accus, cette énergie agira en point mort haut ou bas accéléré(PMHA ou PMBA), pour fournir une énergie complémentaire de puissance telle qu'un turbo compresseur. Ces deux énergies peuvent travailler en jumelage continu dans toutes les phases de fonctionnement du moteur et la pompe à vide, peut tourner aussi indépendament du moteur, donc fournir en continu son énergie jour et nuit.On en déduit une autonomie, une puissance, une rentabilité, une fiabilité et un rendement d'un niveau très élevé et satisfaisant pour un moteur fonctionnant sans combustible qui fournit aussi d'autres énergies disponibles de par son circuit de refroidissement et la conception de sa chemise, source d'énergie transmise et fournie par le fonctionnement de tous les éléments mécaniques par frottements, translations et rotations.

4. Moteur temporel à variation de vitesse selon les revendications 2 ou 3, **caractérisé en ce que** le circuit de refroidissement tel qu'il est élaboré ( rep72, 73, 74, 75, 78, 83, 84, 85 fig A n°25 et 53 ,54 ,80, D, E et F fig A n°1 à 4) utilisant une huile glycolé avec un % d'eau ou une huile très fluide, permettra d'assurer en partie la lubrification des segments de guidage et d'étanchéité ( rep 17, 18 et 19 fig A n°1 à 4), le refroidissement de tous les éléments mécanique en mouvements du à la vitesse et au frottement et d'un autre coté d'emmagaziner au passage les calories thermiques dégagés par les éléments mécaniques de maniére à les stocker et les utiliser pour une production d'eau chaude sanitaire ou pour un chauffage central dans une habitation ou autres bâtiments industriels, hopitaux ect....

5. Moteur temporel à variation de vitesse selon la revendication 4, **caractérisé en ce que** ce procédé à de multiple possibilité d'applications diverses, il fournit un travail, une puissance et une force de sortie, sans brûler sa propre énergie ou une matiére premiére, il fonctionne sans combustible et peut entrainer n'importe quelle machine ou appareil qui demandent une énergie extérieure pour fonctionner , on peut citer à titre d'exemple, un compresseur pour l'air, une pompe à vide, hydraulique ou à eau, un groupe électrogéne, un alternateur et une éolienne pour fournir de l'électricité ou bien des domaines dont la motricité actuelle telle que les trains, les auto-cars ou bien les tramways adopteraient sans probléme l'application du moteur temporel à variation de vitesse qui fait l'objet de ces applications. Il y a un vaste champs d'action comme ici présent concernant l'application d'un appareil présenter dans les fig B n°1 à 8 et qui peut être monté sur un cycle à deux roues ou autre de ce type. Tous ces modes d'applications de la nouvelle génération résident dans l'amélioration des énergies renouvelables et écologiques de maniére à contribuer et à lutter contre le réchauffement de la planéte et à la protection de la terre.

6. Moteur temporel à variation de vitesse selon la revendication 5, **caractérisé en ce que** cet appareil mis en oeuvre et présenté dans les fig B n°1 à 8 et monté ou adapté sur un cycle à deux roues ou autre modèle de ce type pour permettre leur motricité, présentant une application de cet appareil ou on utilise seulement les principes techniques de bases des flux magnétiques propulseurs opposés sans aucune autre énergie de soutien, cet appareil est adapté sur le corps du pédalier est transforme sa force et son mouvement transversal en un mouvement rotatif par l'intermédiaire d'une came excentrique sur l'axe du pédalier ( rep3 fig B n°10 et rep20 fig B n°09 ). Cette force est commandée par l'utilisateur par l'intermédiaire d'un levier de vitesse agissant sur un cable (rep18 et 19 fig B n°23) de manière à faire varier la vitesse du moteur qui viendra se conjuguer à l'effort de l'utilisateur sur le pédalier et plus l'utilisateur fait augmenter la vitesse en agissant sur le levier de vitesse plus les efforts qu'il fournit sur le pédalier diminuent, mais il peut à tout instant renverser le système et diminuer sa vitesse voir l'annuler en agissant de maniére inverse sur le levier de vitesse. Cette application est basée sur le même principe technique que le procédé évoqué dans le mode d'application des forces fig A n°1 à fig A n°43.

7. Cet appareil à variation de vitesse selon la revendication 6, **caractérisé en ce qu'**il sera consus de deux aimants (rep9 fig B n°16) à flux magnétiques propulseurs, opposés aux flux magnétiques propulseurs des aimants (rep11 fig B n°18 et rep12 fig B n°19) qui seront mobiles en translation et dont les pôles opposés se repousseront, les aimants (rep9 fig B n°16) seront fixes sur l'axe (rep5 fig B n°12), qui lui sera mobile en translation avec plus ou moins de réactivité et de puissance suivant la variation de la distance de l'écart entre les aimants (rep11 fig B n° 18 et rep12 fig B n°19) provoquée par la manipulation de l'utilisateur du vélo sur le levier de vitesse qui provoque une action par l'intermédiaire du cable acier (rep18 fig B n°23) et de la piéce d'attelage (rep19 fig B n°23) vouée à faire éloigner ou rapprocher plus ou moins les aimants (rep11 fig B n° 18 et 12 fig B n°19) entre eux qui entraine par la même une augmentation ou une diminution de la poussée de propulsion et opposée sur les aimants (rep9 fig B n°16) qui provoque par la même réaction un déplacement transversal de l'axe (rep5 fig B n°12) tendant à diminuer ou augmenter, voir de s'annuler suivant le réglage et la demande de l'utilisateur, l'axe (rep5 fig B n°12) aura donc des mouvements d'aller et retour plus ou moins rapide qui agiront sur la came excentrée (rep3 fig B n°10) de l'axe de pédalier (rep2 fig B n°10) qui permet de transformer un mouvement transversal en mouvement rotatif. Une bague entretoise intercalaire (rep8 fig B n°15) positionnée sur la portée rep28 de l'axe rep5 entre les deux aimants (rep9 fig B n°16) de maniére à les maintenir dans une position et à un écart voulu et bien défini par rapport aux aimants (rep11 fig B n°18).

8. L'appareil considéré selon la revendication 7, **caractérisé en ce qu'** un cable acier (rep18 fig B n°23) et l'étrier (rep19 fig B n°23) sous l'effet de l'utilisateur par manipulation sur le levier de vitesse aura pour rôle de rapprocher ou d'éloigner, l'un par rapport à l'autre les aimants (rep11 fig B n°18 et rep12 fig B n°19) suivant le guidage transversal sur l'alésage extérieur (rep3 3 fig B n°13). Ces deux aimants suivant la position donné sur l'alésage extérieur (rep33 fig B n°13) auront pour effet de faire varier la vitesse sous l'effet des flux magnétiques propulseurs exercés sur les aimants (rep9 fig B n°16) ayant une position fixe et bien définie sur l'axe (rep5 fig B n°12) au niveau de la portée cylindrée rep38. L'effet propulseur des aimants s'exercera plus ou moins fort et avec puissance suivant la position de chevauchement transversal de ces aimants l'un par rapport à l'autre et de son vis à vis, plus ils se chevaucheront plus l'effet de poussée sera grand, mais il faut toujours un chevauchement légérement négatif dirigé de l'aimant voulu de maniére à transmettre le mouvement demandé de translation à la piéce voulu en action par rapport aux aimants opposés et fixes, ici sur l'axe (rep5 fig B n°12).

## Revendications modifiées

### Revendications modifiées conformément à la règle 137(2) CBE.

**1.** Procédé de moteur temporel à variation de vitesse, sous l'action d'une pompe à vide et aimants permanent de type, néodyme au fer bore ou samarium cobalt, ces aimants sont inaltérables, résistent à des température de 300° et la mécanique du moteur sera usée avant les aimants, qui ne perdent pas de leurs puissance et efficacité durant une vie d'homme, en respectant les règles de fonctionnements. La particularité de ce moteur et qu'il n'y a plus de soupape, plus de distribution, plus de cames angulaire décalées suivant l'ordre d'allumage sur l'arbre à cames, seulement des cames en ligne avec un point haut et bas, suivant le nombre de pistons. L'action du vide se conçoit suivant le même principe technique décrit pour le moteur hybride, la seule différence, c'est que l'action du vide en point mort haut sur le piston principal se fait par un orifice placé sur la calotte ou en position haute du piston plongeur pour permettre à ce dernier d'être toujours plaqué en contact permanent sur la came de l'arbre à cames, en complément de l'action des aimants qui jouent le même rôle sur le piston plongeur, ceci pour ne pas contrarier le fonctionnement. Ce dispositif dynamique des pistons permet l'entraînement du vilebrequin, transformant un mouvement transversal en rotatif. On a donc un procédé de deux pistons plongeurs (rep1 et 3 fig. A n° 1 à 4), l'un étant le piston relié à l'embiellage et le vilebrequin et l'autre piston dit plongeur, en contact permanent avec la came de l'arbre à cames qui permet un mouvement uniformément ralenti, accéléré, décéléré ou nul, il fait donc varier la vitesse par son action direct sur le piston plongeur. Cet arbre à cames peut être doté en bout pour son commandement, d'un diviseur manuel, d'un moteur pas à pas rotatif électrique ou hydraulique, il est doté de cames suivant le nombre de pistons en ligne, en vé, ou en étoile du moteur, ces cames ont un point haut et un point bas de came, dit zéro, qui correspond à une vitesse ou un type de mouvement nul. Suivant la position entre les deux, cela correspond à un mouvement uniformément accéléré ou décéléré suivant le sens de rotation de l'arbre à cames. Ces deux pistons coulissant l'un dans l'autre, dans des chemises (rep2 fig. A n° 1 à 4), montées dans une culasse (rep27 fig. A n°27), dotés de segments (rep17, 19 et 18 fig. A n° 1 à 4) qui assurent le guidage, le graissage et l'étanchéité des pistons entre eux, l'arbre à cames (rep28 fig. A n°26) est doté de cames excentriques en ligne (A, B, C et D rep30) pour lequel correspond un nombre de pistons en ligne identiques, il est commandé par un diviseur, qui transmet et défini les positions bien étudiées du piston (rep3 fig. A n°7) avec qui il est en contact permanent par la pièce (rep 15 fig. A n°16) suivant les points mort haut et bas (PMH et PMB) dont dépendra la position du deuxième piston (rep1 fig. A n°5) durant le fonctionnement et les différentes phases de travail pour transmettre son énergie. Voyons maintenant la disposition des aimants et leurs rôles dans le système en conjugaison avec le vide. Ces aimants sont disposés sur la circonférence des diamètres des chemises de la culasse en position supérieure et inférieure, des diamètres extérieurs et intérieurs, supérieurs du piston plongeur et des diamètres du piston principal d'embiellage en position supérieure et inférieure de ce dernier, des aimants percés au centre, sont aussi placés sur la calotte intérieure du piston plongeur, ainsi que sur la calotte supérieure du piston principal d'embiellage, **caractérisé en ce qu'**il est prévu des aimants à flux magnétiques propulseurs opposés (rep4, 7,10 et 8 fig. A n° 1 à 4) qui agissent sur leurs vis à vis aimants (rep101, 12, 6 et 9 fig. A n° 1 à 4) de manière à rendre fonctionnel et dynamique le système, en respectant judicieusement toutes les positions des aimants par rapport aux phases de travail du moteur, aux fins de générer les forces résultantes et composantes des flux magnétiques propulseurs opposés suivant les pôles des aimants qui se repoussent entre eux. Tous les aimants sont placés à une position déterminée dans le concept technologique de manière à travailler avec son vis-à-vis en opposition de flux magnétique dans chaque phase de fonctionnement en position PMH ou PMB, suivant les périodes de ralenti, d'accélération ou décélération, donné par la position du piston plongeur, qui est commandé par l'arbre à cames, cela permet de faire varier le chevauchement transversal des aimants, plus ou moins, générant ainsi un effort de poussée transversale, plus ou moins puissant, faisant varier de la sorte la vitesse de rotation du moteur, ce dernier faisant tourner une pompe à vide qui restitue son énergie, l'énergie fourni à la pompe à vide pour tourner, peut provenir d'une source extérieur pouvant être branchée sur du 230V, alimentée par une batterie et un transfos, des capteurs solaires ou par une poulie limiteur de couple qui l'entraîne par un élément extérieur. Cette pompe à vide restitue son énergie de la même manière que le moteur hybride décrit ci-dessus, en chargeant l'énergie généré par la pompe à vide dans un réservoir de vide. L'action du vide joue la aussi le rôle de turbo compresseur, mais l'inertie que l'action du vide donne aux pistons moteur en phase finale du PMH et PMB avant de s'annuler, permet d'amener le piston principal correspondant, avec ces différents aimants en phase d'opposition des flux magnétiques pour permettre ensuite l'éjection du piston principal, sous l'effet de leurs poussées opposées et transversales. Il est bien entendu, est très important, que les aimants positionnés sur les alésages au niveau des chemises et opposés au flux magnétique de ceux positionnés sur le piston, soient du double de longueur des aimants du piston pour permettre, une poussée avec un maximum de rendement et de puissance, sans trop de perte d'énergie et il va de soit qu'une carte de gestion électronique, gérera l'ensemble des mouvements, des temporisations et temps d'ouverture des électrovannes du circuit de vide et d'air libre, commandé par les capteurs détectants les informations de commandement sur le volant moteur. Les réglages seront réalisés de manière que les aimants se chevauchent seulement sur les ¾ de leurs vis à vis aimant à pôles opposés, de manière à provoquer la propulsion dans le sens ou le mouvement est attendu pour assurer le mouvement en translation qui va se transformer en mouvement rotatif. Ce chevauchement varie continuellement passant d'un état minimum à maximum, ce qui fait varier les forces engendrées par les aimants et le vide sur la vitesse du moteur. Des aimants agiront suivant des fluxmagnétiques propulseurs opposés dans l'axe des pistons (rep10 et 12 fig. A n° 1 à 4) qui engendreront des forces axiales directes, d'autres aimants (rep101, 4, 7, 6, 8 et 9 fig. A n° 1 à 4) agiront radialement suivant des flux magnétiques propulseurs opposés qui engendreront suivant leurs principes de montages et de fonctionnement des forces radiales qui se transformeront en forces axiales de propulsion.

**2.** Moteur temporel à variation de vitesse selon la revendication 1 **caractérisé en ce que** le procédé présenté dans les fig. A n° 1 à 4 et fig. A n°25 dont la conception et les explications techniques de la fig. A n°25 rep27 de la culasse seront aussi utiles dans la reprise technique du moteur en vé ou en étoile, ou la conception de cette culasse (rep27 fig. A n°25) sera reconduit à l'identique et jumelée en vé avec deux culasses identiques moulées brutes de fonderie ensemble, seul le nombre de pistons variera suivant la conception du vilebrequin, en conjuguant en alternance les mouvements des pistons en point mort haut ou bas (PMH ou PMB), cela dit que l'on aura l'ensemble des pistons en point mort haut (PMH) quand les pistons de l'autre culasse seront en point mort bas (PMB) de manière à obtenir un équilibrage du moteur. Ce procédé de deux pistons plongeurs (rep1 et 3 fig. A n° 1 à 4) donne la possibilité et l'avantage d'utiliser une course plus importante des pistons, répercutée sur les bielles et le vilebrequin, qui bénéficient de deux types de propulsion en point mort haut et bas (PMH et PMB), ce qui permet par cette longue course et ces propulsions, que dans un tour de vilebrequin, la propulsion en point mort bas (PMB) agit sur les bielles quand celles ci ont dépassé ce point mort bas (PMB) après la moitié d'un tour de vilebrequin donc quand les bielles et les pistons remontent, donc phase de travail vers point mort haut (PMH) et il en est de même quand les bielles arrivent en point mort haut (PMH) la propulsion agit quand les bielles ont dépassé la moitié d'un tour de vilebrequin au moment ou les bielles et les pistons commencent à descendre, donc phase de travail vers point mort bas (PMB), cela fait l'objet de calculs et d'études judicieux en fonction de la cylindré, de la puissance et de la conception de chaque moteur. Par la même on pourra obtenir et réaliser un montage de moteur dit en étoile de type en x, cela dit pour obtenir deux montages de deux culasses en vé montées en opposition soit quatre culasses reconduites à l'identique aussi bien techniquement que dans la conception, donc avec quatre culasses identiques moulées brutes de fonderie ensemble, seul le nombre de pistons variera suivant la conception du vilebrequin central en conjuguant en alternance les mouvements des pistons en point mort haut ou bas (PMH ou PMB) travaillant en alternance, cela dit que l'on aura un ensemble de pistons qui seront au point mort haut (PMH) sur la première culasse quand son vis à vis opposé qui est la culasse numéro trois aura l'ensemble de ses pistons en point mort bas (PMB) et ainsi de suite jusqu'à obtenir un tour de vilebrequin.

**3.** Moteur temporel à variation de vitesse selon la revendication 1 ou 2, **caractérisé en ce que** l'aimant qui engendre des forces axiales directes sur le piston (rep 12 fig. A n°14 et fig. A n° 1 à 4) est percé en son milieu par un trou calibré, déterminé suivant la cylindré et la puissance du moteur, il est en liaison avec la chambre de sucions du piston et un autre trou calibré en position basse de ce piston (rep47 fig. A n°5 et fig. A n° 1 à 4), ils assureront en association avec l'énergie générée par les aimants (rep101, 4, 10, 12, 6, 7, 8 et 9 fig. A n° 1 à 4) une autre énergie par le passage de ces trous calibrés suivant le principe du vide, qu'une pompe à vide charge dans des accus, cette énergie agira en point mort haut ou bas accéléré (PMHA ou PMBA), pour fournir une énergie complémentaire de puissance, telle qu'un turbo compresseur. Ces deux énergies peuvent travailler en jumelage continu dans toutes les phases de fonctionnement du moteur et la pompe à vide, peut tourner aussi indépendamment du moteur et suivant le même principe en moteur hybride, avec tous les types de carburant et tous les types de moteur thermique, basé sur le principe du vide par succion, en aspirant les pistons, vers le PMH et PMB alternativement a une position définie et précise pour ne pas contrarier, le fonctionne du moteur thermique à l'explosion. Pour le moteur hybride, l'énergie extérieure qui est tous les types de carburants, fait tourner une pompe à vide entraînée, par une poulie limiteur de couple, une installation permet d'assurer la distribution, la commande, la détection et la réserve du vide vers les pistons. Après l'action du vide en PMH et PMB sur les pistons, une mise à l'air libre des circuits est assurée, pour annuler le vide et régénérer en air les cavités creuses dans les pistons en aluminium qui vont permettre leurs succions par des orifices et des segments étanches de part et d'autre de la jupe des pistons et des deux cavités creuses étanches en position supérieure et inférieure dans le piston. A chaque tour de vilebrequin sur un quatre cylindres, deux pistons se trouvent en PMH, alors que les deux autres sont en PMB. L'action du vide s'exerce sur les deux pistons en PMH et PMB, simultanément et inversement à chaque tour de vilebrequin, ce qui est un sérieux avantage, pour augmenter le rendement, la puissance, la nervosité et le nombre de tour par minute du moteur. L'effet du vide joue alors le rôle d'un turbo compresseur qui ne consomme pas de carburant. La seule perte étant celle de l'installation et de la pompe à vide qui fait trois chevaux. A la différence du moteur thermique à quatre cylindres, ou la compression et l'explosion de chaque piston se fait suivant l'ordre 1-3-4-2 sur deux tours de vilebrequin, l'effet du vide lui exerce à chaque tour sur tous les pistons, aussi bien en montée qu'en descente. Cela permettra donc de faire des économies d'énergie, sans pollution. Deux orifices sont positionnés avec précision sur la chemise suivant chaque phase de travail des pistons et permettront le cheminement du vide vers les circuits PMH et PMB, par deux tuyauteries soudées sur la chemise à l'emplacement des orifices correspondants. Une pompe à vide restitue son énergie le vide et l'énergie nécessaire pour qu'elle tourne, peut provenir d'une source extérieure pouvant être branchée sur du 230V, alimentée par une batterie et un transfos, des capteurs solaires, cette pompe à vide restitue son énergie de la même manière que le moteur hybride décrit ci-dessus, en chargeant l'énergie généré par la pompe à vide dans un réservoir de vide ou sans en branchement direct.

**4.** Moteur temporel à variation de vitesse selon les revendications 2 ou 3, **caractérisé en ce que** le circuit de refroidissement tel qu'il est élaboré (rep72, 73, 74, 75, 78, 83, 84, 85 fig. A n°25 et 53, 54, 80, D, E et F fig. A n° 1 à 4) utilisant une huile glycol avec un % d'eau ou une huile très fluide, permettra d'assurer la lubrification des segments de guidage et d'étanchéité, ainsi que tous les organes mécaniques en mouvements (rep 17, 18 et 19 fig. A n° 1 à 4). Le refroidissement de tous les éléments mécanique en mouvements du à la vitesse et au frottement, permettent de restituer l'énergie thermique récupéré, de l'emmagasiner et de le transmettre par un échangeur thermique, pour alimenter un chauffage ou une production d'eau chaude dans les habitations ou autres bâtiments industriels, hôpitaux etc. Ce concept de moteur permet des économies importantes d'énergie, il est silencieux et non polluant, à cela vient s'ajouter son rendement, sa puissance, son autonomie et sa nervosité, mais aussi en assurant un refroidissement naturel des pistons par la circulation du vide et de l'air dans les cavités creuses des pistons, par rapport aux phases d'explosion de ces derniers. Ce type de moteur peut fournir aussi de l'énergie électrique en faisant tourner un groupe électrogène, alternateur ou toute autre installation de même type. Ce moteur est basé sur le principe de la thermo dynamique, en utilisant une source d'énergie extérieure qui est le vide par succion, en aspirant les pistons, vers le PMH et PMB , alternativement et des aimants permanents à flux opposés qui ont une durée de vie d'homme, sans être rechargés et qui sont conjugués et complémentaires pour entraîner ce moteur en rotation

**5.** Moteur temporel à variation de vitesse selon la revendication 4, **caractérisé en ce que** ce procédé à de multiple possibilité d'applications diverses, il fournit un travail, une puissance et une force de sortie et peut entraîner n'importe quelle machine ou appareil qui demandent une énergie extérieure pour fonctionner, on peut citer à titre d'exemple, un compresseur pour l'air, une pompe à vide, hydraulique ou à eau, un groupe électrogène, un alternateur et une éolienne pour fournir de l'électricité ou bien des domaines dont la motricité actuelle telle que les trains, les autocars ou bien les tramways adopteraient sans problème l'application du moteur temporel à variation de vitesse qui fait l'objet de ces applications. Il y a un vaste champ d'action comme ici présent concernant l'application d'un appareil présenter dans les fig. A n°44 à 51 et qui peut être monté sur un cycle à deux roues ou autre de ce type. Tous ces modes d'applications de la nouvelle génération résident dans l'amélioration des énergies renouvelables et écologiques de manière à contribuer et à lutter contre le réchauffement de la planète et à la protection de la terre.

**6.** Moteur temporel à variation de vitesse selon la revendication 5, **caractérisé en ce que** cet appareil mis en oeuvre et présenté dans les fig. A n°44 à 51 et monté ou adapté sur un cycle à deux roues ou autre modèle de ce type pour permettre leur motricité, présentant une application de cet appareil ou on utilise seulement les principes techniques de bases des flux magnétiques propulseurs opposés sans aucune autre énergie de soutien, cet appareil est adapté sur le corps du pédalier est transforme sa force et son mouvement transversal en un mouvement rotatif par l'intermédiaire d'une came excentrique sur l'axe du pédalier (rep3 fig. A n°53 et rep20 fig. A n°52). Cette force est commandée par l'utilisateur par l'intermédiaire d'un levier de vitesse agissant sur un câble (rep 18 et 19 fig. A n°66) de manière à faire varier la vitesse du moteur qui viendra se conjuguer à l'effort de l'utilisateur sur le pédalier et plus l'utilisateur fait augmenter la vitesse en agissant sur le levier de vitesse plus les efforts qu'il fournit sur le pédalier diminuent, mais il peut à tout instant renverser le système et diminuer sa vitesse voir l'annuler en agissant de manière inverse sur le levier de vitesse. Cette application est basée sur le même principe technique que le procédé évoqué dans le mode d'application des forces fig. A n°1 à fig. A n°43.

**7.** Cet appareil à variation de vitesse selon la revendication 6, **caractérisé en ce qu'**il sera conçus de deux aimants (rep9 fig. A n°59) à flux magnétiques propulseurs, opposés aux flux magnétiques propulseurs des aimants (rep11 fig. A n°61 et rep12 fig. A n°62) qui seront mobiles en translation et dont les pôles opposés se repoussera, les aimants (rep9 fig. A n°59) seront fixessur l'axe (rep5 fig. A n°55), qui lui sera mobile en translation avec plus ou moins de réactivité et de puissance suivant la variation de la distance de l'écart entre les aimants (rep11 fig. A n° 61 et rep 12 fig. A n°62) provoquée par la manipulation de l'utilisateur du vélo sur le levier de vitesse qui provoque une action par l'intermédiaire du câble acier (rep 18 fig. A n°66) et de la pièce d'attelage (rep 19 fig. A n°66) vouée à faire éloigner ou rapprocher plus ou moins les aimants (rep 11 fig. A n° 61 et 12 fig. A n°62) entre eux. Qui entraîne par la même une augmentation ou une diminution de la poussée de propulsion et opposée sur les aimants (rep9 fig. A n°59) qui provoque par la même réaction un déplacement transversal de l'axe (rep5 fig. A n°55) tendant à diminuer ou augmenter, voir de s'annuler suivant le réglage et la demande de l'utilisateur, l'axe (rep5 fig. A n°55) aura donc des mouvements d'aller et retour plus ou moins rapide qui agiront sur la came excentrée (rep3 fig. A n°53) de l'axe de pédalier (rep2 fig. A n°53) qui permet de transformer un mouvement transversal en mouvement rotatif. Une bague entretoise intercalaire (rep8 fig. A n°58) positionnée sur la portée rep28 de l'axe rep5 entre les deux aimants (rep9 fig. A n°59) de manière à les maintenir dans une position et à un écart voulu et bien défini par rapport aux aimants (rep11 fig. A n°61).

**8.** L'appareil considéré selon la revendication 7, **caractérisé en ce qu'**un câble acier (rep18 fig. A n°66) et l'étrier (rep19 fig. A n°66) sous l'effet de l'utilisateur par manipulation sur le levier de vitesse aura pour rôle de rapprocher ou d'éloigner, l'un par rapport à l'autre les aimants (rep11 fig. A n°61 et rep 12 fig. A n°62) suivant le guidage transversal sur l'alésage extérieur (rep33 fig. A n°56). Ces deux aimants suivant la position donné sur l'alésage extérieur (rep33 fig. A n°56) auront pour effet de faire varier la vitesse sous l'effet des flux magnétiques propulseurs exercés sur les aimants (rep9 fig. A n°59) ayant une position fixe et bien définie sur l'axe (rep5 fig. A n°55) au niveau de la portée cylindrée rep38. L'effet propulseur des aimants s'exercera plus ou moins fort et avec puissance suivant la position de chevauchement transversal de ces aimants l'un par rapport à l'autre et de son vis à vis, plus ils se chevaucheront plus l'effet de poussée sera grand, mais il faut toujours un chevauchement légèrement négatif dirigé de l'aimant voulu de manière à transmettre le mouvement demandé de translation à la pièce voulu en action par rapport aux aimants opposés et fixes, ici sur l'axe (rep5 fig. A n°55).
